# EUROPEAN PATENT APPLICATION

(11) **EP 4 736 973 A1**
(43) Date of publication of application: **06.05.2026**
(21) Application number: 23947599.9
(22) Date of filing: 01.08.2023
(51) Int. Cl.: A63F 13/92, A63F 13/23, A63F 13/235, A63F 13/24

(54) **GAME DEVICE AND GAME SYSTEM**

(71) Applicant: Nintendo Co., Ltd., Kyoto-shi, Kyoto 601-8501 (JP)
(72) Inventor: HIROSE, Shinji, Kyoto-shi, Kyoto 601-8501 (JP); KORIYAMA, Kazuhiko, Kyoto-shi, Kyoto 601-8501 (JP); FUJITA, Tomoki, Kyoto-shi, Kyoto 601-8501 (JP); IKUTA, Hiroki, Kyoto-shi, Kyoto 601-8501 (JP); NABE, Shusuke, Kyoto-shi, Kyoto 601-8501 (JP); ITO, Kuniaki, Kyoto-shi, Kyoto 601-8501 (JP); GOTO, Hiroki, Kyoto-shi, Kyoto 601-8501 (JP)
(74) Representative: Bardehle Pagenberg Partnerschaft mbB Patentanwälte Rechtsanwälte
(86) International application number: PCT/JP2023/028163
(87) International publication number: WO 2025/027802

(57) **Abstract**

A main body apparatus, which is an example of a game apparatus, is removably attachable to a controller. The main body apparatus includes a housing and a magnet. The housing houses an electronic circuit. The magnet is conductive and attracts the controller by magnetic force to attach the controller to the main body apparatus. The magnet is electrically connected to the ground of the electronic circuit. In the state where the controller is attached to the main body apparatus, the controller is attracted to the main body apparatus by the attracting force by the magnet.

## Description

### TECHNICAL FIELD

The present invention relates to a game system that includes a controller and a game apparatus that can be attached to and detached from the controller.

### BACKGROUND ART

There has been an information processing system in which a controller can be attached to and detached from a main body apparatus (see, for example, PTL 1).

### CITATION LIST

### PATENT LITERATURE

PTL 1: Japanese Laid-Open Patent Publication No. 2017-4523

### SUMMARY OF INVENTION

### PROBLEMS TO BE SOLVED BY THE INVENTION

With regard to an information processing system in which a controller can be attached to and detached from a main body apparatus, there is a demand for realizing an information processing system with a configuration that has not been seen before.

Therefore, an object of the present invention is to provide a game apparatus or a game system with a novel configuration.

### MEANS FOR SOLVING THE PROBLEMS

In order to solve this problem, the present invention employs configurations (1) to (25) below.
(1) An example of the present invention is a game apparatus that is removably attachable to a controller. The game apparatus includes a housing and a first magnet. The housing houses an electronic circuit. The first magnet is conductive and attracts the controller by magnetic force to attach the controller to the game apparatus. The first magnet is electrically connected to ground of the electronic circuit.
(2) A first through hole running through the housing may be formed. At least a part of the first magnet may be arranged in the first through hole.
(3) A portion of the first magnet other than the part that is arranged in the first through hole may be housed in the housing.
(4) An opening of the first through hole outside the housing may be covered by an insulative member.
(5) The game apparatus may further include a yoke. The yoke is conductive and forms a magnetic circuit with the first magnet. The yoke is electrically connected to the ground of the electronic circuit.
(6) The game apparatus may further include a yoke. The yoke is conductive and forms a magnetic circuit with the first magnet. At least a part of the first magnet and at least a part of the yoke are arranged in the first through hole.
(7) The yoke may protrude more than the first magnet in an outward direction, where a direction from an opening of the first through hole on an inner side of the housing toward an opening of the first through hole on an outer side of the housing is defined as the outward direction .
(8) The yoke may include a first portion and a second portion. At least a part of the first portion is located in the first through hole. The second portion is located in the housing and is longer than the opening of the first through hole on an inner side of the housing in a state where the yoke is arranged in place.
(9) An area of the housing that opposes the first portion of the yoke and an area of the housing that opposes the second portion of the yoke may be made of an insulative member.
(10) The game apparatus may further include a pressing member. The pressing member presses at least one of the first magnet and the yoke in the outward direction.
(11) The game apparatus may further include a first conductive member that is conductive. The first conductive member electrically connects the first magnet and the yoke.
(12) The first conductive member may be sandwiched between the pressing member and a magnet unit, the magnet unit including the first magnet and the yoke, in a direction parallel to the outward direction.
(13) The game apparatus may comprise, as the yoke, a first yoke and a second yoke. The first yoke is in contact with one side of the first magnet. The second yoke is in contact with the other side of the first magnet. The game apparatus may further comprise a second conductive member that is conductive. The second conductive member is arranged between the second yoke and a metal portion of the housing or a metal member in the housing connected to the ground of the electronic circuit, thereby electrically connecting the second yoke and the metal portion or the metal member.
(14) A recessed portion may be formed on an outside surface of the housing. The first through hole may be formed at a bottom of the recessed portion.
(15) A second through hole running through the housing may be formed at the bottom of the recessed portion. The game apparatus may further comprise a second magnet and a game apparatus-side terminal. The second magnet is conductive and at least a part of the second magnet is arranged in the second through hole, wherein the second magnet is capable of attracting the controller attached to the game apparatus by magnetic force. The game apparatus-side terminal is arranged between the first magnet and the second magnet as the recessed portion is seen from an open side of the recessed portion, wherein the game apparatus-side terminal is connectable to a controller-side terminal of the controller.
(16) A predetermined surface of the housing may include a metal portion connected to the ground of the electronic circuit. An opening of the first through hole may be formed on the predetermined surface.
(17) An inner surface of the first through hole may be made of an insulative member different from the metal portion.
(18) The predetermined surface may be a side surface that connects a front surface and a rear surface of the housing. The electronic circuit may be arranged in the housing at a position sandwiched by a metal member with respect to a direction from the front surface toward the rear surface of the housing. The metal member may be at least one of a metal frame portion of the housing that is electrically connected to the ground of the electronic circuit and a metal frame housed in the housing that is electrically connected to the ground of the electronic circuit.
(19) The metal frame portion of the housing may be made of non-magnetic metal.
(20) The controller may comprise a magnetic sensor. The game apparatus may include a front surface, a rear surface on opposite side from the front surface, an upper surface, a lower surface, and two side surfaces. The first magnet may be provided in an upper side portion of one of the two side surfaces. The game apparatus may further comprise a second magnet. The second magnet is conductive and is arranged in a lower side portion of said one of the side surfaces, wherein the second magnet is capable of attracting the controller attached to the game apparatus by magnetic force. The first magnet may be provided in such an orientation that a first polarity faces the front surface side and a second polarity faces the rear surface side. The second magnet may be provided in such an orientation that the second polarity faces the front surface side and the first polarity faces the rear surface side.
(21) The game apparatus may include, as conductive magnets, a plurality of magnets including the first magnet. The plurality of magnets are capable of attracting the controller attached to the game apparatus by magnetic force. The game apparatus may further include an antenna. One of the plurality of magnets that is arranged at a position closest to the antenna may be not electrically connected to the ground of the electronic circuit, and at least one of the other magnets different from said magnet may be electrically connected to the ground of the electronic circuit.
(22) The game apparatus may include, as conductive magnets, a plurality of magnets including the first magnet. The plurality of magnets are capable of attracting the controller attached to the game apparatus by magnetic force. The game apparatus may include a plurality of antennas. Among combinations between one of the plurality of magnets and one of the plurality of antennas, one magnet included in a combination where a distance between the magnet and the antenna is shortest may be not electrically connected to the ground of the electronic circuit, and at least one of the other magnets different from said magnet may be electrically connected to the ground of the electronic circuit.
(23) The first magnet may be arranged exposed from an opposing surface of the housing that opposes the controller in a state where the controller is attached to the game apparatus or the first magnet may be arranged buried in said opposing surface.
(24) The opposing surface may include a base surface and a protruding surface that protrudes relative to the base surface. The first magnet may be arranged exposed from the base surface or buried in the base surface.
(25) The game apparatus may further comprise a second magnet that is conductive. The second magnet is capable of attracting the controller attached to the game apparatus by magnetic force. The second magnet may be arranged exposed from the opposing surface or buried in the opposing surface. The game apparatus may further comprise a game apparatus-side terminal. The game apparatus-side terminal is arranged at a position between the first magnet and the second magnet on the opposing surface, wherein the game apparatus-side terminal is connectable to a controller-side terminal of the controller.

Another example of the present invention may be a game system including the game apparatus and the controller as described in (1) to (25) above, or may be the controller as described in (1) to (25) above.

### EFFECTS OF THE INVENTION

With the game apparatus and the game system described above, it is possible to provide a game apparatus or a game system with a novel configuration.

### BRIEF DESCRIPTION OF THE DRAWINGS

[FIG. 1] An external view showing an example of the game system.
[FIG. 2] A view showing an example of the state where the controllers are detached from the main body apparatus.
[FIG. 3] A view showing an example of how one user holds a game system with the controllers attached to the main body apparatus.
[FIG. 4] A view showing an example of how two users each hold one of the controllers detached from the main body apparatus.
[FIG. 5] A view showing an example of how one user holds the controllers detached from the main body apparatus.
[FIG. 6] A six-sided view showing an example of the configuration of the main body apparatus.
[FIG. 7] An exploded perspective view showing an example of the configuration inside the housing.
[FIG. 8] A view showing an example of the configuration inside the housing.
[FIG. 9] An exploded perspective view showing an example of the right side portion of the housing.
[FIG. 10] A perspective view showing an example of the right side portion of the housing.
[FIG. 11] A view showing an example of the configuration of the upper right magnetic member.
[FIG. 12] A view showing an example of the configuration of the upper right magnetic member as seen from the up-down direction.
[FIG. 13] A view showing an example of the inside of the housing where the upper right magnetic member is arranged.
[FIG. 14] A cross-sectional view showing an example of the main body apparatus at the position where the upper right magnetic member is arranged.
[FIG. 15] A block diagram showing an example of the electrical configuration of the main body apparatus.
[FIG. 16] A six-sided view showing an example of the configuration of the right controller.
[FIG. 17] A perspective view showing an example of the configuration of the right controller.
[FIG. 18] A view showing an example of the configuration of the right side surface of the main body apparatus and the left side surface of the right controller.
[FIG. 19] An exploded perspective view showing an example of the configuration of the bump portion of the right controller.
[FIG. 20] A cross-sectional view showing an example of the configuration of the right controller at the position of the side surface upper button.
[FIG. 21] A cross-sectional view showing an example of the configuration of the first and second elastic deformation members.
[FIG. 22] A cross-sectional view showing an example of the configuration of the right controller at the position of the connector.
[FIG. 23] A view showing an example of the terminal arrangement in a group of terminals.
[FIG. 24] A perspective view showing an example of the rear surface of the right controller.
[FIG. 25] A cross-sectional view showing an example of the configuration of the right controller at the position of the pusher and pusher operating section.
[FIG. 26] A perspective view showing an example of the configuration of the pusher operating section.
[FIG. 27] A perspective view showing an example of the rear surface of the right controller in the state where the pusher operating section is operated.
[FIG. 28] A cross-sectional view showing an example of the configuration of the right controller at the position of the pusher and pusher operating section in the state where the pusher operating section is operated.
[FIG. 29] A six-sided view showing an example of the configuration of the left controller.
[FIG. 30] A block diagram showing an example of the electrical configuration of the game system.
[FIG. 31] A view showing an example of the state during the operation of attaching the right controller to the main body apparatus.
[FIG. 32] A cross-sectional view showing an example of the game system when the right controller is attached to the main body apparatus.
[FIG. 33] A cross-sectional view showing an example of the game system at the position of the upper right magnetic member and the side surface upper button when the right controller is attached to the main body apparatus.
[FIG. 34] A cross-sectional view showing an example of the configuration of the game system at the position of the upper right magnetic member and the side surface upper button when the right controller is attached to the main body apparatus.
[FIG. 35] A cross-sectional view showing an example of the game system 1 at the position of the connector when the right controller is attached to the main body apparatus.
[FIG. 36] A view showing an example of the positional relationship when the main body apparatus and the right controller are attached.
[FIG. 37] A view showing an example of the connection relationship between the group of terminals of the main body apparatus and the group of terminals of the right controller.
[FIG. 38] A view showing an example of the game system with the right controller and the left controller attached to the main body apparatus in the reversed manner.
[FIG. 39] A view showing an example of the connection relationship between the group of terminals of the right connector of the main body apparatus and the group of terminals of the left controller in the second mode of attachment.
[FIG. 40] A view showing an example of the configuration of the game system with the right controller attached to the main body apparatus.
[FIG. 41] A view showing an example of the game system 1 in the state where the pusher operating section is operated and the pusher is protruding from the bump portion.
[FIG. 42] A view showing an example of how the right controller is used as a mouse.
[FIG. 43] A view showing an example of how the right controller is placed on a work surface.
[FIG. 44] A view showing an example of how the left controller is used as a mouse.
[FIG. 45] A view showing an example of the mode where the magnet is provided at the bottom portion of the main body apparatus.
[FIG. 46] A view showing an example of the main body apparatus according to another variation of the embodiment described above.
[FIG. 47] A view showing an example of the right controller according to a variation of the embodiment described above.
[FIG. 48] A view showing an example of the right controller according to another variation of the embodiment described above.
[FIG. 49] A view showing an example of a variation of the upper right magnetic member.

### EMBODIMENTS OF THE INVENTION

### [1. Overview of game system]

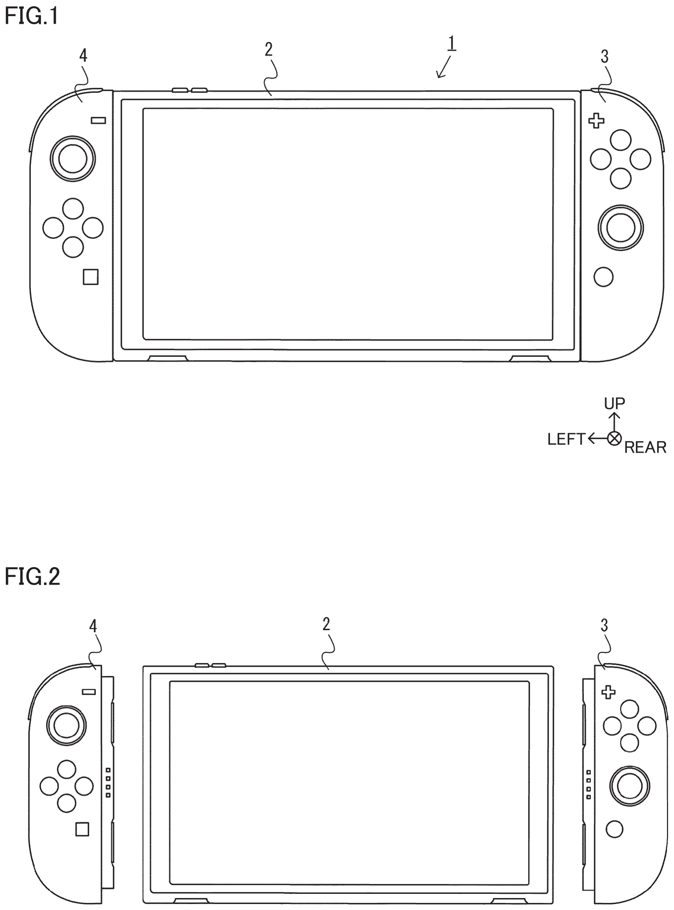

A game system according to an example of the present embodiment will now be described. FIG. 1 is an external view showing an example of a game system. A game system 1 of the present embodiment includes a main body apparatus 2, a right controller 3, and a left controller 4. The main body apparatus 2 is an example of a game apparatus, and is an apparatus that executes various processes (e.g., game processes) in the game system 1. In the present embodiment, the main body apparatus 2 functions as the main body of the game apparatus. The right controller 3 and the left controller 4 are an example of controller devices that allow the user to perform operations (e.g., game operations) on the game system 1. Note that the right controller 3 and the left controller 4 may be referred to collectively as the "controller" below. As will be described in detail below, the right controller 3 and the left controller 4 can communicate with the main body apparatus 2, and can each transmit operation data representing the operation performed thereon by the user to the main body apparatus 2. The main body apparatus 2 executes information processes based on the operation data received from the controllers 3 and 4. That is, the main body apparatus 2 executes information processes using the operation on the controllers 3 and 4 as an input.

FIG. 1 shows the state where the controllers 3 and 4 are attached to the main body apparatus 2. On the other hand, FIG. 2 is a view showing an example of the state where the controllers 3 and 4 are detached from the main body apparatus 2. As shown in FIG. 1 and FIG. 2, in the present embodiment, the controllers 3 and 4 can each be attached to and detached from the main body apparatus 2. With the controllers 3 and 4 attached to the main body apparatus 2, the right controller 3 and the left controller 4 are integrated with the main body apparatus 2 (see FIG. 1). In this state, the game system 1 can be said to be an integrated game apparatus (more specifically, a portable game apparatus). On the other hand, with the controllers 3 and 4 detached from the main body apparatus 2, the right controller 3 and the left controller 4 are separate from the main body apparatus 2 (see FIG. 2).

In the present embodiment, the state where a controller is attached to the main body apparatus is the state where the main body apparatus and the controller are integrated. That is, the state where a controller is attached to the main body apparatus is the state where if the user holds and moves one of them, the other also moves.

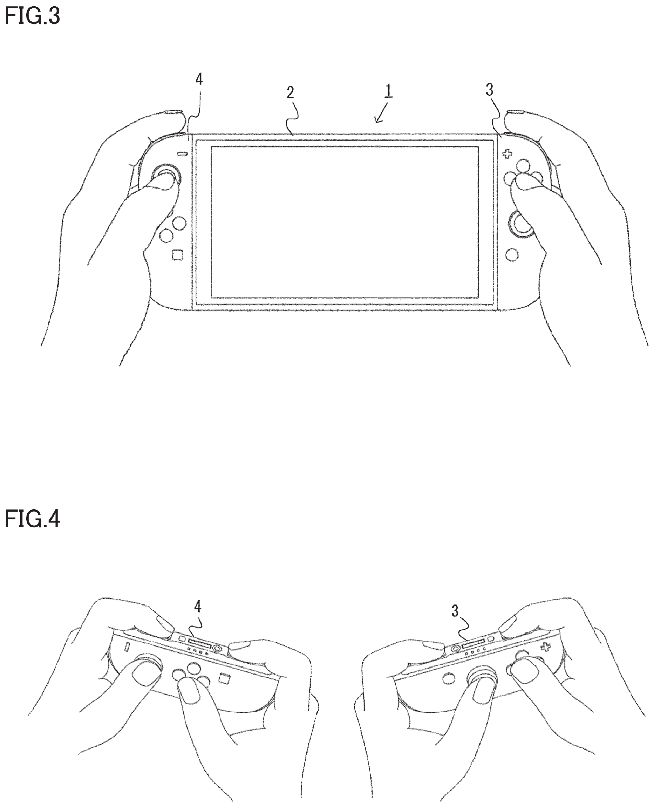

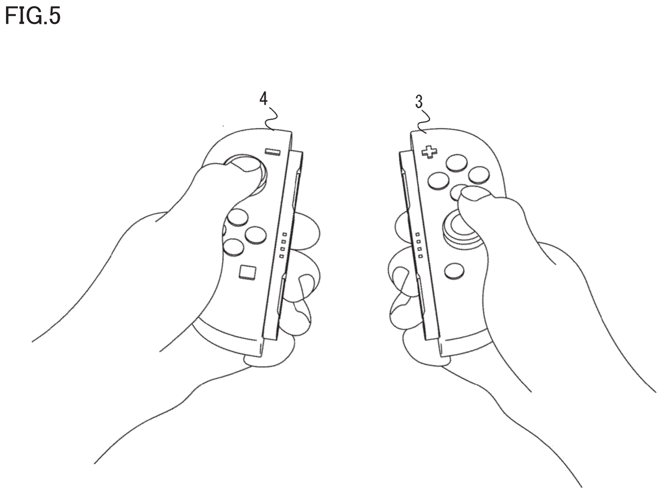

FIG. 3 is a view showing an example of how one user holds the game system 1 with the controllers 3 and 4 attached to the main body apparatus 2. FIG. 4 is a view showing an example of how two users each hold one of the controllers 3 and 4 detached from the main body apparatus 2. FIG. 5 is a view showing an example of how one user holds the controllers 3 and 4 detached from the main body apparatus 2. As shown in FIG. 3 to FIG. 5, the user can attach the controllers 3 and 4 to the main body apparatus 2 and use the game system 1 as an integrated device, or can use the main body apparatus 2 and the controllers 3 and 4 as separate units.

As shown in FIG. 4, in the state where the controllers are detached from the main body apparatus 2, a user can use one controller while holding the controller with both hands. This can also be referred to as the horizontal holding position, since the controller is held in an orientation in which the longitudinal direction of the controller is horizontal as seen from the user.

As shown in FIG. 5, where the controllers are detached from the main body apparatus 2, the user may hold one controller in each hand. Note that although not shown in the figure, where one controller is held in one hand by the user, the controller may be held so that the thumb of the user is placed on the shoulder button of the controller (see below), unlike in FIG. 5. The state where one controller is held in one hand by the user as described above can also be referred to as the vertical holding position, since the controller is held in an orientation in which the longitudinal direction of the controller is vertical as seen from the user. While FIG. 5 shows how one user holds two controllers 3 and 4 with the left and right hands, respectively, the controllers can also be used in the vertical holding position in the case where one user uses one controller.

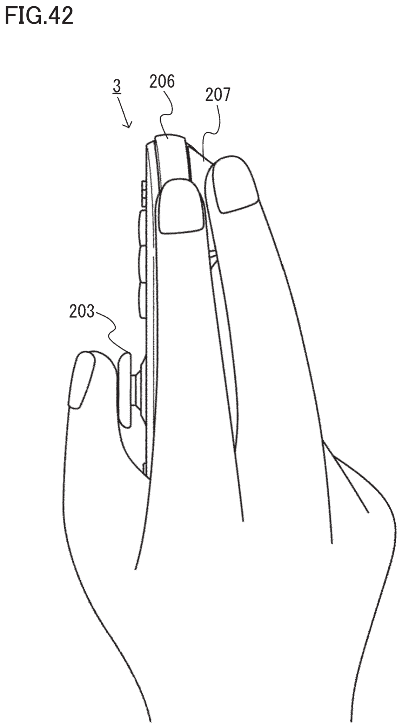

Note that, as will be described in detail below, in the present embodiment, the user may also use each controller as a mouse (see FIG. 42). That is, the controllers may be used while being placed on a work surface such as a desk surface.

From the above, in the present embodiment, the controller can be used in at least four different modes: attached to the main body apparatus 2; detached from the main body apparatus 2 and held by two hands of the user; detached from the main body apparatus 2 and held by one hand of the user; and detached from the main body apparatus 2 and placed on a work surface.

### [2. Configuration of main body apparatus]

### [2-1. Overview of configuration of main body apparatus]

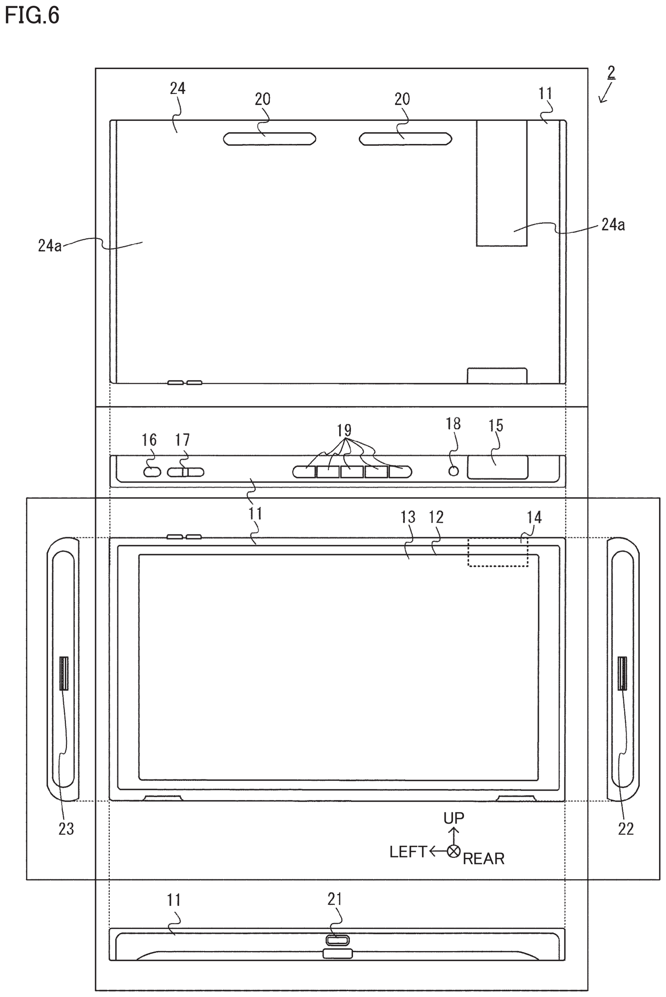

Next, the configuration of the main body apparatus 2 will be described with reference to FIG. 6 to FIG. 15. FIG. 6 is a six-sided view showing an example of the configuration of the main body apparatus 2. As shown in FIG. 6, the main body apparatus 2 includes a housing 11. The external shape of the housing 11 is generally a horizontally-elongated shape. The external shape of the housing 11 can also be said to be a plate-like shape. Note that a plate-like shape is not limited to a shape comprised of flat surfaces, but may also be a shape with curved surfaces or uneven surfaces. Note that there is no limitation on the shape and size of the housing 11. For example, in other embodiments, the housing 11 may have a projecting portion or a grip portion of a protruding shape to make it easier for the user to hold the housing 11.

As shown in FIG. 6, in the present embodiment, a display 12 is arranged on the main surface of the housing 11. The main surface of the housing 11 is generally a rectangular shape. More specifically, the main surface of the housing 11 has a rectangular shape with one pair of opposing sides longer than the other pair of sides.

Note that in the following description of the main body apparatus 2 and the controllers 3 and 4 of the game system 1, the direction perpendicular to the display 12 arranged on the main surface of the housing 11 is defined as the front-rear direction , the longitudinal direction of the main surface as the left-right direction , and the width direction of the main surface as the up-down direction, with the controllers 3 and 4 attached to the main body apparatus 2 (see FIG. 1 and FIG. 6). The side of the main body apparatus 2 on which the display 12 is arranged is defined as the front side of the game system 1, and the opposite side thereto as the rear side of the game system 1(see FIG. 6). The side on which the right controller 3 is attached to the main body apparatus 2 is defined as the right side , and the opposite side thereto (i.e., the side on which the left controller 4 is attached to the main body apparatus 2) as the left side. The housing 11 has a plate-like shape that extends in the up-down direction and the left-right direction and that includes the front surface (i.e., the main surface), the rear surface, the upper surface, the lower surface, the right side surface, and the left side surface, and is a shape whose length in the left-right direction is longer than the length in the up-down direction.

The display 12 is a display device that displays an image acquired or generated by the main body apparatus 2. Note that the image to be displayed may be a still image or a moving image. While the display 12 is assumed to be a liquid crystal display (LCD) in the present embodiment, the display 12 may be any type of display device, such as an organic EL. The display 12 is attached to the housing 11 so that the display surface of the display 12 is exposed through an opening formed in the front surface of the housing 11.

As shown in FIG. 6, the main body apparatus 2 includes a touch panel 13 on the display surface of the display 12. The touch panel 13 detects, as the input position, a position that is input by the user on the display surface of the display 12. Note that in addition to the input position, the touch panel 13 may detect the pressure of the input and/or other information related to the input. The touch panel 13 may be of any type, and may be of a type that allows multi-touch input (e.g., capacitive type) or of a type that allows single-touch input (e.g., resistive type). Note that, in other embodiments, the main body apparatus 2 does not need to include the display 12.

As shown in FIG. 6, the main body apparatus 2 includes a first slot 14. The first slot 14 is arranged, for example, at the upper surface of the housing 11. The opening of the first slot 14 is covered by a slot cover 15. The first slot 14 has a shape such that a storage medium of a predetermined type can be loaded. The storage medium of the predetermined type is, for example, a storage medium (e.g., a dedicated memory card) that is dedicated to the game system 1 and information processing systems of the same type. The storage medium of the predetermined type is used, for example, to store data used by the main body apparatus 2 (e.g., save data of an application, etc.) and/or programs to be executed by the main body apparatus 2 (e.g., programs of an application, etc.).

As shown in FIG. 6, the main body apparatus 2 includes a power button 16. The power button 16 is arranged, for example, at the upper surface of the housing 11. The power button 16 is a button for the user to give instructions to turn ON/OFF the power of the main body apparatus 2.

As shown in FIG. 6, the main body apparatus 2 includes a volume button 17. The volume button 17 is arranged, for example, at the upper surface of the housing 11. The volume button 17 is a button for the user to give instructions to adjust the volume of the sound to be output by the main body apparatus 2.

As shown in FIG. 6, the main body apparatus 2 includes an audio input/output connector (specifically, an earphone jack) 18. The audio input/output connector 18 is arranged, for example, at the upper surface of the housing 11. With the main body apparatus 2, an earphone can be attached to the audio input/output connector 18, for example.

As shown in FIG. 6, vent holes 19 and 20 are formed in the housing 11. In the present embodiment, the vent holes 19 are formed on the upper surface of the housing 11 and the vent holes 20 are formed on the lower portion on the back surface of the housing 11. The vent holes 19 and 20 are formed to discharge (in other words, release) the heat generated inside the housing 11 to the outside of the housing 11.

As shown in FIG. 6, the main body apparatus 2 includes a lower connector 21. The lower connector 21 is arranged at the lower surface of the housing 11. The lower connector 21 may be arranged at the center of the lower surface with respect to the left-right direction. The lower connector 21 is a connector for electrically connecting an external device other than the main body apparatus 2 to the main body apparatus 2. The lower connector 21 is used, for example, to supply power to and communicate with the main body apparatus 2. Specifically, the lower connector 21 may be a USB connector (more specifically, a female connector). Note that, in the present embodiment, the main body apparatus 2 can be electrically connected to the cradle (not shown) via the lower connector 21.

As shown in FIG. 6, the main body apparatus 2 includes a right connector 22. The right connector 22 is arranged at the right side surface of the housing 11. The right connector 22 is a connector for electrically connecting the right controller 3 to the main body apparatus 2. The main body apparatus 2 also includes a left connector 23. The left connector 23 is arranged at the left side surface of the housing 11. The left connector 23 is a connector for electrically connecting the left controller 4 to the main body apparatus 2. Details of the right connector 22 and the left connector 23 will be described below.

As shown in FIG. 6, the main body apparatus 2 includes a stand member 24. The stand member 24 is for placing the main body apparatus 2 in a standing position. The stand member 24 is arranged at the rear surface of the housing 11, for example. Note that the mechanism for placing the main body apparatus 2 in a standing position may be of any configuration. The main body apparatus 2 does not need to have a mechanism for placing the main body apparatus 2 in a standing position.

There is no limitation on the shape, number, and location of components (specifically, display, touch panel, buttons, the slots, connectors, vent holes, and stand members, etc.) in the housing 11. In other embodiments, the main body apparatus 2 does not need to include some of the components described above.

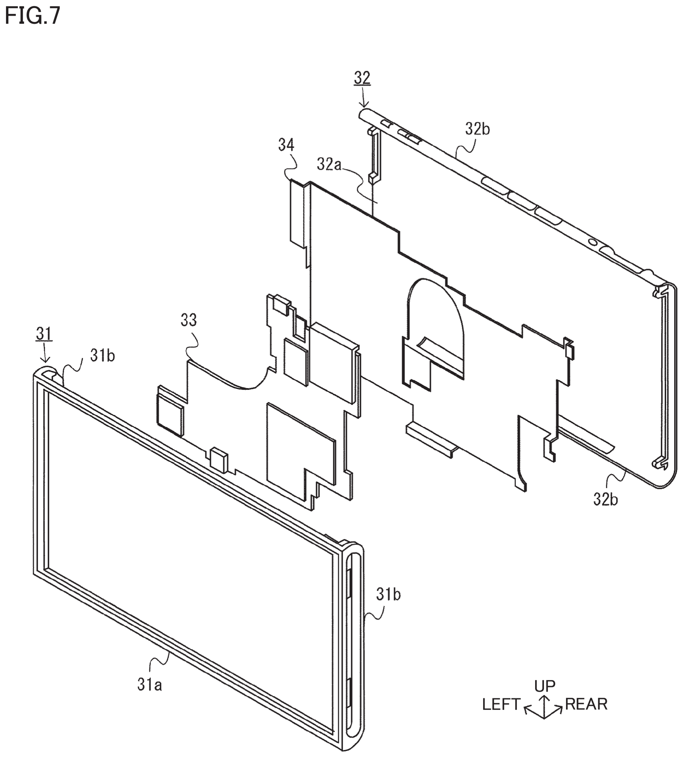

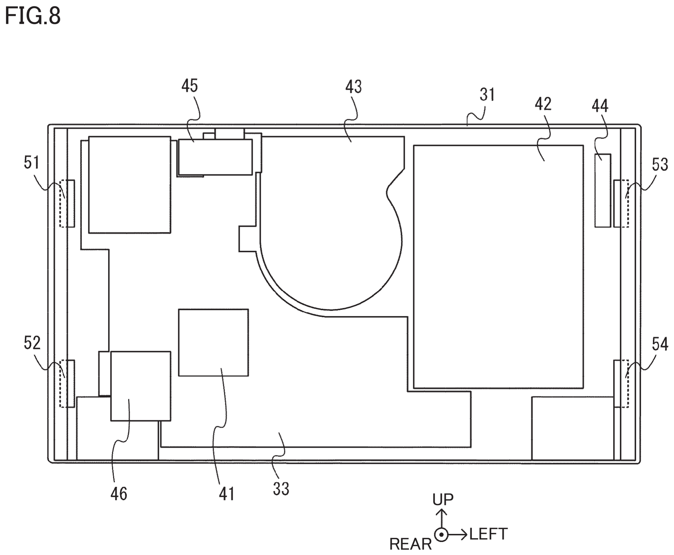

Next, an example of the internal configuration of the main body apparatus 2 will be described with reference to FIG. 7 and FIG. 8. FIG. 7 is an exploded perspective view showing an example of the configuration inside the housing 11. Note that in FIG. 7, only a substrate 33 and a metal frame 34 are shown from among the components in the housing 11.

As shown in FIG. 7, in the present embodiment, the housing 11 has a front housing 31 that forms the front surface of the housing 11 and a rear housing 32 that forms the rear surface of the housing 11. In the present embodiment, the front housing 31 forms the front surface and the left and right side surfaces of the housing 11. Specifically, the front housing 31 has a front portion 31a having a plate-like shape extending in the up-down direction and the left-right direction, and side portions 31b extending in the front-rear direction from the left and right end portions of the front portion 31a. The rear housing 32 forms the rear surface of the housing 11 and the upper and lower side surfaces. Specifically, the rear housing 32 has a rear portion 32a having a plate-like shape extending in the up-down direction and the left-right direction, and side portions 32b extending in the front-rear direction from the upper and lower end portions of the rear portion 32a. The front housing 31 and the rear housing 32 are secured to each other by screwing, for example, to form one integral housing 11. In the present embodiment, the housing 11 is comprised of two parts (i.e., the front housing 31 and the rear housing 32), but in other embodiments, the housing 11 may be comprised of one part or three or more parts.

As shown in FIG. 7, the substrate 33 is housed in the housing 11. The substrate 33 has a plate-like shape and is arranged in an orientation extending in the up-down direction and the left-right direction. The front housing 31 is arranged on the front side relative to the substrate 33, and the rear housing 32 is arranged on the rear side relative to the substrate 33. More specifically, the front portion 31a is arranged on the front side relative to the substrate 33 and the rear portion 32a is arranged on the rear side relative to the substrate 33. An electronic circuit such as an SoC (system-on-a-chip) is arranged on the substrate 33.

Here, in the present embodiment, the main body apparatus 2 has a structure in which a metal member is arranged on the front and rear side of the substrate 33, thereby reducing the influence of electromagnetic waves from outside of the main body apparatus 2 on the electronic circuits on the substrate 33. Specifically, a part of the front housing 31 is made of metal. The metal portion of the front housing 31 (which can also be referred to as the metal frame portion) is electrically connected to the ground of the electronic circuit on the substrate 33. Therefore, the metal portion of the front housing 31 serves as the ground for the electronic circuit on the substrate 33. As will be described in detail below, in the present embodiment, the front portion 31a and a part of a side portion 31b of the front housing 31 are made of metal, and the other part (e.g., a part of the side portion 31b) is made of resin. In the present embodiment, the front housing 31 is manufactured by insert molding, for example, and the metal portion and the resin portion are integrated together. In other embodiments, the front housing 31 does not need to include a metal portion and may be made of resin. The front housing 31 may be made of metal.

On the other hand, the rear housing 32 is made of resin. As shown in FIG. 7, the metal frame 34 is arranged between the substrate 33 and the rear housing 32. The metal frame 34 is electrically connected to the ground of the electronic circuit on the substrate 33. The metal frame 34 has a plate-like shape and is arranged in an orientation extending in the up-down direction and the left-right directions. In the present embodiment, the rear housing 32 and the metal frame 34 are separate members. Portions of the rear housing 32 and the metal frame 34 may be secured to each other, for example, by screwing. In other embodiments, the rear housing 32 may have a configuration in which a metal portion and a resin portion are integrated together, as the front housing 31. The rear housing 32 may be made of metal.

As described above, in the present embodiment, the metal portion of the front housing 31 is arranged on the front side of the substrate 33 and the metal frame 34 is arranged on the rear side of the substrate 33. Thus, in such a configuration where the front and rear sides of the substrate 33 are sandwiched by metal, and the metal portion of the front housing 31 and the metal frame 34 are electrically connected to the ground of the electronic circuit in the main body apparatus 2, it is possible to reduce the influence of electromagnetic waves from outside of the main body apparatus 2 on the electronic parts on the substrate 33. Note that the metal portion of the front housing 31 does not need to span the entire front portion 31a of the front housing 31, and a part of the front portion 31a does not need to be a metal portion. The metal frame 34 does not need to face the entire rear surface of the housing 11, and the metal frame 34 does not need to be arranged in a portion opposing a part of the rear surface. For example, the configuration may be such that the metal portion of the front housing 31 and the metal frame 34 are not arranged in the vicinity of the portion where the antenna to be described below is arranged.

Note that, in the present embodiment, metal (e.g., the metal portion of the front housing 31 and the metal frame 34) is arranged for the front-rear direction and the left-right direction of the substrate 33, but in other embodiments, metal may be arranged also for the up-down direction of the substrate. For example, in other embodiments, the metal frame 34 may be configured to sandwich the substrate 33 in the up-down direction by being arranged to extend to positions on the upper side and the lower side relative to the substrate 33.

In the present embodiment, the rear surface of the main body apparatus 2 (e.g., the rear housing 32) is configured with a material (specifically, resin) that has a lower thermal conductivity than the metal members that sandwich the front and rear sides of the substrate 33 (e.g., the metal portion of the front housing 31 and the metal frame 34). On the other hand, the front housing 31 does not separately include a metal frame by forming a part of the front housing 31 itself of metal, enabling the main body apparatus 2 to be made thinner.

Note that since the metal portion of the front housing 31 is a part of the housing 11, a material having some rigidity may be selected. For example, the material of the metal portion of the front housing 31 may be magnesium or titanium alloy or aluminum. On the other hand, since the metal frame 34 is housed in the housing 11, the metal frame 34 does not need to be made of a rigid material, but may be made of a material with high heat dissipation properties (i.e., high thermal conductivity) to dissipate heat generated inside the main body apparatus 2. For example, the material of the metal frame 34 may be aluminum.

FIG. 8 is a view showing an example of the configuration inside the housing 11. Note that FIG. 8 is a view showing the main body apparatus 2 with the rear housing 32 and the metal frame 34 detached, as seen from the rear side. Note that FIG. 8 shows only some of the components arranged inside the housing 11, such as the substrate 33, antennas 44 to 46, and magnetic members 51 to 54, which are relevant to the following explanation.

As shown in FIG. 8, an SoC (System-on-a-chip) 41 including a CPU is attached to the substrate 33. Note that electronic parts such as the connectors 21 to 23 may be attached to the substrate 33. Parts such as a battery 42 and a cooling fan 43 are arranged in the housing 11.

As shown in FIG. 8, antennas are arranged in the housing 11. In the present embodiment, the main body apparatus 2 includes three antennas: the first antenna 44, the second antenna 45, and the third antenna 46. The antennas 44 to 46 may be attached to the housing 11 by any method.

The first antenna 44 is arranged in the upper left side area in the housing 11 as the main body apparatus 2 is seen from the front side. The second antenna 45 is arranged in the upper side area of the housing 11 as the main body apparatus 2 is seen from the front side. The third antenna 46 is arranged in the lower right side area of the housing 11 as the main body apparatus 2 is seen from the front side. The antennas 44 to 46 each have a different function (e.g., different frequency bands for transmission and reception) and are used for wireless communication between the main body apparatus 2 and other devices (e.g., the controllers 3 and 4, the wireless LAN router device, etc.).

As shown in FIG. 8, the main body apparatus 2 includes the magnetic members 51 to 54. The magnetic members 51 to 54 are each a member that includes a magnet and generates a magnetic field. In the present embodiment, the magnetic members 51 to 54 are used to attach the controllers to the main body apparatus 2. That is, in the present embodiment, the controllers are attached to the main body apparatus 2 by attracting the controllers to the main body apparatus 2 using the magnetic force (specifically, attraction) by the magnetic members 51 to 54 as the attracting force.

In the present embodiment, the controllers are attached to the side surfaces of the housing 11 (see FIG. 1). Therefore, the magnetic members 51 to 54 are arranged near the side surfaces of the housing 11 in order to effectively generate a magnetic field at the side surfaces of the housing 11. Specifically, in the present embodiment, two magnetic members 51 and 52 are arranged side by side in the up-down direction at the right side surface of the housing 11, and two magnetic members 53 and 54 are arranged side by side in the up-down direction at the left side surface of the housing 11. More specifically, at the right side surface of the housing 11, the upper right magnetic member 51 is arranged at a position on the upper side relative to the center of the right side surface with respect to the up-down direction, and the lower right magnetic member 52 is arranged at a position on the lower side relative to the center. At the left side surface of the housing 11, the upper left magnetic member 53 is arranged at a position on the upper side relative to the center of the left side surface with respect to the up-down direction, and the lower left magnetic member 54 is arranged at a position on the lower side relative to the center. Note that, in other embodiments, there is no limitation on the position and the number of magnetic members included in the main body apparatus 2. For example, at a side surface of the housing 11, a plurality of magnetic members may be arranged at a position on the upper side relative to the center of the side surface with respect to the up-down direction, and a plurality of magnetic members may be arranged at a position on the lower side relative to the center of the side surface. For example, one magnetic member may be arranged at one of a position on the upper side or a position on the lower side relative to the center with respect to the up-down direction, and a plurality of magnetic members may be arranged at the other position. For example, at a side surface of the housing 11, one or more magnetic members may be arranged at a position on the upper side relative to the center of the side surface with respect to the up-down direction, one or more magnetic members may be arranged at a position on the lower side relative to the center, and a magnetic member may be arranged at the center with respect to the up-down direction.

### [2-2. Configuration regarding attaching controllers]

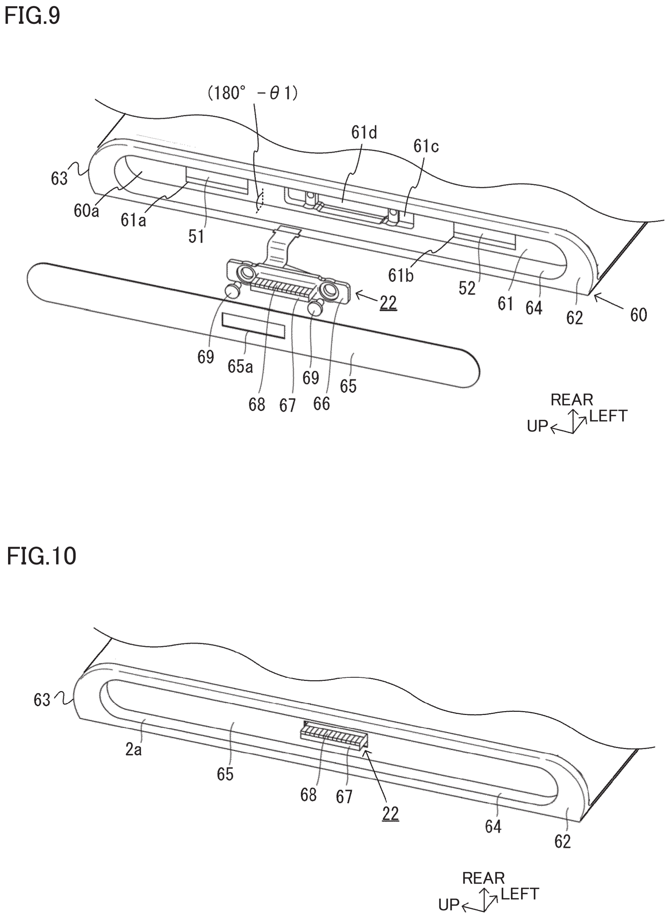

Referring to FIG. 9 to FIG. 15, the configuration of the main body apparatus 2 for attaching the controllers to the main body apparatus 2 will be described. FIG. 9 is an exploded perspective view showing an example of the right side portion of the housing 11. FIG. 10 is a perspective view showing an example of the right side portion of the housing 11.

As shown in FIG. 9, a right side surface 60 of the housing 11 has a base surface 61 and a protruding surface 62 that protrudes from the base surface 61 in the right direction (e.g., away from the display). Thus, the right side surface 60 of the housing 11 includes two levels of surfaces with different positions with respect to the left-right direction. From another perspective, a groove is formed in the right side surface 60 of the housing 11, wherein the groove is a groove relative to the protruding surface 62, which is the top surface, and includes the base surface 61, which is the bottom surface of the groove. The base surface 61 can be said to be an example of an opposing surface of the housing 11 that opposes the right controller 3 when the right controller 3 is attached to the main body apparatus 2. Note that, as will be described in detail below, in the present embodiment, a cover 65 is attached to the base surface 61, and the base surface 61 is covered by the cover 65 (see FIG. 9 and FIG. 10).

In the present embodiment, the base surface 61 and the protruding surface 62 are planes that are perpendicular to the left-right direction. Note however that, in other embodiments, the base surface 61 and the protruding surface 62 do not need to be flat surfaces perpendicular with respect to the left-right direction. The base surface 61 and the protruding surface 62 do not need to be flat surfaces. For example, the base surface 61 may be a curved surface with the center portion recessed relative to the periphery portion. For example, the protruding surface 62 may be a sloped surface such that its height (i.e., its length in the left-right direction from the base surface 61) increases toward the periphery of the right side surface 60 of the housing 11.

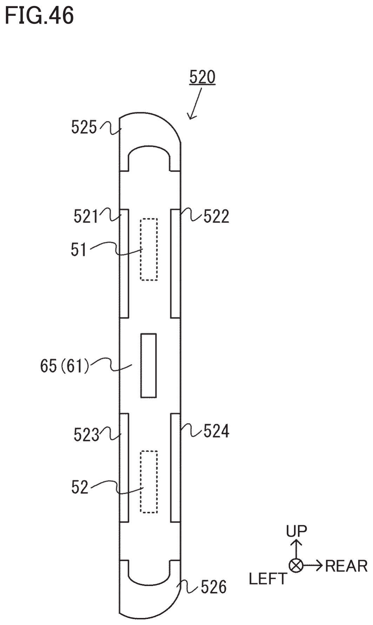

The housing 11 has a wall portion 63 surrounding the base surface 61. The wall portion 63 extends in a direction to protrude from the base surface 61 (specifically, the right direction). The right end surface of the wall portion 63 is the protruding surface 62. In the present embodiment, the wall portion 63 is loop-shaped and surrounds the base surface 61. The wall portion 63 can also be said to be arranged in four directions: upward, downward, forward and rearward of the base surface 61. An inner surface 64 that connects the base surface 61 and the protruding surface 62 surrounds the base surface 61. From another perspective, as seen from a direction perpendicular to the base surface 61 (specifically, the right side), the protruding surface 62 surrounds the base surface 61. Note that, in other embodiments, the wall portion 63 does not need to be loop-shaped and does not need to surround the base surface 61 (see FIG. 46).

As described above, in the present embodiment, in the right side surface 60 of the housing 11, the base surface 61 and the inner surface 64 together form a groove portion 60a, which is recessed relative to the protruding surface 62 (see FIG. 9). That is, the right side surface 60 of the housing 11 is shaped to have the groove portion 60a. As will be described in detail below, in the present embodiment, the cover 65 is attached to the bottom surface of the groove portion 60a. Therefore, the cover 65 and the inner surface 64 together form, in the main body apparatus 2, a groove 2a that is recessed relative to the protruding surface 62 (see FIG. 10). As will be described in detail below, in the present embodiment, the right controller 3 is attached to the main body apparatus 2 with the bump portion of the right controller 3 matched with the groove 2a of the right side surface 60 of the main body apparatus 2. As the bump portion is matched with the groove 2a, the right controller 3 attached to the main body apparatus 2 is positioned relative to the main body apparatus 2 in the up-down direction and the front-rear direction.

In the present embodiment, the groove 2a is formed so as to extend along the up-down direction (see FIG. 10). The right side surface 60 of the housing 11 has a shape elongated in the up-down direction (more specifically, its length in the up-down direction is longer than its length in the front-rear direction), and the groove 2a has a shape elongated in the up-down direction to match the shape of the right side surface 60. According to this, it is possible to increase the proportion of the groove 2a portion to the entire right side surface 60 of the housing 11. Thus, it is possible to make it easier for the user to insert the bump portion of the right controller 3 into the groove 2a when attaching the right controller 3 to the main body apparatus 2. Note that, in the present specification, "a component extending along a certain direction" is not limited to a state where the component extends strictly parallel to this direction, but also means a state where the component extends in substantially the same direction as this direction.

Note that, in the present embodiment, the width (i.e., the length in the front-rear direction) of the groove 2a is greater than half the width of the right side surface 60 of the housing 11. Note that the width (i.e., the length in the front-rear direction) of the groove 2a is greater than the width of the protruding surface 62. The length of the groove 2a (i.e., the length in the up-down direction) is greater than half the length of the right side surface 60 of the housing 11. Also with this configuration, it is possible to increase the proportion of the groove 2a portion to the entire right side surface 60 of the housing 11.

Note that there is no limitation on the shape and position of the groove 2a. For example, in the present embodiment, the end portions of the groove 2a in the longitudinal direction have a rounded shape as the right side surface 60 of the housing 11 is seen from the right side, but in other embodiments, the end portions may have an unrounded shape. For example, the shape of the groove 2a as the right side surface 60 of the housing 11 is seen from the right side may be a shape having corners (e.g., a rectangle). In the present embodiment, the width of the groove 2a is constant except for the rounded portions at the end portions of the groove 2a, but in other embodiments, the width of the groove 2a does not need to be constant; for example, the groove 2a may have a shape such that the width gradually decreases or increases in the direction away from the center in the up-down direction.

In the present embodiment, the inner surface 64 of the wall portion 63 is not perpendicular to the base surface 61, but is slightly inclined. Specifically, the inner surface 64 gradually becomes wider in the direction away from (i.e., to the right of) the base surface 61. From another perspective, the inner surface 64 is formed so that the inner surface 64 is visible as the groove 2a is seen from the opening side (i.e., the right side). Specifically, the inclination angle θ1 (see FIG. 9) of the inner surface 64 relative to the base surface 61 is an angle smaller than 90° (more specifically, 80°<θ1<90°). This inclination of the inner surface 64 makes it easier for the user to perform the operation of inserting the bump portion of the right controller 3 into the groove 2a.

As shown in FIG. 9, the upper right magnetic member 51 and the lower right magnetic member 52 are attached to the base surface 61 of the housing 11. In the present embodiment, the base surface 61 has through holes 61a and 61b that pass through the housing 11 from the outside to the inside (see FIG. 9). The magnetic members 51 and 52 are arranged so as to be located partially in the through holes 61a and 61b, respectively. As shown in FIG. 9, with the cover 65 not attached, the magnetic members 51 and 52 are exposed through the through holes 61a and 61b, respectively. Note that the magnetic members 51 and 52 may be arranged so as to be located entirely in the through holes 61a and 61b, respectively.

As described above, in the present embodiment, the upper right magnetic member 51 and the lower right magnetic member 52 are arranged at the bottom portion of the groove 2a formed in the main body apparatus 2. This reduces the possibility of an object different from the main body apparatus 2 contacting the cover 65, and reduces the possibility of an impact being applied to the upper right magnetic member 51 and the lower right magnetic member 52 by this object contacting the cover 65.

As shown in FIG. 9 and FIG. 10, in the present embodiment, the main body apparatus 2 includes the cover 65. The cover 65 has a plate-like shape. Note that since the cover 65 is formed to be thin, the cover 65 can be said to have a sheet-like shape. The cover 65 is attached on the base surface 61. There is no limitation on the method of attaching the cover 65 to the base surface 61, and the cover 65 may be attached to the base surface 61 by, for example, an adhesive, a double-sided tape, or the like. In the present embodiment, as the cover 65 is attached to the housing 11 so as to cover the base surface 61 and the magnetic members 51 and 52, the magnetic members 51 and 52 are not exposed to the outside. In the present embodiment, the cover 65 has substantially the same shape as the base surface 61. Therefore, the cover 65 covers the entire base surface 61 (except for the portion where the right connector 22 partially protrudes from the base surface 61, which will be described below). Since the cover 65 covers the through holes 61a and 61b (more specifically, the openings of the through holes outside the housing 11) where the magnetic members 51 and 52 are arranged, it is possible to suppress foreign matters such as dust from entering the housing 11 through the through holes 61a and 61b. Since the magnetic members 51 and 52 are covered by the cover 65, it is possible to protect the magnets of the magnetic members 51 and 52 from an impact. As will be described in detail below, the cover 65 can prevent the magnetic members 51 and 52 from being electrically connected to the right controller 3 when the right controller 3 is attached to the main body apparatus 2. Note that there is no limitation on the shape of the cover 65, which does not need to be the same shape as the base surface 61. For example, the cover 65 may have a shape that covers only a part of the base surface 61 while covering the magnetic members 51 and 52. For example, the cover 65 may have a shape such that a part of the magnetic members 51 and 52 is exposed to the outside. In other embodiments, the main body apparatus 2 does not need to include the cover 65.

From the above, it can be said that in the present embodiment, the cover 65 is the bottom surface of the groove 2a formed on the right side surface 60 of the main body apparatus 2. Note that if the main body apparatus 2 does not include the cover 65, the groove portion 60a in the right side surface 60 of the housing 11 is the groove 2a of the main body apparatus 2, so the base surface 61 of the housing 11 is the bottom surface of the groove 2a.

In the present embodiment, the thickness of the cover 65 is, for example, thinner than the thickness of the portion of the housing 11 that forms the base surface 61 (i.e., the thickness of the wall of the base surface 61). According to this, the distance between the right controller 3 attached to the main body apparatus 2 and the magnetic members 51 and 52 can be prevented from becoming larger, and sufficient attracting force can be generated between the right controller 3 and the magnetic members 51 and 52 to maintain the right controller 3 in the attached state. Note that there is no limitation on the thickness of the cover 65, which may be equal to or greater than the thickness of the portion that forms the base surface 61 of the housing 11.

In the present embodiment, the material of the cover 65 is resin. There is no limitation on the material of the cover 65 and, for example, an insulative material is selected. Specifically, a material whose specific permeability is close to 1 (more specifically, the specific permeability is substantially 1) is selected. The reason for this will be described later.

As shown in FIG. 9 and FIG. 10, the right connector 22 is attached at the base surface 61 of the housing 11. Details of the right connector 22 will be described below.

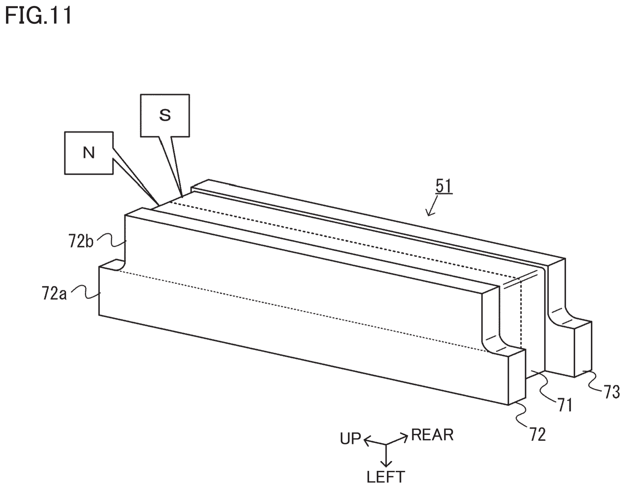

FIG. 11 is a view showing an example of the configuration of the upper right magnetic member 51. Note that, in the present embodiment, since the four magnetic members 51 to 54 have the same configuration as any of the four magnetic members, the detailed configuration of the magnetic members will be described below with the upper right magnetic member 51 as an example, and the detailed description of the other magnetic members 52 to 54 will be omitted.

As shown in FIG. 11, the upper right magnetic member 51 has a magnet 71. In the present embodiment, the magnet 71 is a conductive permanent magnet, e.g., a neodymium magnet.

In the present embodiment, the magnet 71 has a rectangular body shape elongated in the up-down direction. That is, the length of the magnet 71 in the up-down direction is greater than that in the left-right direction and the front-rear direction. Note that some of the sides of the magnet 71 may be chamfered.

The magnet 71 is arranged in such an orientation that one polarity (in FIG. 11, the N polarity) of the N polarity and the S polarity is on the front side and the other is on the rear side.

The upper right magnetic member 51 includes a pair of yokes 72 and 73. The yokes 72 and 73 are ferromagnetic materials, such as iron, cobalt, nickel and alloys thereof, ferrite, etc. The yokes 72 and 73 each have a plate-like shape extending in the up-down direction and the left-right direction. Like the magnet 71, the length of the yokes 72 and 73 in the up-down direction is greater than that in the left-right direction. The yokes 72 and 73 are attached to the magnet 71 so as to sandwich the magnet 71. Specifically, the yokes 72 and 73 are attached at such positions as to sandwich the magnet 71 in the front-rear direction. That is, the first yoke 72 is attached to the side of one polarity of the magnet 71 (the side of the N polarity, or the front side, in FIG. 11), and the second yoke 73 is attached to the side of the other polarity of the magnet 71. In the present embodiment, the first yoke 72 and the second yoke 73 are of the same shape and size and are attached to the magnet 71 so that they overlap each other as seen from the front-rear direction.

Note that, in the present embodiment, the magnet 71 and the yokes 72 and 73 are bonded by a non-conductive adhesive. The use of a non-conductive adhesive makes it easier to select an adhesive with high adhesive strength, thus making it easier to achieve a strong bond. Note that, in the present embodiment where the upper right magnetic member 51 is connected to the ground of the electronic circuit in the main body apparatus 2, if the magnet 71 and the yokes 72 and 73 are bonded by a conductive adhesive, the resistance or impedance becomes large, and a desired ground potential may not be achieved and the ground potential may become unstable to external noise. Therefore, in the present embodiment, the magnet 71 and the yokes 72 and 73 are bonded by a non-conductive adhesive, and electrically connected by a conductive member 81 described below to thereby reduce the possibility described above. The yokes 72 and 73 may be attached to the magnet 71 by any method. For example, in other embodiments, they may be bonded by a conductive adhesive.

As shown in FIG. 11, the yokes 72 and 73 are shaped and sized so as to cover the magnet 71 as seen from the front-rear direction. From another perspective, as the upper right magnetic member 51 is seen from the front-rear direction, the magnet 71 is blocked by the yoke 72 or 73 and not visible. By arranging each yoke 72 as described above, the magnetic flux passing through the front and rear surfaces of the magnet 71 passes through the yokes 72 and 73, and it is possible to increase the magnetic flux density in the yokes 72 and 73 and increase the attracting force by the upper right magnetic member 51.

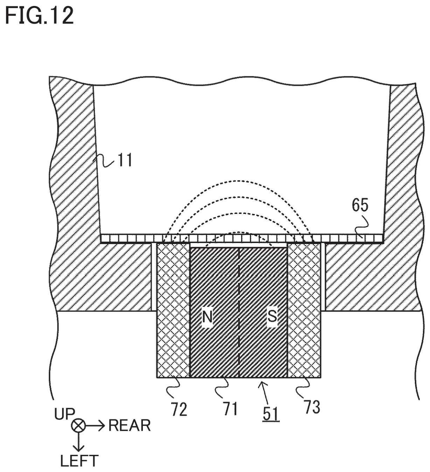

FIG. 12 is a view schematically showing the upper right magnetic member 51, the cover 65 arranged so as to cover the upper right magnetic member 51, and the housing 11. FIG. 12 is a cross-sectional view taken along a cross section perpendicular to the up-down direction at the position of the upper right magnetic member 51. In the present embodiment, the upper right magnetic member 51 forms a magnetic flux extending from the end portion of one of the yokes 72 and 73 to the end portion of the other yoke, and it is possible to generate a magnetic field in the area on the outer side of the cover 65 (e.g., on the right side with respect to the orientation of the game system 1). Note that in FIG. 12, the magnetic flux is indicated by dotted lines. As will be described in detail below, in the present embodiment, the right controller 3 as attached to the main body apparatus 2 is located in the area on the outer side of the cover 65 and is attracted to the main body apparatus 2 by the attraction caused by the magnetic field in this area.

Note that, in the present embodiment, as shown in FIG. 12, since the yokes 72 and 73 sandwich the magnet 71 as described above, the magnetic flux density at the end portions of the yokes 72 and 73 is increased, and it is therefore possible to generate a strong magnetic field in the above area on the outer side of the cover 65. This can increase the attracting force generated in the right controller 3 as attached to the main body apparatus 2.

As shown in FIG. 11 and FIG. 12, in the present embodiment, the yokes 72 and 73 protrude relative to the magnet 71 with respect to the outward direction of the housing 11. In other words, of the end portions of the yokes 72 and 73 with respect to the left-right direction, the end portion thereof on the side closer to the outer side of the housing 11 (e.g., on the side closer to the cover 65) is arranged so as to protrude relative to the magnet 71. This allows the end portions of the yokes 72 and 73, where the magnetic flux density is high, to be arranged at a position closer to the cover 65, thereby generating a strong magnetic field on the cover 65. For example, in the present embodiment, the upper right magnetic member 51 is arranged so that these end portions are in contact with the cover 65.

Note that there is no limitation on the positional relationship of the yokes 72 and 73 relative to the magnet 71, which is not limited to the above. For example, in other embodiments, the outer end portion of the magnet 71 and the outer end portions of the yokes 72 and 73 may be located at the same position.

Note that, in the present embodiment, the yokes 72 and 73 are in contact with cover 65, but in other embodiments, the yokes 72 and 73 do not need to be in contact with cover 65. In the present embodiment, the yokes 72 and 73 are in contact with the cover 65 and the magnet 71 is not in contact with the cover 65, but in other embodiments, the yokes 72 and 73 and the magnet 71 may both be in contact with the cover 65.

As shown in FIG. 12, by setting the orientation of the magnetic poles in the magnet to the orientation parallel to the cover 65 (specifically, in the front-rear direction) and arranging the yokes so as to sandwich the magnet with respect to that orientation, the end portions of the yokes, where the magnetic flux density is high, can be arranged closer to the cover 65. Thus, it is possible to generate a strong magnetic field on the cover 65.

Note that, in other embodiments, there is no limitation on the orientation in which the magnetic members are arranged, which may be another orientation different from the orientation shown in FIG. 12. There is no limitation on the orientation of the polarity of the magnetic members, which may be another orientation different from the orientation shown in FIG. 12.

Next, the configuration for attaching the upper right magnetic member 51 to the housing 11 will be described. As shown in FIG. 11, the first yoke 72 has an inner portion 72a and an outer portion 72b. The inner portion 72a is a portion of the first yoke 72 that is located on the inner side of the housing 11 (e.g., on the left side with respect to the orientation of the game system 1) when the first yoke 72 is attached to the housing 11. The outer portion 72b is a portion of the first yoke 72 that is located on the outer side of the housing 11 when the first yoke 72 is attached to the housing 11.

As shown in FIG. 11, with respect to the up-down direction, the length of the inner portion 72a of the first yoke 72 is longer than the length of the outer portion 72b. From another perspective, the first yoke 72 has a shape such that the upper and lower end portions of the inner portion 72a are more protruding in the up-down direction than the upper and lower end portions of the outer portion 72b, respectively. Specifically, with respect to the up-down direction, the length of the inner portion 72a of the first yoke 72 is longer than the length of the through hole 61a formed in the base surface 61 of the right side surface 60 of the housing 11, and the length of the outer portion 72b of the first yoke 72 is shorter than the length of the through hole 61a. Therefore, when the upper right magnetic member 51 is inserted into the through hole 61a from the tip on the outer side of the outer portion 72b (e.g., on the right side with respect to the orientation of the game system 1), the outer portion 72b is inserted into the through hole 61a and the inner portion 72a is not inserted into the through hole 61a.

Note that, in the present embodiment, the second yoke 73 has the same shape as the first yoke 72. In the present embodiment, the magnet 71 has a rectangular body shape as described above, but in other embodiments, as with the yokes 72 and 73, the magnet 71 may have a shape such that the length of the inner portion in the up-down direction may be longer than the length of the outer portion in the up-down direction.

Note that, in the following, a portion of the upper right magnetic member 51 that corresponds to the inner portion 72a of the first yoke 72 will be referred to as the inner portion of the upper right magnetic member 51, and a portion thereof that corresponds to the outer portion 72b of the first yoke 72 will be referred to as the outer portion of the upper right magnetic member 51. The "portion that corresponds to the inner portion 72a of the first yoke 72" is a portion that overlaps the inner portion 72a of the first yoke as the upper right magnetic member 51 is seen from the front-rear direction. The "portion that corresponds to the outer portion 72b of the first yoke 72" is a portion that overlaps the outer portion 72b of the first yoke 72 as the upper right magnetic member 51 is seen from the front-rear direction. The inner portion is an example of the first portion at least a part of which is located in the through hole 61a. The outer portion is an example of the second portion that is located in the housing 11 and is longer than the opening of the through hole 61a on the inner side of the housing 11 as the yokes 71 and 72 are arranged.

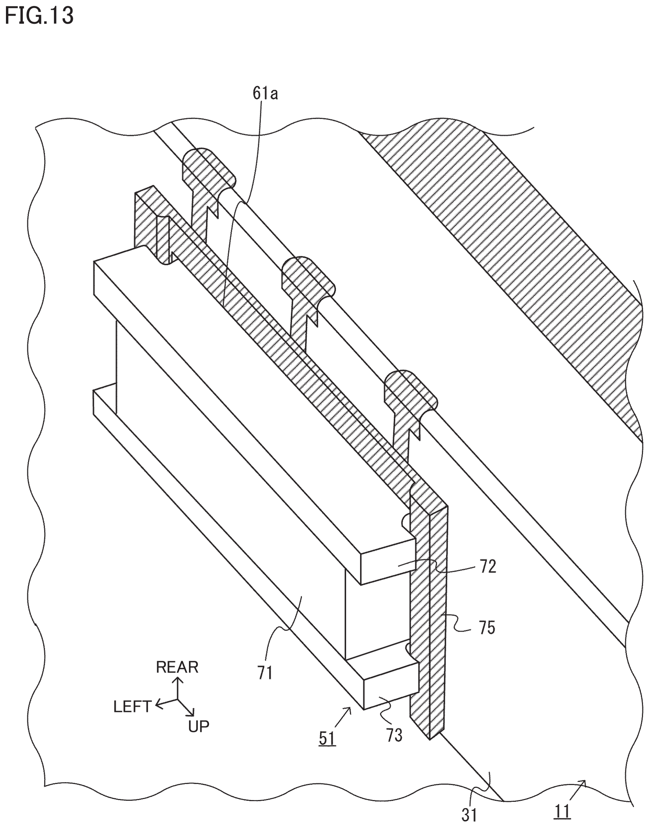

FIG. 13 is a view showing an example of the inside of the housing where the upper right magnetic member 51 is arranged. FIG. 13 is a perspective view showing the upper right magnetic member 51 attached to the through hole 61a formed in the front housing 31 as seen from the inner side of the front housing 31. Note that in FIG. 13, a first conductive member and a holder to be described below are not shown in order to make the upper right magnetic member 51 easier to see.

As shown in FIG. 13, the upper right magnetic member 51 is arranged so that the outer portion is located in the through hole 61a and the inner portion is located outside the through hole 61a. That is, the upper right magnetic member 51 is arranged so that the inner portion is located in the housing 11 and the outer portion is inserted into the through hole 61a. For example, the upper right magnetic member 51 is attached to the housing 11 by being inserted into the through hole 61a from the inside of the housing 11. Here, as described above, since the length of the inner portion of the upper right magnetic member 51 in the up-down direction is greater than the length of the through hole 61a in the up-down direction, it is possible to suppress the upper right magnetic member 51 from slipping out of the housing 11 when the upper right magnetic member 51 is arranged so that the outer portion is inserted into the through hole 61a.

Note that the cross-sectional shape of the outer portion of the upper right magnetic member 51 in a plane parallel to the base surface 61 and the cross-sectional shape of the through hole 61a in that plane have substantially the same shape and size. With the through hole 61a, the upper right magnetic member 51 attached to the housing 11 can be positioned with respect to the up-down direction and the front-rear direction. Note however that the through hole 61a may be shaped and sized so that the upper right magnetic member 51 can be inserted in such an orientation that the longitudinal direction extends along the up-down direction. The through hole 61a may be in contact with, or may not be in contact with, the upper right magnetic member 51 as inserted into the through hole 61a.

In the present embodiment, the upper right magnetic member 51 is arranged so that the tip portion of the upper right magnetic member 51 on the outer side (e.g., the tip portion on the right side with respect to the orientation of the game system 1) protrudes relative to the base surface 61. Note that, in the present embodiment, as described above, the tip portions of the yokes 72 and 73 on the outer side are arranged so as to protrude relative to the magnet 71 (see FIG. 12). In the present embodiment, the tip portions of the yokes 72 and 73 are arranged so as to protrude relative to the base surface 61.

Here, if the tip portions were to be located on the inner side (i.e., on the left side with respect to the orientation of the game system 1) relative to the base surface 61, a gap would be created between the tip portions and the cover 65. As a result, the distance between the right controller 3 as attached to the main body apparatus 2 and the upper right magnetic member 51 would be longer than in the case where the tip portion and the cover 65 are in contact, and there is a risk that the attracting force by the magnetic force of the upper right magnetic member 51 may possibly decrease. In contrast, in the present embodiment, the tip portion is arranged so as to protrude relative to the base surface 61, so that no gap is created between the tip portion and the cover 65, and it is therefore possible to suppress the decrease in the attracting force by the magnetic force of the upper right magnetic member 51. Note that, in other embodiments, the tip portion may be arranged to be flush with the base surface 61. In other embodiments, the upper right magnetic member material 51 may be arranged so that the tip portion of the upper right magnetic member 51 on the outer side (e.g., the tip portion on the right side with respect to the orientation of the game system 1) is within the through hole 61a (specifically, so as not to protrude relative to the base surface 61).

Note that when the tip portion is arranged so as to protrude relative to the base surface 61, a portion of the cover 65 attached to the base surface 61 that is to be in contact with the tip portion will be slightly bulged. Here, the amount of protrusion of the tip portion may be slight. For example, the amount of protrusion of the tip portion may be such that the cover 65 attached to the base surface 61 appears to be substantially flat. Note that, in the present embodiment, the amount of protrusion is such that the cover 65 appears to be substantially flat, and the cover 65 is shown as being a flat surface in the figures. Even if the amount of protrusion is slight, it is possible to prevent a gap from being created between the tip portion and the cover 65, and it is therefore possible to suppress the decrease in the attracting force by the magnetic force of the upper right magnetic member 51.

As shown in FIG. 9 and FIG. 13, in the present embodiment, the base surface 61 of the right side surface 60 of the housing 11 has a shape elongated in the up-down direction, and the upper right magnetic member 51 is arranged in such an orientation that the yokes 72 and 73 extend in the up-down direction. That is, the upper right magnetic member 51 is arranged in such an orientation that the yokes 72 and 73 extend in the same orientation as the longitudinal direction of the base surface 61. According to this, as compared to the case where the upper right magnetic member 51 is arranged in such an orientation that the yokes 72 and 73 extend in the same orientation as the width direction of the base surface 61, for example, there can be more locations on the cover 65 where the magnetic flux density is high (i.e., locations that correspond to the outer end portions of the yokes 72 and 73). Thus, it is possible to increase the attracting force by the upper right magnetic member 51.

As described above, in the present embodiment, the front housing 31 includes a metal portion and a resin portion. In FIG. 13, a portion of the front housing 31 that is made of resin is hatched. As shown in FIG. 13, in the present embodiment, a part of the side portion 31b of the front housing 31 is a metal portion, and the other part is a resin portion. Specifically, a portion of the front housing 31 that is in contact with the upper right magnetic member 51 is made of resin. From another perspective, the through hole 61a is formed in the resin portion of the front housing 31, which is made of an insulative material. More specifically, a portion of the front housing 31 that forms the inner surface of the through hole 61a is made of resin. A portion of the inner wall of the front housing 31 that is around the opening of the through hole 61a is also made of resin (see FIG. 13).

Here, in the present embodiment, since the magnetic member (i.e., the magnet and the yokes) is conductive, if the magnetic member were to come into direct contact with the metal portion of the front housing 31, there is a risk that an inductance component, an impedance component, etc., which may be generated by the electrical connection between the magnetic member connected to the ground potential in the main body apparatus 2 and the metal portion, may possibly inadvertently affect electronic components such as antennas arranged in the main body apparatus 2 (the antennas 44 to 46 in the present embodiment). In contrast, in the present embodiment, by arranging an insulative resin member between the magnetic member and the metal portion of the front housing 31, an inductance component, an impedance component, etc., are less likely to be generated by the electrical path between the magnetic member and the metal portion of the front housing 31, and it is possible to suppress the magnetic member from becoming a source of noise and inadvertently affecting electronic parts. Note that, in other embodiments, the main body apparatus 2 may have a configuration in which the magnetic member is in direct contact with the metal portion of the front housing 31.

Note that, in the present embodiment, the metal portion of the front housing 31 is non-magnetic metal (specifically, magnesium, etc., described above). Thus, it is possible to prevent the metal portion of the front housing 31 from affecting the magnetic field by the magnetic member.

As shown in FIG. 13, in the present embodiment, an opening portion 75, which is the portion that bounds the opening of the through hole 61a of the inner wall of the front housing 31, is made of resin. As shown in FIG. 13, the opening portion 75 is in contact with the yokes 72 and 73 of the upper right magnetic member 51. Specifically, a surface of the opening portion 75 that is facing the inner side of the housing 11 (referred to as the "contact surface") and a surface of the inner portion of the yokes 72 and 73 that is facing the outer side of the housing 11 contact each other. A portion of the opening portion 75 at the lower edge is in contact with the lower portion of the inner portions of the yokes 72 and 73. A portion of the opening portion 75 at the upper edge is in contact with the upper portion of the inner portions of the yokes 72 and 73. That is, the upper right magnetic member 51 contacts the opening portion 75 at a total of four locations: two contact surfaces on the inner portion of the first yoke 72 and two contact surfaces on the inner portion of the second yoke 73. Note that, in the present embodiment, the opening portion 75 is formed to be raised (specifically, raised in the inward direction of the housing 11) from the inner wall of the front housing 31 around the opening portion 75. Thus, it is possible to reduce the possibility that the upper right magnetic member 51 may contact a metal portion of the inner wall of the front housing 31 other than the opening portion 75. As described above, since the opening portion 75 is formed to be raised from the inner wall of the front housing 31 around the opening portion 75, strictly speaking, a part of the outer portion of the upper right magnetic member 51 (specifically, a part on the side closer to the inner portion) will not be in the through hole 61a.

In the present embodiment, the contact surface of the opening portion 75 (e.g., the surface in contact with the upper right magnetic member 51) is parallel to the base surface 61. From another perspective, the contact surface is perpendicular to the left-right direction. Here, if the contact surface is not parallel to the base surface 61, the upper right magnetic member 51 will be arranged inclined relative to the base surface 61, and there is a risk that the attracting force by the magnetic force of the upper right magnetic member 51 may possibly decrease. In contrast, by making the contact surface parallel to the base surface 61, it is possible to reduce the possibility that the upper right magnetic member 51 is arranged inclined relative to the base surface 61, and it is possible to reduce the possibility that the attracting force by the magnetic force of the upper right magnetic member 51 may decrease.

Note that, in the present embodiment, the opening portion 75 is made of resin. Here, in the present embodiment, the front housing 31 is manufactured by insert molding, and the mold ejection direction is the rear direction. At this time, if the opening portion 75 is made of metal, there is a risk that it may possibly become difficult to make the contact surface parallel to the base surface 61 (i.e., parallel to the ejection direction) because it is generally difficult to use a small draft angle for a metal portion. In contrast, in the present embodiment, the opening portion 75 is made of resin, and since it is easier to use a small draft angle for a resin portion as compared to a metal portion, it is easier to make the contact surface parallel to the base surface 61 (i.e., parallel to the ejection direction).

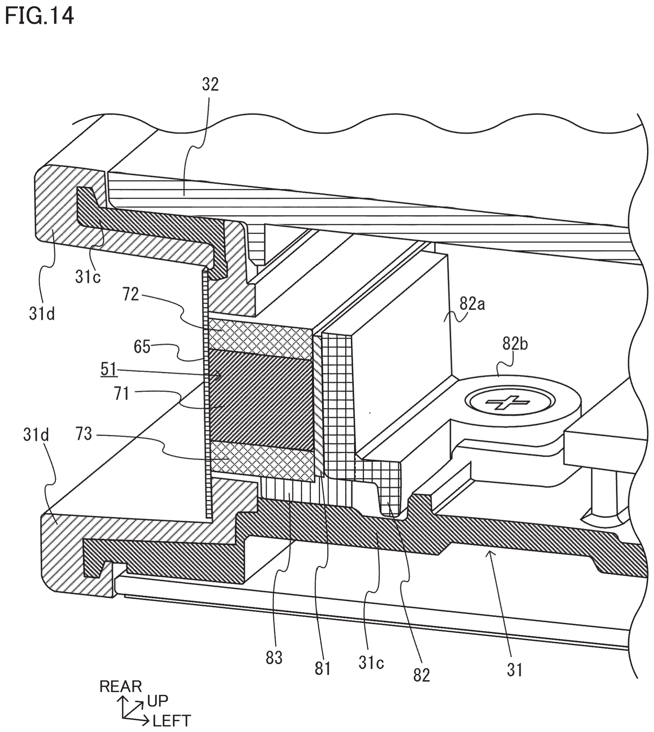

FIG. 14 is a cross-sectional view showing an example of the main body apparatus 2 at the position where the upper right magnetic member 51 is arranged. FIG. 14 is a cross-sectional view taken along a plane parallel to the front-rear direction and the left-right direction. Note that, in FIG. 14, in order to show the arrangement of the components to be discussed (specifically, the upper right magnetic member 51, the first conductive member, the holder, and the second conductive member) in a clear manner, the other components arranged in the housing 11 are not shown.

As shown in FIG. 14, the main body apparatus 2 includes a first conductive member 81. The first conductive member 81 is arranged on a surface of the upper right magnetic member 51 on the inner side (e.g., the left side with respect to the orientation of the game system 1). The first conductive member 81 is, for example, a sheet-shaped part and is made of a conductive material. The first conductive member 81 is arranged so as to contact each of the parts of the upper right magnetic member 51 (e.g., the magnet 71 and the yokes 72 and 73). Specifically, the surface of the first conductive member 81 that is facing the outer side is in contact with the surfaces of the magnet 71 and the yokes 72 and 73 that are facing the inner side. The first conductive member 81 electrically connects the parts of the upper right magnetic member 51. As will be described in detail below, in the present embodiment, the second yoke 73 and the first conductive member 81 are electrically connected to the ground of the electronic circuit of the main body apparatus 2 by a second conductive member 83. Therefore, as the first conductive member 81 electrically connects the parts of the upper right magnetic member 51, the parts of the upper right magnetic member 51 are electrically connected to the ground of the electronic circuit of the main body apparatus 2. Note that the surface of the first conductive member 81 that is facing the outer side and the surfaces of the magnet 71 and the yokes 72 and 73 that are facing the inner side may be connected via a conductive adhesive. With such a configuration, misalignment is less likely to occur between the first conductive member 81 and the magnet 71 and the yokes 72 and 73.

As shown in FIG. 14, the main body apparatus 2 includes a holder 82 for holding the magnetic member 51. The holder 82 is an example of the pressing member that presses at least one of the magnet 71 and the yokes 72 and 73 in the outward direction of the housing 11. The holder 82 is arranged so as to contact the inner side of the first conductive member 81. The holder 82 includes, for example, a first portion 82a including a contact surface perpendicular to the left-right direction and a second portion 82b for attaching the holder 82 to the front housing 31. The holder 82 is attached to the front housing 31 with the contact surface of the holder 82 in contact with the inner-side surface (e.g., the surface on the opposite side of the surface in contact with the upper right magnetic member 51) of the first conductive member 81, which is arranged along the inner-side surface of the upper right magnetic member 51. That is, the first conductive member 81 is sandwiched between the upper right magnetic member 51 and the holder 82. The holder 82 may be attached to the front housing 31 by any method. In the present embodiment, the holder 82 is secured to the front housing 31 by screwing, for example, by forming a screw hole in the second portion 82b. Note that there is no limitation on the specific shape of the holder 82, which may be set to a shape in accordance with the shape of the housing 11 around the holder 82. For example, the holder used for attaching the magnetic members 52 to 54 other than the upper right magnetic member 51 may have a shape different from the holder 82 used for attaching the upper right magnetic member 51. The holder 82 is attached to the front portion 31a of the front housing 31 of the housing 11, but there is no limitation on the position of the housing 11 where the holder 82 is attached. In other embodiments, the member to which the holder 82 is attached is not limited to the housing 11, but the holder 82 may be attached to the substrate 33, for example.

In the present embodiment, the holder 82 is attached so as to press the upper right magnetic member 51 and the first conductive member 81 in the outward direction of the housing 11 (e.g., rightward with respect to the orientation of the game system 1). Specifically, with the upper right magnetic member 51, the first conductive member 81, and the holder 82 attached to the front housing 31, the holder 82 presses the upper right magnetic member 51 in the outward direction with the first conductive member 81 being interposed, and the upper right magnetic member 51 is pressed against the inner wall of the front housing 31 (specifically, the opening portion 75). In the state described above, the upper right magnetic member 51 is secured to the housing 11 by the holder 82.

As described above, the holder 82 presses the inner surface of the upper right magnetic member 51 that is facing the inner side of the housing 11 in the outward direction of the housing 11. As a result, the upper right magnetic member 51 is sandwiched between the holder 82 and the inner wall of the housing 11, and it is therefore possible to suppress rattling of the upper right magnetic member 51 with respect to the left-right direction. The upper right magnetic member 51 is also secured in the front-rear direction and the up-down direction by the frictional force caused by being sandwiched between the holder 82 and the inner wall of the housing 11. As described above, in the present embodiment, the upper right magnetic member 51 can be secured to the housing 11 while suppressing rattling. Note that if the position of the upper right magnetic member 51 relative to the housing 11 is shifted, there is a risk that the attracting force by the magnetic force of the upper right magnetic member 51 for the right controller 3 as attached to the main body apparatus 2 may possibly decrease. According to the present embodiment, by firmly securing the upper right magnetic member 51 to the housing 11, it is possible to suppress the decrease in the attracting force due to the shifting of the upper right magnetic member 51.

The holder 82 may be an elastic material. The holder 82 may press both of the magnet 71 and the yokes 72 and 73 of the upper right magnetic member 51 directly without the first conductive member 81 therebetween. That is, the main body apparatus 2 does not need to include the first conductive member 81. The holder 82 may be made of a conductive material and may be electrically connected to the ground potential in the main body apparatus 2. For example, the holder 82 may be electrically connected to the ground potential of the housing 11 or the substrate 33. Thus, by providing the holder 82 with the function of holding the upper right magnetic member 51 and the function of connecting the upper right magnetic member 51 to the ground, it is possible to reduce the number of parts of the main body apparatus 2 and to save space.

Note that, in the present embodiment, the holder 82 presses both the magnet 71 and the yokes 72 and 73 of the upper right magnetic member 51, but in other embodiments, the holder 82 may press at least any one of the magnet 71, the first yoke 72, and the second yoke 73.

In the present embodiment, the first conductive member 81 is an elastic material. The material of the first conductive member 81 may be, for example, conductive silicone rubber, chloro rubber, polyethylene, urethane foam, or acrylic foam, etc. With the upper right magnetic member 51 secured by the holder 82, the first conductive member 81 is deformed by being sandwiched between the holder 82 and the upper right magnetic member 51. By forming the first conductive member 81 using an elastic material, it is possible to suppress rattling of the upper right magnetic member 51. Note that, in other embodiments, there is no limitation on the material of the first conductive member 81, and it may be a non-elastic material.

As described above, in the present embodiment, the first conductive member 81 has the function of electrically connecting the magnet 71 and the yokes 72 and 73, and also has the function as a cushion to suppress rattling of the upper right magnetic member 51. According to this, it is possible to reduce the number of parts of the main body apparatus 2 and to save space. Note that, in other embodiments, the main body apparatus 2 may separately include a component that electrically connects the magnet 71 and the yokes 72 and 73 and a component that suppresses rattling of the upper right magnetic member 51. For example, as described above, the magnet 71 and the yokes 72 and 73 may be bonded by a conductive adhesive. With this configuration, since no parts are needed to electrically connect the magnet 71 and the yokes 72 and 73, an insulative member may be used instead of the first conductive member 81, or neither the first conductive member 81 nor the insulative member may be used. Note that a conductive adhesive generally has not so high a conductivity and hence a high resistance value. In contrast, when the first conductive member is used, it is easier to select a conductive adhesive with a higher conductivity than when a conductive adhesive is used, and it is possible to suppress the resistance loss.

As shown in FIG. 14, the main body apparatus 2 includes the second conductive member 83. The second conductive member 83 is arranged between the front housing 31 and the upper right magnetic member 51. Specifically, the second conductive member 83 is arranged so as to contact the front housing 31 and the second yoke 73 of the upper right magnetic member 51, which is located closer to the front side, of the yokes 72 and 73. Here, as described above, the front housing 31 includes a metal portion 31c and a resin portion 31d. The right side surface of the housing 11 is the resin portion 31d. As shown in FIG. 14, the second conductive member 83 is arranged so as to contact the metal portion 31c of the front housing 31 (specifically, the metal portion of the front portion 31a) and to contact the second yoke 73 and the first conductive member 81. For example, the second conductive member 83 is bonded to the front housing 31, the second yoke 73, and the first conductive member 81 by a conductive adhesive.

As described above, in the present embodiment, the second conductive member 83 electrically connects the upper right magnetic member 51 and the metal portion of the housing 11. Note that the second conductive member 83 may be an elastically deformable member, and may be attached while being pressed and deformed by the front housing 31 and the second yoke 73. This can increase the contact area between the second conductive member 83 and the front housing 31 and the second yoke 73, and can more reliably make the second conductive member 83 contact the front housing 31 and the second yoke 73. Note that, in other embodiments, the second conductive member 83 does not need to be an elastically deformable member.

Here, in the present embodiment, as described above, the metal portion of the front housing 31 is electrically connected to the ground of the electronic circuit of the main body apparatus 2. Therefore, in the present embodiment, the upper right magnetic member 51 is electrically connected to the ground of the electronic circuit via the first conductive member 81 and the second conductive member 83. That is, in the present embodiment, the yokes 72 and 73 and the magnet 71 are electrically connected by the first conductive member 81, and the upper right magnetic member 51 so electrically connected is connected to the metal portion of the housing by the second conductive member 83. With such a configuration, the upper right magnetic member 51 can be arranged stably (in the structural sense) on the metal portion of the housing 11, while the ground connection between the magnet and the yokes can be taken stably (in the potential sense). Note that, in the present embodiment, the upper right magnetic member 51 is arranged near the surface of the housing 11 in order to increase the attracting force to maintain the attachment of the right controller 3 to the main body apparatus 2. Therefore, by connecting the upper right magnetic member 51 to the ground of the electronic circuit of the main body apparatus 2, electromagnetic wave radiation from outside of the main body apparatus 2 can be cut off, and noise such as radiation can be suppressed from being transmitted to the electronic parts (e.g., the antennas and the SoC) inside the main body apparatus 2.

Note that the specific configuration for connecting the upper right magnetic member 51 to the ground of the electronic circuit of the main body apparatus 2 is not limited to the above, and there is no limitation thereto. For example, while the holder 82 is made of an insulative material in the present embodiment, the holder 82 may be made of a conductive material. According to this, the upper right magnetic part material 51 is connected to the ground by being electrically connected to the metal portion of the front housing 31 via the first conductive member 81 and the holder 82. In this configuration, the second conductive member 83 may be absent. In other embodiments, the portion of the front housing 31 that is in contact with the upper right magnetic member 51 may be formed as a metal portion, so that the upper right magnetic member 51 and the metal portion of the front housing 31 are directly connected.

Note that some of the magnetic members 51 to 54 included in the main body apparatus 2 do not need to be connected to the ground. In other embodiments, not all of the magnetic members 51 to 54 have to be connected to the ground. Details of the magnetic members that are not connected to the ground will be described below.

In the present embodiment, the lower right magnetic member 52 is attached to the base surface 61 at the right side surface 60 of the housing 11 by the same configuration as the upper right magnetic member 51 (see FIG. 9). That is, the configuration for attaching the lower right magnetic member 52 to the housing 11 is the same as that of the upper right magnetic member 51. Specifically, the lower right magnetic member 52 is secured to the housing 11 by being pressed by the holder from inside of the housing 11 with the first conductive member being interposed, with the outer portion of the lower right magnetic member 52 inserted into the through hole 61b formed on the lower side of the base surface 61.

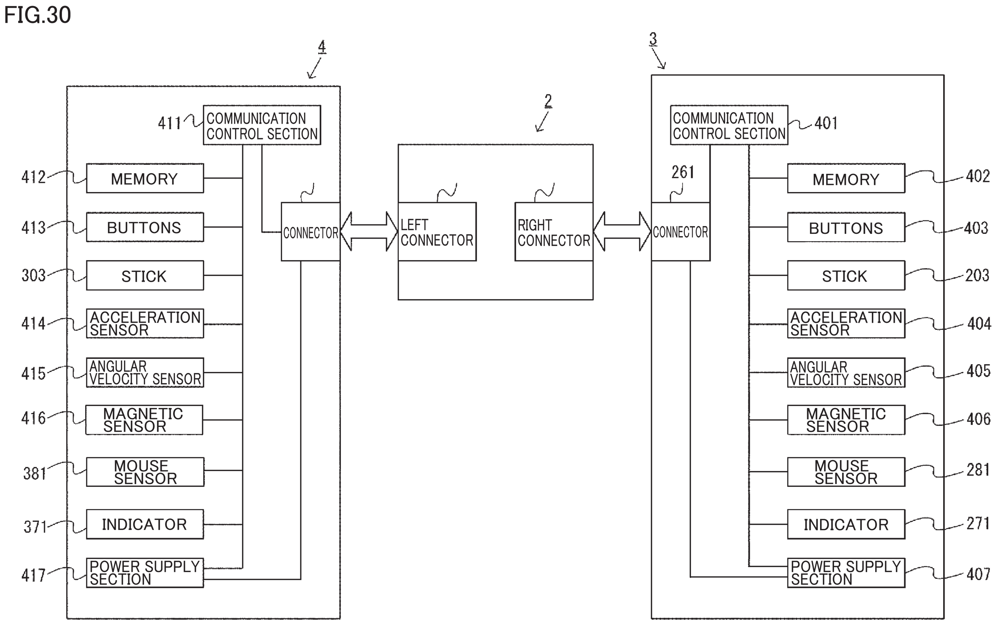

Note however that, in the present embodiment, the lower right magnetic member 52 is attached to the housing 11 so that its polarity is opposite to that of the upper right magnetic member 51. For example, if the upper right magnetic member 51 is arranged so that the N-polarity is on the front side and the S-polarity is on the rear side, the lower right magnetic member 52 is arranged so that the S-polarity is on the front side and the N-polarity is on the rear side. Here, in the present embodiment, the right controller 3 includes a magnetic sensor (a magnetic sensor 406 in FIG. 30 to be described below). For example, the magnetic sensor is arranged inside the housing of the right controller 3 (e.g., at a position near the center of the housing, or between a side surface upper button 208 and a side surface lower button 209 to be described below with respect to the up-down direction). Therefore, with the right controller 3 attached to the main body apparatus 2, there is a risk that the magnetic sensor may be affected by the magnetic fields of the magnetic members 51 and 52 of the main body apparatus 2, and the detection accuracy of the magnetic sensor may decrease. In this regard, in the present embodiment, by setting the polarity of the two magnetic members 51 and 52 opposite, the magnetic fields of the two members cancel each other at the position of the magnetic sensor, and it is possible to reduce the effect on the magnetic sensor. Thus, it is possible to suppress the decrease in detection accuracy of the magnetic sensor.

Also for the left side surface of the housing 11, the two magnetic members 53 and 54 are attached in the same manner as that for the right side surface 60. That is, the configuration for attaching the upper left magnetic member 53 and the lower left magnetic member 54 to the housing 11 on the left side surface of the housing 11 is the same as the configuration for attaching the upper right magnetic member 51 and the lower right magnetic member 52 to the housing 11 on the right side surface 60 of the housing 11. In the present embodiment, the shape of the left side surface of the housing 11 and the shape of the right side surface 60 are in plane symmetry with respect to a plane that passes through the center of the housing 11 and is perpendicular to the left-right direction. Therefore, the upper left magnetic member 53 is arranged at the same position as the upper right magnetic member 51 with respect to the up-down direction and the front-rear direction. The lower left magnetic member 54 is arranged at the same position as the lower right magnetic member 52 with respect to the up-down direction and the front-rear direction.

The magnetic members 53 and 54 arranged on the left side surface of the housing 11 are also attached to the housing 11 so that their polarities are opposite to each other, similarly to the magnetic members 51 and 52 arranged on the right side surface 60. Note that the upper right magnetic member 51 and the upper left magnetic member 53, and the lower right magnetic member 52 and the lower left magnetic member 54, may also be attached to the housing 11 so that their polarities are opposite to each other. Thus, it is possible to reduce the influence of the magnetic members 51 to 54 on the magnetic sensors included in the main body apparatus 2 and the controllers 3 and 4.

As described above, the method of attaching the four magnetic members 51 to 54 to the housing 11 is the same in the present embodiment. Note however that, in the present embodiment, the upper left magnetic member 53 is not connected to the ground potential in the main body apparatus 2. For example, for the upper left magnetic member 53, a member equivalent to the second conductive member 83 described above for the upper right magnetic member 51 is not used. That is, for the upper left magnetic member 53, no conductive member is arranged sandwiched between the upper left magnetic member 53 and the metal portion of the front housing 31. Therefore, the upper left magnetic member 53 is not electrically connected to the metal portion of the front housing 31 and is not connected to the ground. The reason for this will now be described.

In the present embodiment, the first antenna 44 is arranged in the vicinity of the upper left magnetic member 53 (see FIG. 8). In such a case where the antenna is arranged in the vicinity of a magnetic member, if the magnetic member is connected to the ground of the electronic circuit of the main body apparatus 2, the inductance in the path from the magnetic member to the metal portion of the front housing 31 may have a greater influence on the characteristics of the antenna in the vicinity. Therefore, if the influence described above is presumed to be greater than the influence of the noise generated by the magnetic member that is not connected to the ground, one may consider not connecting the magnetic member to the ground. In the present embodiment, the upper left magnetic member 53, which is arranged in the vicinity of the first antenna 44 is not connected to the ground, presuming that the influence described above will be greater because the upper left magnetic member 53 is arranged at a position that is closest to the antenna. Thus, it is possible to reduce the influence of the magnetic member on the antenna.

Note that, in the present embodiment, the magnetic member is electrically connected to the metal portion of the front housing 31 by the second conductive member described above. Therefore, it is easy to change the design as to whether or not the magnetic member is connected to the ground of the electronic circuit of the main body apparatus 2, because it is possible to change whether or not the magnetic member is connected to the ground of the electronic circuit of the main body apparatus 2 based only on whether or not to arrange the second conductive member.

As described above, the present embodiment employs a configuration of not connecting, to the ground, the upper left magnetic member 53 that is included in the combination of a magnetic member and an antenna (e.g., the combination of the upper left magnetic member 53 and the first antenna 44) with the shortest distance between the magnetic member and the antenna, of all the combinations between the magnetic members 51 to 54 and the antennas 44 to 46 (here, 12 combinations). Here, in other embodiments, another magnetic member may be not connected to the ground. For example, in other embodiments, magnetic members the distance of which from the antenna less than or equal to a predetermined distance may be not connected to the ground. The criteria for determining whether or not to connect to the ground of the electronic circuit of the main body apparatus 2 are not limited to the distance between the antenna and the magnetic member, but may include other factors. For example, in other embodiments, in addition to (or instead of) the distance between the antenna and the magnetic member, the performance, characteristics, and/or type of the antenna, etc., may be taken into consideration in determining whether or not to connect to the ground.

### [2-3. Configuration regarding electrical connection with controllers]

Next, a configuration for electrically connecting the main body apparatus and the controllers will be described. As shown in FIG. 9, the right connector 22 is arranged at the base surface 61 of the right side surface 60 of the housing. In the present embodiment, the right connector 22 is arranged at the center of the base surface 61 with respect to the up-down direction and the front-rear direction. The position of the right connector 22 is between the two magnetic members 51 and 52 as the base surface 61 is seen from the side from the outside of the main body apparatus 2.

As shown in FIG. 9, in the present embodiment, the right connector 22 has a support 66 and a tongue 67. The support 66 has a plate-like shape. The tongue 67 has a plate-like shape protruding from a surface of the support 66 on one side thereof in the direction perpendicular to that surface. The right connector 22 has a group of terminals 68. As will be described in detail below, in the present embodiment, the right connector 22 has a group of terminals 68 consisting of nine terminals. Note that there is no limitation on the number of terminals that the right connector 22 has. The group of terminals 68 is arranged on a surface of the tongue 67 on one side thereof side by side in the direction perpendicular to the direction in which the tongue 67 protrudes from the support 66. Each terminal of a group of terminals 68 extends on the surface of the tongue 67 to the tip of the tongue 67 (specifically, the tip in the direction in which the tongue 67 protrudes). Note that while each terminal has a leaf spring shape, there is no limitation on the shape of the terminal, which may be pin-shaped, for example.

In the present embodiment, the right connector 22 is attached to the housing 11 by attaching the support 66 to the front housing 31. As shown in FIG. 9, in the present embodiment, a recess 61c is formed in the base surface 61 for the attachment of the support 66. The support 66 is attached to the front housing 31 with the support 66 matched with the recess 61c. A through hole 61d is formed on the bottom surface of the recess 61c. Transmission lines of an FPC (flexible printed circuit), etc., which electrically connects the terminals of a group of terminals 68 to the electronic circuit inside the housing 11, extend from the inward-facing surface of the support 66 (e.g., the surface on the back side from the surface on which the tongue 67 protrudes) into the housing 11 passing through the through hole 61d.

As shown in FIG. 9, the support 66 is attached to the front housing 31 in such an orientation that the tongue 67 protrudes from the base surface 61 in the outward direction of the housing 11 (e.g., rightward with respect to the orientation of the game system 1) so that the support 66 is parallel to the base surface 61. Note that, with the support 66 attached to the front housing 31, the surface of the support 66 on which the tongue 67 protrudes is substantially flush with the base surface 61, and the tongue 67 protrudes relative to the base surface 61. With the support 66 attached to the front housing 31, the surface of the tongue 67 on which a group of terminals 68 is arranged is in an orientation perpendicular to the front-rear direction. Specifically, the support 66 is attached to the front housing 31 in such an orientation that a group of terminals 68 is facing the rear side. Accordingly, the terminals included in a group of terminals 68 are arranged side by side in the up-down direction facing the rear side. Note that, as described above, the terminals are arranged so as to extend to the tip of the tongue 67 (i.e., the right end portion with respect to the orientation of the game system 1) so that the terminals are partially visible as the right controller 3 is seen from the right side. This makes it easier for the terminals of the right controller 3 to contact the terminals of the right connector 22 of the main body apparatus 2 when the right controller 3 is attached to the main body apparatus 2.

In the present embodiment, a group of terminals 68 is located on the inner side (e.g., the left side with respect to the orientation of the game system 1) relative to the protruding surface 62 of the right side surface 60 of the front housing 31. Specifically, the tip of the tongue 67 is located on the inner side relative to the protruding surface 62 of the right side surface 60 of the front housing 31. That is, with respect to the direction of protrusion from the base surface 61 (e.g., the left-right direction), the length from the base surface 61 to the tip of the tongue 67 is shorter than the length from the base surface 61 to the protruding surface 62. From another perspective, the amount of protrusion of the tongue relative to the base surface 61 is smaller than the amount of protrusion of the wall portion 63 relative to the base surface 61. Therefore, a group of terminals 68 is located within the space inside the groove 2a formed in the right side surface 60 of the main body apparatus 2. According to the above, it is possible to reduce the possibility that other objects other than the main body apparatus 2 may inadvertently contact the tongue 67, thereby protecting the terminals arranged on the tongue 67.

In the present embodiment, the support 66 is attached to the front housing 31 by screwing. For example, the support 66 is screwed to the tongue 67 at two locations on opposite sides in the up-down direction. Here, in the present embodiment, the support 66 is movably attached to the front housing 31. Specifically, as the support 66 is screwed to the front housing 31 with shoulder screws 69, the support 66 is slightly movable relative to the front housing 31. Note that the support 66 may be movable in any of the up-down direction, the front-rear direction, and the left-right direction. Since the support 66 is screwed to the front housing 31 at two locations by two shoulder screws 69, it may be rotatable. For example, the support 66 may be capable of rotating so that the surface on which the group of terminals 68 is arranged is slightly tilted relative to the base surface 61 by rotation with the up-down direction as the axis.

As described above, in the present embodiment, the right connector 22 can be said to be a floating connector. This makes it easier to maintain the connection between the connectors even if the right controller 3 as attached to the main body apparatus 2 moves slightly relative to the main body apparatus 2 (e.g., the right controller 3 is shifted relative to the main body apparatus 2). Note that the structure of the floating connector may be different from the structure of the present embodiment, and may be of any structure in which it is movable in the up-down direction or the front-rear direction so as to adjust relative contact error between connectors.

In the present embodiment, the tongue 67 is arranged at the center of the base surface 61 with respect to the up-down direction and the front-rear direction. Therefore, as will be described in detail below, even if a controller is attached to the main body apparatus 2 in a mode of attachment different from the normal mode of attachment (see FIG. 1), such as attaching the right controller 3 to the main body apparatus 2 in a reversed front-rear or up-down orientation, or attaching the left controller 4 to the right side surface 60 of the main body apparatus 2, the tongue 67 will be inserted in a predetermined area (the housing area to be described below) of the controller. Note that, in other embodiments, the tongue 67 does not need to be arranged at the center of the base surface 61 with respect to the up-down direction and the front-rear direction.

As described above, in the present embodiment, the cover 65 is attached on the base surface 61 (FIG. 9 and FIG. 10). As shown in FIG. 10, the cover 65 is formed with a through hole 65a in an area corresponding to the tongue 67 of the right connector 22 attached to the front housing 31. The cover 65 is attached on the base surface 61 with the tongue 67 passing through the through hole 65a. Note that the through hole 65a has substantially the same shape and size as the cross-sectional shape of the tongue 67 along a cross section perpendicular to the left-right direction. The cover 65 covers the shoulder screws 69 of the right connector 22 (see FIG. 10). The cover 65 also covers the border portion between the base surface 61 and the support 66. This prevents dust and other foreign matter from entering the housing 11 through the screw holes formed in the support 66 and the gap between the base surface 61 and the support 66.

Also for the left side surface of the housing 11, the left connector 23 is attached in the same manner as that for the right side surface 60. That is, the configuration for attaching the left connector 23 to the housing 11 on the left side surface of the housing 11 is the same as the configuration for attaching the right connector 22 to the housing 11 on the right side surface 60 of the housing 11. The position and the configuration of the left connector 23 are symmetrical with the position and the configuration of the right connector 22 with respect to a plane that passes through the center of the housing 11 and is perpendicular to the left-right direction. That is, the shape of the left connector 23 and the shape of the right connector 22 are in plane symmetry with respect to that plane. The left connector 23 is arranged at the same position as the right connector 22 with respect to the up-down direction and the front-rear direction.

### [2-4. Electrical configuration of main body apparatus]

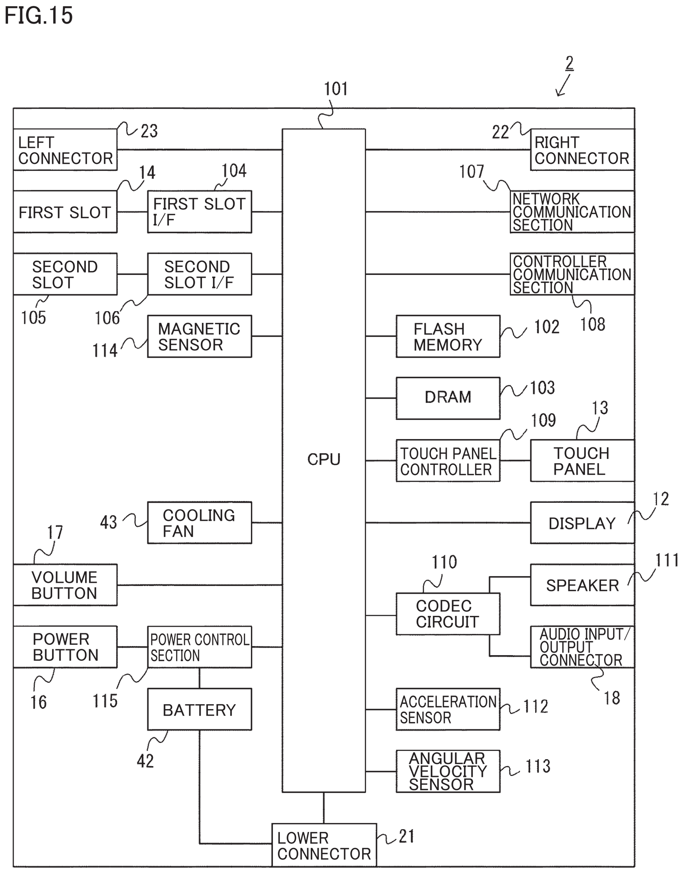

FIG. 15 is a block diagram showing an example of the electrical configuration of the main body apparatus 2. In addition to the elements shown in FIG. 6 to FIG. 14, the main body apparatus 2 includes components 101 to 117 shown in FIG. 15. Some of these components 101 to 117 may be mounted on the substrate 33 as electronic parts and stored in the housing 11.

### (Configuration regarding executing information processes)

The main body apparatus 2 includes a CPU (Central Processing Unit) 101. The CPU 101 is an information processing section that executes various types of information processes executed in the main body apparatus 2. The CPU 101 executes various types of information processes by executing information processing programs that are stored in a storage section that the CPU 101 can access (specifically, an internal storage medium such as a flash memory 102, or external storage media attached to slots, etc.). For example, the CPU 101 executes the game process by executing a game program.

The main body apparatus 2 includes the flash memory 102 and a DRAM (Dynamic Random Access Memory) 103 as an example of the internal storage medium provided therein. The flash memory 102 and the DRAM 103 are electrically connected to the CPU 101. The flash memory 102 is a memory mainly used to store various data (which may also be programs) stored in the main body apparatus 2. The DRAM 103 is a memory used to temporarily store various data used in the information processes.

The main body apparatus 2 includes a first slot interface (hereinafter abbreviated as "I/F") 104. The first slot I/F 104 is electrically connected to the first slot 14 and the CPU 101, and reads and writes data from and in a storage medium (e.g., a dedicated memory card) attached to the first slot 14 in response to instructions from the CPU 101.

The main body apparatus 2 includes a second slot 105. For example, a second slot 105 is arranged inside the stand member 24 on the rear surface of the housing 11. The second slot 105 has a shape such that a type of a storage medium, which is different from the storage medium that can be attached to the first slot 14, can be attached to the second slot 105. The storage medium that can be attached to the second slot 105 may be a general-purpose storage medium, e.g., an SD card. The storage medium that can be attached to the second slot 105 is used, for example, to store data used in the main body apparatus 2 (e.g., save data of an application, etc.), and/or programs to be executed in the main body apparatus 2 (e.g., a program of an application, etc.).

The main body apparatus 2 includes a second slot I/F 106. The second slot I/F 106 is electrically connected to the second slot 105 and the CPU 101, and reads and writes data from and in a storage medium (e.g., an SD card) attached to the second slot 105 in response to instructions from the CPU 101.

The CPU 101 executes the information processes by reading and writing data from and in the memories 102 and 103 and the storage media mentioned above as necessary.

### (Configuration for communication)

The main body apparatus 2 includes a network communication section 107. The network communication section 107 is electrically connected to the CPU 101. The network communication section 107 communicates (specifically, wireless communication) with external devices via a network. In the present embodiment, the network communication section 107 is a communication module certified for Wi-Fi, for example, and communicates with external devices via a wireless LAN using one of the antennas 44 to 46. Note that, in other embodiments, the main body apparatus 2 may have the function of connecting to a mobile communication network for communication (in other words, a mobile telephone communication network) in addition to (or instead of) the function of connecting to a wireless LAN for communication.

The main body apparatus 2 includes a controller communication section 108. The controller communication section 108 is electrically connected to the CPU 101. The controller communication section 108 performs wireless communication with the controller(s) 3 and/or 4 using one of the antennas 44 to 46. There is no limitation on the communication method between the main body apparatus 2 and the controllers, but in the present embodiment, the controller communication section 108 communicates with the controllers by the Bluetooth (registered trademark) standard.

The CPU 101 is electrically connected to the lower connector 21, the right connector 22, and the left connector 23. When performing wired communication with the right controller 3, the CPU 101 sends and receives data to and from the right controller 3 via the right connector 22. When performing wired communication with the left controller 4, the CPU 101 sends and receives data to and from the left controller 4 via the left connector 23. When communicating with an external device (e.g., a cradle) electrically connected via the lower connector 21, the CPU 101 sends and receives data to and from the external device via the lower connector 21.

Thus, in the present embodiment, the main body apparatus 2 can perform both of wired communication and wireless communication with the left and right controllers 3 and 4.

The main body apparatus 2 can also communicate with multiple left controllers simultaneously (in other words, in parallel). The main body apparatus 2 can also communicate with multiple right controllers simultaneously (in other words, in parallel). Thus, the user can use multiple left controllers and multiple right controllers to make inputs to the game system 1.

### (Configuration regarding input/output to/from main body apparatus 2)

The main body apparatus 2 includes a touch panel controller 109, which is a circuit that controls the touch panel 13. The touch panel controller 109 is electrically connected to the touch panel 13 and the CPU 101. Based on signals from the touch panel 13, for example, the touch panel controller 109 generates data indicating the position at which touch input is made and outputs the data to the CPU 101.

The display 12 described above is electrically connected to the CPU 101. The CPU 101 displays on the display 12, for example, images generated by executing the information processes and/or images obtained from outside.

The main body apparatus 2 includes a codec circuit 110 and a speaker 111. The codec circuit 110 is electrically connected to the speaker 111 and the audio input/output connector 18, and is electrically connected to the CPU 101. The codec circuit 110 is a circuit that controls the input/output of audio data to/from the speaker 111 and the audio input/output connector 18.

The volume button 17 described above is electrically connected to the CPU 101. Based on the input to the volume button 17, the CPU 101 controls the volume of the sound output from an audio output section such as the speaker 111 or the earphones electrically connected to the audio input/output connector 18.

The main body apparatus 2 includes an acceleration sensor 112 and an angular velocity sensor 113. The detection results of the acceleration sensor 112 and the angular velocity sensor 113 are outputted to the CPU 101. The CPU 101 can calculate information about the movement and/or attitude of the main body apparatus 2 based on the detection results of the acceleration sensor 112 and the angular velocity sensor 113.

The main body apparatus 2 includes a magnetic sensor 114 that detects the strength and/or orientation of the magnetic field. The magnetic sensor 114 is electrically connected to the CPU 101, and the detection results of the magnetic sensor 114 are outputted to the CPU 101. For example, the attitude of the main body apparatus 2 calculated based on the detection results of the acceleration sensor 112 can be corrected based on the detection results of the magnetic sensor 114 to thereby accurately calculate the attitude of the main body apparatus 2.

### (Configuration regarding power)

The main body apparatus 2 includes a power control section 115 and a battery 42. The power control section 115 is electrically connected to the battery 42 and the CPU 101. Although not shown in the figures, the power control section 115 is electrically connected to parts of the main body apparatus 2 (specifically, parts that receive power supply from the battery 42, the right connector 22, and the left connector 23). The power control section 115 controls the power supply from the battery 42 to the parts based on instructions from the CPU 101. The power control section 115 controls the power supply to the sections based on the input to the power button 16.

The battery 42 is electrically connected to the lower connector 21. When an external charging device (e.g., a cradle) is electrically connected to the lower connector 21 and power is supplied to the main body apparatus 2 via the lower connector 21, the supplied power is charged to the battery 42.

### [3. Controller configuration]

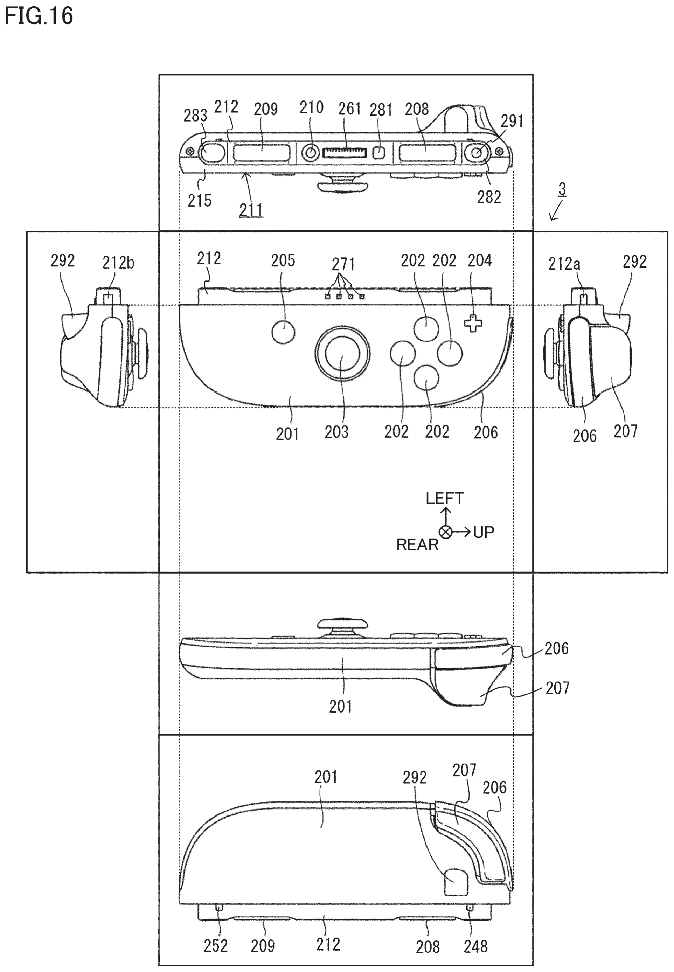

Next, referring to FIG. 16 to FIG. 30, the configuration of the controllers 3 and 4 will be described. FIG. 16 is a six-sided view showing an example of the configuration of the right controller 3. As shown in FIG. 16, the right controller 3 includes a housing 201. In the present embodiment, the housing 201 has a vertically-elongated shape whose length in the up-down direction is longer than the length in the left-right direction. The length of the housing 201 in the up-down direction is about the same as the length of the main body apparatus 2 in the up-down direction (see FIG. 1). The housing 201 includes a front surface, a rear surface, a right side surface, a left side surface, an upper surface, and a lower surface. In the present embodiment, the front surface of the housing 201 has a generally rectangular shape. In the present embodiment, the front surface of the housing 201 has a shape such that two corners on the right side are more rounded than the two corners on the left side. The housing 201 houses the substrate on which a communication control section 401 and a memory 402 to be described below are attached, the battery, etc.

Input sections that can be operated by the user are arranged at the front surface of the housing 201. Specifically, the right controller 3 includes four buttons 202. The four buttons 202 are arranged in a crisscross pattern at the front surface of the housing 201. The four buttons 202 are arranged at the front surface of the housing 201, in a portion that is on the upper side relative to the center of the front surface.

The right controller 3 includes an analog stick 203. The analog stick 203 is arranged at the front surface of the housing 201, more specifically, at the lower side relative to the four buttons 202. The analog stick 203 is arranged so that the center of the analog stick 203 is located at the lower side relative to the center of the front surface of the housing 201. The analog stick 203 is an example of the directional input section with which it is possible to input directions. In the present embodiment, the analog stick 203 is of a type that can be pressed down. That is, the user can make an input by pressing down the stick member of the analog stick 203. Thus, in the present embodiment, the analog stick 203 is an input section that allows for a directional input and a magnitude input based on the tilt direction and the tilt amount of the stick member, and also a push input on the stick member. Note that the analog stick 203 may be of a type that does not allow for a push input.

In the present embodiment, the four buttons 202 and the analog stick 203 are adjacent to each other. With respect to the left-right direction, the center of the analog stick 203 is located between the button located on the leftmost side and the button located on the rightmost side of the four buttons 202. The uppermost button and the lowermost button, of the four buttons 202, are arranged at the same position with respect to the left-right direction, and the analog stick 203 is located on a straight line that connects these buttons.

The right controller 3 has a "+" button (read "plus button") 204. The "+" button 204 is arranged at the front surface of the housing 201, more specifically in the upper left area of the front surface. The "+" button 204 is arranged at the upper side relative to the four buttons 202.

The right controller 3 includes a first function button 205. The first function button 205 is arranged at the front surface of the housing 201, more specifically in the lower left area of the front surface. The first function button 205 is arranged at the lower side relative to the analog stick 203. From the above, in the present embodiment, the "+" button 204, the four buttons 202, the analog stick 203, and the first function button 205 are arranged in this order from the top on the front surface of the right controller 3.

The right controller 3 includes a right front shoulder button 206 at the upper surface of the housing 201. In the present embodiment, the housing 201 has a shape whose border between the right side surface and the upper surface is rounded, and the key top of the right front shoulder button 206 is formed with a curved surface corresponding to the roundness of the housing 201.

The right controller 3 includes a right rear shoulder button 207 at the upper surface of the housing 201. The right rear shoulder button 207 is arranged at the rear side relative to the right front shoulder button 206. The key top of the right rear shoulder button 207 is formed with a curved surface corresponding to the roundness of the housing 201.

The right controller 3 includes the side surface upper button 208 and the side surface lower button 209 at the left side surface of the housing 201. As will be described in detail below, in the present embodiment, the left side surface of the housing 201 includes a base surface and a protruding surface that is located at a position protruding from the base surface. The side surface upper button 208 and the side surface lower button 209 are arranged at the protruding surface. The side surface upper button 208 is arranged at the protruding surface at the upper side relative to the center of the left side face of the housing 201. The side surface lower button 209 is arranged at the protruding surface at the lower side relative to the center of the left side surface of the housing 201. Note that the details of the side surface upper button 208 and the side surface lower button 209 will be described below.

The right front shoulder button 206 and the right rear shoulder button 207 are used, for example, when the right controller 3 is attached to the main body apparatus 2 (see FIG. 3), and when the right controller 3 is detached from the main body apparatus 2 and held by one hand of the user (see FIG. 5). On the other hand, the side surface upper button 208 and the side surface lower button 209 are used, for example, when the right controller 3 is detached from the main body apparatus 2 and held by both hands of the user (see FIG. 4).

The right controller 3 includes a second function button 210. The second function button 210 is arranged at the left side surface of the housing 201 (more specifically, the protruding surface).

The buttons 202 and 204 to 210 of the right controller 3 described above are used by the user to give instructions to the main body apparatus 2. For example, the first function button 205 may be used to give an instruction to display the menu screen of the main body apparatus 2 during execution of an application on the main body apparatus 2. The second function button 210 may also be used, for example, to instruct a setting process related to wireless communication between the right controller 3 and the main body apparatus 2 (e.g., the pairing setting process), or to instruct a reset process of the right controller 3. The other buttons 202, 204, and 206 to 209 may be used to give instructions in accordance with various programs (e.g., the OS program and an application program) executed on the main body apparatus 2.

The input sections described above are an example, and there is no limitation on the shape, number, and location of the input sections of the right controller 3. The right controller 3 does not need to include all of the input sections described above, and may also include input means different from the input sections described above. For example, the right controller 3 may include an input section such as a touchpad or a pressure sensor. For example, the right controller 3 may include, instead of or in addition to the analog stick 203, a directional pad, four buttons arranged in a crisscross pattern, a slide stick, etc., as directional input sections.

Next, the details of the configuration of the left side surface, which is the side surface of the right controller 3 that is attached to the main body apparatus 2, will be described. As will be described below, the right controller 3 includes elements on the left side surface for attaching the right controller 3 to the main body apparatus 2.

### [3-1. Bump portion]

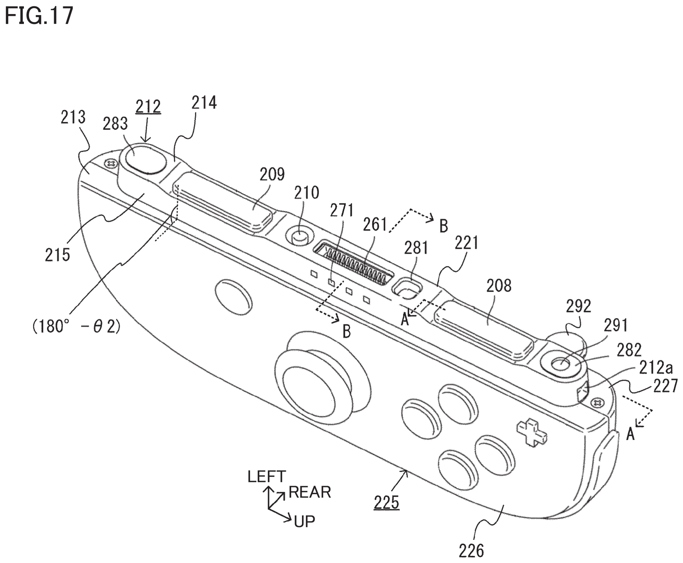

FIG. 17 is a perspective view showing an example of the configuration of the right controller 3. As shown in FIG. 16, the right controller 3 includes a bump portion 212 on a left side surface 211 of the housing 201. The bump portion 212 can be said to be an example of the insertion portion that is sized so that the bump portion 212 can be inserted into the space surrounded by the wall portion 63 of the main body apparatus 2 (e.g., the space inside the groove 2a). As shown in FIG. 17, the bump portion 212 protrudes from a base surface 213 on the left side surface of the housing 201. The bump portion 212 includes a protruding surface 214 and an outer surface 215. The protruding surface 214 is a surface that is substantially in the same orientation as the base surface 213 and is at a position protruding from the base surface 213 (e.g., at a position on the left side relative to the base surface 213). The protruding surface 214 can be said to be an example of the opposing surface that opposes the bottom portion of the groove 2a of the main body apparatus 2 with the bump portion 212 inserted into the space described above of the main body apparatus 2. As will be described in detail below, the protruding surface 214 is uneven and includes a plurality of surfaces with different heights (e.g., lengths in the left-right direction) from the base surface 213. Note that the protruding surface 214 may be a flat surface. The bump portion 212 is arranged at a position surrounded by the base surface 213. That is, the base surface 213 is arranged in a loop shape around the bump portion 212 as seen from the left side. The outer surface 215 is a surface connecting the base surface 213 and the protruding surface 214, and extends in the direction of protruding from the base surface 213 (e.g., leftward). The bump portion 212 extends along the longitudinal direction of the left side surface 211 (i.e., the up-down direction).

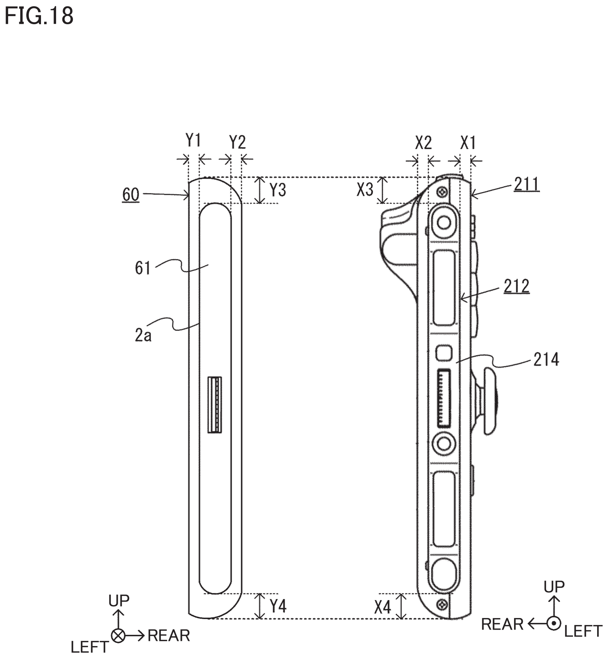

FIG. 18 is a view showing an example of the configuration of the right side surface of the main body apparatus 2 and the left side surface of the right controller 3. As shown in FIG. 18, the bump portion 212 of the left side surface 211 of the right controller 3 is shaped and sized to match with the groove 2a formed in the right side surface 60 of the main body apparatus 2. That is, the shape of the bump portion 212 is configured to match the shape of the groove 2a of the main body apparatus 2. Where the base surface 61 of the right side surface 60 of the main body apparatus 2 is projected from the left side on the left side surface 211 of the right controller 3, the bump portion 212 is arranged so that the protruding surface 214 is located within the projection area where the base surface 61 is projected on the left side surface 211. In the present embodiment, the bump portion 212 is arranged so as to extend along the longitudinal direction of the left side surface 211 (e.g., the up-down direction) within the projection area. In the present embodiment, the shape and size of the protruding surface 214 of the bump portion 212 as the right controller 3 is seen from the left side are substantially the same as the shape and size of the base surface 61 as the main body apparatus 2 is seen from the right side. Note that, in other embodiments, the shape and size of the bump portion 212 do not need to be the same as the shape and size of the groove 2a of the main body apparatus 2. For example, the protruding surface 214 does not need to occupy the entire projection area, and the bump portion 212 may be arranged so that the protruding surface 214 partially occupies the projection area.

As described above, in the present embodiment, the bump portion 212 is configured to match with the groove 2a of the main body apparatus 2 (specifically, match from the front direction of the groove 2a). From another perspective, the protruding surface 214 and the outer surface 215 of the bump portion 212 of the right controller 3 match in shape with the bottom surface (e.g., the surface of the cover 65) and the inner surface (e.g., the inner surface 64 of the wall portion 63) of the groove 2a of the main body apparatus 2. Therefore, with the right controller 3 attached to the main body apparatus 2, the bump portion 212 matches with the groove 2a of the main body apparatus 2, thereby suppressing the right controller 3 from shifting in the up-down direction and the front-rear direction. For example, even if a force is applied to the right controller 3 in the front-rear direction or the up-down direction by the user performing operation inputs with the right controller 3 attached to the main body apparatus 2, the right controller 3 is suppressed from shifting its position significantly relative to the main body apparatus 2.

Note that "the bump portion matches with the groove" means that the bump portion is positioned with respect to the direction perpendicular to the insertion direction, with the bump portion inserted in the groove. Note however that the positioning of the bump portion by means of the groove does not mean to be limited to the state where the bump portion cannot move in a strict sense with respect to the direction perpendicular to the insertion direction. For example, the size of the bump portion and the size of the groove do not need to be strictly the same, and the bump portion may rattle when matched with the groove. For example, there may partially be a gap therebetween with the bump portion matched with the groove. Thus, the shape of the bump portion and the shape of the groove do not need to be the same. For example, in the present embodiment, the bump portion 212 may have a shape such that the tip of the semicircular portion at the end portion in the up-down direction is removed. Even with such a shape, the bump portion 212 is positioned with respect to the direction perpendicular to the insertion direction when the bump portion 212 is inserted in the groove 2a of the main body apparatus portion 2, so it can be said that the bump portion "matches with the groove". In the present embodiment, the right controller 3 is attracted to the main body apparatus 2 by the magnetic force, so that even if the position of the right controller 3 is slightly shifted with respect to the direction perpendicular to the insertion direction, the right controller 3 can maintain the attachment to the main body apparatus 2.

In the present embodiment, the maximum height of the protruding surface 214 is greater than the depth of the groove 2a of the main body apparatus 2. Here, the maximum height of the protruding surface 214 is the height at one of the position of the protruding surface 214 and the position of the components arranged on the protruding surface 214 (but excluding the side surface upper button 208 and the side surface lower button 209 that are movable) at which the height from the base surface 213 (e.g., the length in the left-right direction) is at maximum. The depth of the groove 2a of the main body apparatus 2 is the length from the protruding surface 62 of the wall portion 63 of the main body apparatus 2 to the cover 65 with respect to the left-right direction. With the right controller 3 attached to the main body apparatus 2, some of the components arranged on the protruding surface 214 contact the cover 65 on the base surface 61 of the main body apparatus 2, and the protruding surface 62 of the wall portion 63 of the main body apparatus 2 does not contact the base surface 213 of the right controller 3. Thus, "the bump portion matches with the groove" does not mean to be limited to the state where the entire bump portion is completely located inside the groove.

As shown in FIG. 18, the positional relationship between the left side surface 211 and the protruding surface 214 as the right controller 3 is seen from the left side is substantially the same as the positional relationship between the right side surface 60 and the base surface 61 as the main body apparatus 2 is seen from the right side. That is, with respect to the front-rear direction, the length X1 from the front end of the left side surface 211 of the right controller 3 to the front end of the protruding surface 214 is substantially the same as the length Y1 from the front end of the right side surface 60 of the main body apparatus 2 to the front end of the base surface 61, and the length X2 from the rear end of the left side surface 211 of the right controller 3 to the rear end of the protruding surface 214 is substantially the same as the length Y2 from the rear end of the right side surface 60 of the main body apparatus 2 to the rear end of the base surface 61. With respect to the up-down direction, the length X3 from the upper end of the left side surface 211 of the right controller 3 to the upper end of the protruding surface 214 is substantially the same as the length Y3 from the upper end of the right side surface 60 of the main body apparatus 2 to the upper end of the base surface 61, and the length X4 from the lower end of the left side surface 211 of the right controller 3 to the lower end of the protruding surface 214 is substantially the same as the length Y4 from the lower end of the right side surface 60 of the main body apparatus 2 to the lower end of the base surface 61. According to the above, with the right controller 3 attached to the main body apparatus 2, the front surface, the rear surface, the upper surface, and the lower surface of the main body apparatus 2 are aligned with the front surface, the rear surface, the upper surface, and the lower surface of the right controller 3, respectively. This gives an integrated appearance to the main body apparatus 2 and the right controller 3. Since there is no (or substantially no) gap at the border between the main body apparatus 2 and the right controller 3, it is possible to reduce the possibility of other objects other than the game system 1 catching on the gap and exerting a force in the direction that urges the right controller 3 to come off from the main body apparatus 2.

As described above, in the present embodiment, the bump portion 212 has a shape that matches with the groove 2a of the main body apparatus 2. Specifically, as shown in FIG. 16 to FIG. 18, the bump portion 212 extends along the longitudinal direction of the left side surface 211 (i.e., the up-down direction). That is, the bump portion 212 has a shape elongated in the up-down direction. According to the above, it is possible to increase the proportion of the area of the bump portion 212 to the entire left side surface 211 of the right controller 3. This makes it easier for the user to perform an operation of inserting the bump portion 212 of the right controller 3 into the groove 2a of the main body apparatus 2 when attaching the right controller 3 to the main body apparatus 2. By increasing the volume of the bump portion 212, it is possible to make it easier to arrange many parts (e.g., the buttons 208 to 210 described above and the connector described below, etc.) in the bump portion 212.

For example, the length of the bump portion 212 in the up-down direction (e.g., the length of the bump portion 212 in the longitudinal direction) may be equal to or greater than twice or five times the length of the bump portion 212 in the front-rear direction. The length of the bump portion 212 in the up-down direction may be less than or equal to 25 times or 15 times the length of the bump portion 212 in the front-rear direction. The length of the bump portion 212 in the up-down direction may be equal to or greater than 50% of the length of the left side surface 211 in the up-down direction, or equal to or greater than 70% of the length of the left side surface 211 in the up-down direction. The length of the bump portion 212 in the front-rear direction may be equal to or greater than 50% of the length of the left side surface 211 in the front-rear direction, or equal to or greater than 70% of the length of the left side surface 211 in the front-rear direction.

As shown in FIG. 16 to FIG. 18, the bump portion 212 has a shape in which the end portions in the longitudinal direction are rounded. In other words, the portions of the bump portion 212 including the end portions with respect to the up-down direction are shaped so that the width (i.e., its length with respect to the front-rear direction) gradually decreases in the direction toward the tip. From another perspective, the protruding surface 214 has a shape elongated in the up-down direction, and the portions thereof including the end portions with respect to the up-down direction are shaped so that the width gradually decreases in the direction toward the tip. According to the above, when attaching the right controller 3 to the main body apparatus 2, the user can easily attach the right controller 3 to the main body apparatus 2 by inserting the bump portion 212 into the groove 2a of the main body apparatus 2 from the end portion with the decreased width. Note that, in other embodiments, there is no limitation on the shape of the bump portion 212. For example, the bump portion 212 may include a portion whose width gradually increases in the direction toward the end portion in the longitudinal direction. Only one of the end portions of the bump portion 212 in the longitudinal direction may be rounded. In the present embodiment, the groove 2a of the main body apparatus 2 is shaped so that the end portions thereof in the longitudinal direction are rounded, and the end portions of the bump portion 212 are rounded corresponding to this shape. Note however that even if the groove 2a of the main body apparatus 2 is shaped so that the end portions in the longitudinal direction are not rounded, the end portions of the bump portion 212 may be rounded.

In the present embodiment, the bump portion 212 is shaped so that the cross-sectional area along a cross section perpendicular to the left-right direction gradually decreases in the direction from the base surface 213 toward the protruding surface 214. From another perspective, the outer surface 215 is formed so that the outer surface 215 is visible as the bump portion 212 is seen from the side of the protruding surface 214 (e.g., the left side). Specifically, the inclination angle θ2 (see FIG. 17) of the outer surface 215 relative to the base surface 213 is an angle smaller than 90° (more specifically, 80°<θ2<90°). This inclination of the outer surface 215 makes it easier for the user to perform an operation of inserting the bump portion 212 of the right controller 3 into the groove 2a of the main body apparatus 2. Note that, in other embodiments, the outer surface 215 may be substantially perpendicular to the base surface 213 and the protruding surface 214.

Furthermore, in the present embodiment, the inclination angle θ1 of the inner surface 64 of the wall portion 63 relative to the base surface 61 in the main body apparatus 2 and the inclination angle θ2 of the outer surface 215 of the bump portion 212 relative to the base surface 213 in the right controller 3 are of different magnitudes. Specifically, the inclination angle θ2 of the outer surface 215 of the bump portion 212 relative to the base surface 213 is greater (i.e., the inclination is steeper) than the inclination angle θ1 of the inner surface 64 of the wall portion 63 relative to the base surface 61. According to this, there is a clearance when matching the bump portion 212 with the groove 2a of the main body apparatus 2, so that there is more margin in the angle of approach when attaching the right controller 3 to the main body apparatus 2, thereby making the attachment easier. Note that, in other embodiments, the inclination angle θ2 of the outer surface 215 of the bump portion 212 relative to the base surface 213 may be the same as the inclination angle θ1 of the inner surface 64 of the wall portion 63 relative to the base surface 61. With the right controller 3 attached to the main body apparatus 2, the inner surface 64 of the wall portion 63 of the main body apparatus 2 and the outer surface 215 of the bump portion 212 of the right controller 3 may not be in contact with each other, may be partially in contact with each other, or may be entirely in contact with each other.

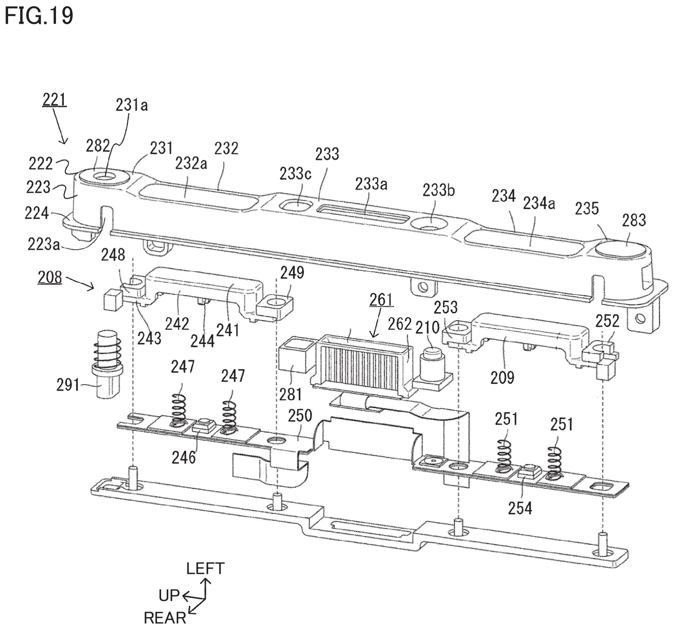

FIG. 19 is an exploded perspective view showing an example of the configuration of the bump portion 212 of the right controller 3. As shown in FIG. 19, the right controller 3 includes a bump portion housing 221. The bump portion housing 221 is a part of the housing 201, and is a housing of the bump portion 212. The bump portion housing 221 has a first portion 222 including the protruding surface 214, and a second portion 223 including the outer surface 215. The first portion 222 has a plate-like shape extending in the up-down direction and the front-rear direction. The second portion 223 has a shape extending in the right direction from the periphery of the first portion 222. The second portion 223 has a loop shape extending along the periphery of the first portion 222. The bump portion housing 221 has a third portion 224 extending from the right end of the second portion 223 to the outer side of the loop-shaped second portion 223.

As shown in FIG. 17, the right controller 3 includes a main housing 225. The main housing 225 includes a front surface, a rear surface, a right surface, an upper surface, and a lower surface of the right controller 3, and the base surface 213 on the left side surface. In the present embodiment, the main housing 225 has a front housing 226 that forms the front side portion of the main housing 225, and a rear housing 227 that forms the rear side portion. The front housing 226 and the rear housing 227 are secured together, for example, by screwing.

On the left side surface of the main housing 225, an opening is formed in an area corresponding to the bump portion 212. The bump portion housing 221 is attached to the main housing 225 so that the first portion 222 and the second portion 223 protrude from the opening outward of the left side surface of the main housing 225 and that the third portion 224 is located inside the main housing 225. The portion of the bump portion housing 221 that is exposed through the opening is the bump portion 212. Note that the third portion 224 has a shape extending to the outer side of the loop-shaped second portion 223, and the third portion 224 cannot pass through the opening. From another perspective, the opening formed in the left side surface of the main housing 225 has a shape such that the first portion 222 and the second portion 223 can pass therethrough, but the third portion 224 cannot pass therethrough. Therefore, with the third portion 224, it is possible to suppress the bump portion housing 221 from slipping through the opening in the main housing.

As described above, in the present embodiment, the housing of the right controller 3 is comprised of the bump portion housing 221 forming the bump portion 212, and the main housing 225 forming the front surface of the right controller 3, etc., and the main housing 225 is comprised of the front housing 226 and the rear housing 227. Note however that, in other embodiments, the housing of the right controller 3 may be comprised of any number of parts, e.g., one part or four or more parts. In the present embodiment, the housing of the bump portion 212 is comprised of one part (e.g., the bump portion housing 221), but in other embodiments, the bump portion 212 may be comprised of a plurality of parts.

### [3-2. Side surface upper button and side surface lower button]

As shown in FIG. 17, the side surface upper button 208 and the side surface lower button 209 are arranged at the protruding surface 214. As shown in FIG. 19, in the present embodiment, the protruding surface 214 includes five surfaces of a first surface 231, a second surface 232, a third surface 233, a fourth surface 234, and a fifth surface 235, arranged in this order from the upper side. The side surface upper button 208 is arranged on the second surface 232, and the side surface lower button 209 is arranged on the fourth surface 234. Of the first to fifth surfaces 231 to 235, the second surface 232 and the fourth surface 234 are the lowest in height (e.g., the length in the left-right direction) from the base surface 213. In the present embodiment, the height from the base surface 213 to the second surface 232 is the same as the height from the base surface 213 to the fourth surface 234, but they may be different.

Note that, in the present embodiment, the first to fifth surfaces 231 to 235 are contiguous by being connected by slopes, but in other embodiments, the first to fifth surfaces 231 to 235 do not need to be connected by slopes. That is, the first to fifth surfaces 231 to 235 may be connected by a wall surface that extends in a direction perpendicular to the base surface 213. In the present embodiment, the protruding surface 214 includes a plurality (specifically, five) of surfaces with different heights from the base surface 213, but in other embodiments, the protruding surface 214 may be comprised of a single flat surface.

As shown in FIG. 19, a through hole 232a is formed in the second surface 232. The side surface upper button 208 is arranged to be exposed through the through hole 232a. A through hole 234a is formed in the fourth side 234. The side surface lower button 209 is arranged to be exposed through the through hole 234a.

In the present embodiment, the second surface 232 and the fourth surface 234, on which the buttons 208 and 209 are arranged, are longer in the up-down direction than the first surface 231 and the fifth surface 235, which are located on the outer side with respect to the up-down direction relative to these surfaces 232 and 234 (see FIG. 19). Here, when the user holds the right controller 3 with both hands, for example, the index finger of the right hand of the user will touch the side surface upper button 208 on the second surface 232 across the first surface 231, and the index finger of the left hand will touch the side surface lower button 209 on the fourth surface 234 across the fifth surface 235 (see FIG. 4). Therefore, by making the second surface 232 and the fourth surface 234 longer than the first surface 231 and the fifth surface 235 as described above, the fingers of the user can reach the side surface upper button 208 or the side surface lower button 209 with ease, and the size of the side surface upper button 208 or the side surface lower button 209 can be increased, thereby making it easier for the user to operate the buttons 208 and 209.

In the present embodiment, the second surface 232 and the fourth surface 234 extend from the front end to the rear end of the protruding surface 214 with respect to the front-rear direction (see FIG. 19). According to this, the protruding surface 214 is less likely to get in the way when the user operates the buttons 208 and 209, thereby making it easier for the user to operate the buttons 208 and 209.

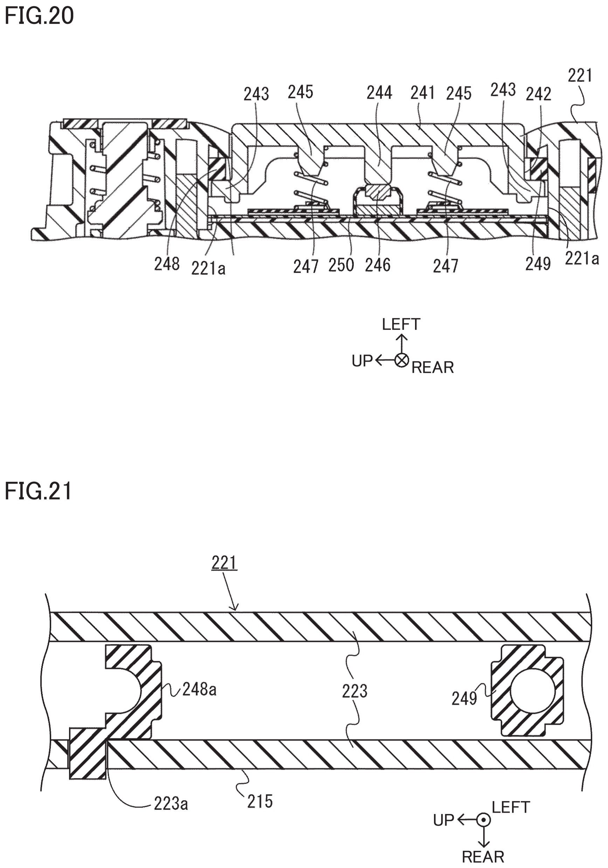

The detailed configuration of the side surface upper button 208 will be described below. FIG. 20 is a cross-sectional view showing an example of the configuration of the right controller 3 at the position of the side surface upper button 208. FIG. 20 is a cross-sectional view taken along a cross section perpendicular to the front-rear direction (specifically, a cross-sectional view taken along line A-A shown in FIG. 17). As shown in FIG. 19 and FIG. 20, the side surface upper button 208 has an operation surface portion 241, a wall portion 242, a flange portion 243, a first projecting portion 244, and a second projecting portion 245.

The operation surface portion 241 has a plate-like shape and is arranged in an orientation extending along the up-down direction and the front-rear direction. The operation surface portion 241 is a portion of the side surface upper button 208 that includes the operation surface. The operation surface is a surface that is operated by the user, specifically a surface that is exposed through the through hole 232a of the second side 232 of the protruding surface 214 and is facing the left side. In the present embodiment, the operation surface portion 241 has a rectangular plate-like shape. The operation surface portion 241 is arranged in such an orientation that the longitudinal direction of the operation surface portion 241 extends along the up-down direction. From another perspective, the longitudinal direction of the operation surface coincides with the longitudinal direction of the bump portion 212. The length of the operation surface in the up-down direction may be equal to or greater than 10% or 20% of the length of the protruding surface 214 in the up-down direction. The length of the operation surface in the up-down direction may be equal to or greater than 10% or 20% of the length of the left side surface of the right controller 3 in the up-down direction.

As shown in FIG. 19 and FIG. 20, the wall portion 242 extends from the outer edge of the surface of the operation surface portion 241 that is facing the inner side of the bump portion housing 221 in the inward direction of the bump portion housing 221. Note that the direction from the opening 232a toward the inner side of the bump portion housing 221 (e.g., the right direction with respect to the orientation of the game system 1) will be referred to as the "the inward direction of the bump portion housing 221". Here, the inward direction of the bump portion housing 221 is the direction from the through hole 232a toward the inner side of the bump portion housing 221. The wall portion 242 is loop-shaped extending along the periphery of the operation surface portion 241. The wall portion 242 is comprised of two first portions extending from the two long sides of the operation surface portion 241 and two second portions extending from the two short sides of the operation surface portion 241.

As shown in FIG. 19 and FIG. 20, a flange portion 243 extends from the end portions of the two second portions of the wall portion 242 that are opposite to the end portions that connect to the operation surface portion 241. The flange portion 243 extends in the outward direction of the loop-shaped wall portion 242. That is, a flange portion 243 extending from the lower second portion of the wall portion 242 extends downward, and the flange portion 243 extending from the upper second portion of the wall portion 242 extends upward.

Note that the side surface upper button 208 is sized so that the operation surface portion 241 passes through the through hole 232a in the protruding surface 214, and the length of the entire side surface upper button 208 including the flange portion 243 in the up-down direction is longer than the length of the through hole 232a in the up-down direction (see FIG. 20). Thus, it is possible to expose the operation surface portion 241 through the through hole 232a while suppressing the side surface upper button 208 from slipping out of the through hole 232a.

The first projecting portion 244 has a rod-like shape and extends from the back-side surface of the operation surface of the operation surface portion 241 in the inward direction of the bump portion housing 221 (see FIG. 20). Here, as shown in FIG. 19 and FIG. 20, the right controller 3 includes a tact switch 246. The tact switch 246 has a tip portion formed by a leaf spring, and is arranged so that the tip portion is facing the outer side of the bump portion housing 221 (e.g., the left direction with respect to the orientation of the game system 1). Inside the bump portion housing 221, the tact switch 246 is arranged on the right side relative to the side surface upper button 208. Specifically, the tact switch 246 is arranged so that the tip of the first projecting portion 244 (specifically, the tip on the right side) is in contact with the tip portion of the tact switch 246. As will be described in detail below, when the side surface upper button 208 is pressed, the tact switch 246 biases the side surface upper button 208 in the direction opposite to the press-down direction. That is, the tact switch 246 can be said to be an example of the biasing portion that biases the side surface upper button 208 in the direction opposite to the press-down direction. As shown in FIG. 19 and FIG. 20, the right controller 3 also includes a flexible printed circuit (hereinafter referred to as "FPC") 250, for example. The FPC 250 is arranged in the bump portion housing 221, and the tact switch 246 is attached on the FPC 250. Note that the electronic circuit included in the right controller 3 may be any type of substrate other than an FPC. For example, the electronic circuit of the right controller 3 may be a rigid substrate or other commonly used substrate.

The second projecting portion 245 has a rod-like shape and extends from the back-side surface of the operation surface portion 241 in the inward direction of the bump portion housing 221 (see FIG. 20). In the present embodiment, the side surface upper button 208 has two second projecting portions 245, and the two second projecting portions 245 are arranged so as to sandwich the first projecting portion 244. Specifically, one second projecting portion 245 is arranged on the upper side relative to the first projecting portion 244, and the other second projecting portion 245 is arranged on the lower side relative to the first projecting portion 244.

As shown in FIG. 19 and FIG. 20, the right controller 3 includes two coil springs 247. Each coil spring 247 is arranged so that one end portion is attached on the FPC 250 and the other end portion is in contact with the operation surface portion 241. The lower end of each coil spring 247 is secured to the FPC 250, and the upper end of each coil spring 247 is secured to the side surface upper button 208. Therefore, when the side surface upper button 208 is moved in such a direction that the coil spring 247 is longer than its natural length, the side surface upper button 208 is biased by the coil spring 247 in the opposite direction, and when the side surface upper button 208 is moved in such a direction that the coil spring 247 is shorter than its natural length, the side surface upper button 208 is biased by the coil spring 247 in the opposite direction. Each coil spring 247 is arranged so that the second projecting portion 245 is inserted in an area inside the coil spring 247. Thus, it is possible to suppress the coil springs 247 from being misaligned relative to the operation surface portion 241.

As shown in FIG. 19 and FIG. 20, the right controller 3 includes a first elastic deformation member 248 and a second elastic deformation member 249. The elastic deformation members 248 and 249 are arranged between a surface of the flange portion 243 that is facing the outer side of the bump portion housing 221 (e.g., the left side with respect to the orientation of the game system 1) and a portion of the inner wall of the bump portion housing 221 that is opposing that surface. Specifically, the first elastic deformation member 248 is arranged between a portion of the flange portion 243 that is located on the upper side of the operation surface portion 241 and the inner wall of the bump portion housing 221, and the second elastic deformation member 249 is arranged between a portion of the flange portion 243 that is located on the lower side of the operation surface portion 241 and the inner wall of the bump portion housing 221. The elastic deformation members 248 and 249 are attached to the inner wall of the bump portion housing 221, for example, by being bonded by an adhesive. There is no limitation on the material of the elastic deformation members 248 and 249, but it may be rubber, for example. As described above, the elastic deformation members 248 and 249 are elastically deformed in the state where the elastic deformation members 248 and 249 are pressed by the flange portion 243 to bias the side surface upper button 208 by the restoring force in the inward direction of the bump portion housing 221 (e.g., the right side with respect to the orientation of the game system 1). Note that, in the present embodiment, the elastic deformation members 248 and 249 are not secured to the flange portion 243. Note however that, in other embodiments, the elastic deformation members 248 and 249 and the flange portion 243 may be secured to each other by bonding together by an adhesive, for example.

In the present embodiment, the elastic deformation members 248 and 249 are arranged while being spaced apart from the wall portion 242 (see FIG. 20). In the present embodiment, the bump portion housing 221 includes an inner surface 221a that extends from a position near the opening of the through hole 232a in the inward direction of the bump portion housing 221 (see FIG. 20). The elastic deformation members 248 and 249 are arranged between the inner surface 221a and the wall portion 242. The elastic deformation members 248 and 249 are arranged so that the distance between each elastic deformation member and the wall portion 242 is greater than the distance between the elastic deformation member and the inner surface 221a. Here, in the state of being compressed in the left-right direction by the flange portion 243, the elastic deformation members 248 and 249 elastically deform to increase the length thereof in the up-down direction perpendicular to the left-right direction. At this time, if the elastic deformation members 248 and 249 contact the wall portion 242, the movement of the side surface upper button 208 may be hindered. In contrast, by arranging the elastic deformation members 248 and 249 as described above, it is possible to reduce the possibility of the elastic deformation members 248 and 249 contacting the wall portion 242 in the state described above, and to suppress the possibility that the movement of the side surface upper button 208 is hindered.

In the present embodiment, in the state where the side surface upper button 208 is at a reference position, the coil springs 247 bias the side surface upper button 208 in the outward direction of the bump portion housing 221, and the elastic deformation members 248 and 249 bias the side surface upper button 208 in the inward direction of the bump portion housing 221. Here, the reference position of the side surface upper button 208 is a position where the side surface upper button 208 is not pressed and is not under attraction by the magnetic force (e.g., where the right controller 3 is not attached to the main body apparatus 2). The reference position is a position where the biasing force from the coil springs 247 and the biasing force from the elastic deformation members 248 and 249 are balanced for the side surface upper button 208. Note that, at the reference position, the side surface upper button 208 may be biased in the outward direction of the bump portion housing 221 by the tact switch 246 alone, or may be biased in the outward direction of the bump portion housing 221 by the tact switch 246 and the coil springs 247. In other embodiments, the side surface upper button 208 may not be biased by the coil springs 247 and the elastic deformation members 248 and 249 when the side surface upper button 208 is at the reference position, while the side surface upper button 208 may receive the biasing force from either of the coil springs 247 and the elastic deformation members 248 and 249 when moved from the reference position.

From the above, in the present embodiment, the side surface upper button 208 is configured to be movable from the reference position in the direction in which the operation surface is pressed down (i.e., the right direction), and also movable in the opposite direction. As will be described in detail below, with such a configuration, when the right controller 3 is attached to the main body apparatus 2, the side surface upper button 208 can be moved to a position closer to the upper right magnetic member 51 of the main body apparatus 2, and it is possible to increase the attraction to be applied to the right controller 3 by the magnetic force of the upper right magnetic member 51. On the other hand, when the right controller 3 is detached from the main body apparatus 2, it is possible to suppress the amount of protrusion of the side surface upper button 208.

Note that, in other embodiments, the side surface upper button 208 may be configured so as not to move in the direction opposite to the direction in which the operation surface is pressed. For example, the right controller 3 does not need to include the elastic deformation members 248 and 249, and in the state where the side surface upper button 208 is at the reference position, the outward-facing surface of the flange portion 243 of the side surface upper button 208 may directly contact the inner wall of the bump portion housing 221.

In the present embodiment, the reference position is a position where the operation surface of the side surface upper button 208 does not protrude relative to the first surface 231 and the fifth surface 235 of the protruding surface 214. That is, the reference position is a position where the operation surface of the side surface upper button 208 is located on the right side relative to the first surface 231 and the fifth surface 235 of the protruding surface 214 with respect to the left-right direction. The reference position can also be said to be a position where the operation surface does not protrude relative to mouse soles to be described below, which are arranged on the first surface 231 and the fifth surface 235. According to this, when the right controller 3 is detached from the main body apparatus 2 (e.g., when the protruding surface 214 of the right controller 3 is placed so as to oppose a work surface), the operation surface of the side surface upper button 208 is less likely to contact other objects. More strictly, the reference position is a position where the operation surface of the side surface upper button 208 does not protrude relative to the third surface 233 of the protruding surface 214. That is, the reference position is a position where the operation surface of the side surface upper button 208 is on the right side relative to the third surface 233 of the protruding surface 214 with respect to the left-right direction. According to this, when the right controller 3 is detached from the main body apparatus 2, it is possible to further reduce the possibility of the operation surface of the side surface upper button 208 contacting other objects.

When the operation surface portion 241 is pressed down in the inward direction of the bump portion housing 221 while the side surface upper button 208 is at the reference position, the side surface upper button 208 moves in the inward direction from the reference position, and the first projecting portion 244 presses down the tip portion of the tact switch 246. Thus, the tip portion of the tact switch 246 deforms, thereby turning ON the switch inside the tact switch 246. By detecting the switching ON of the tact switch 246, the game system 1 can detect the pressing of the side surface upper button 208. Note that when the side surface upper button 208 is no longer pressed down, the side surface upper button 208 moves to the reference position because of the biasing force from the coil springs 247 and the restoration of the tact switch 246.

Note that there is no limitation on the configuration for detecting the pressing down of the side surface upper button 208. For example, in other embodiments, the side surface upper button 208, being at the reference position may be separated from the tact switch 246. The right controller 3 may include a rubber switch or other type of switch in place of the tact switch 246.

In the present embodiment, the side surface upper button 208 is made of a material that is attracted to the upper right magnetic member 51. As an example, in the present embodiment, the side surface upper button 208 is made of a ferromagnetic material, and is made of iron as an example. For example, the side surface upper button 208 may be made of a steel plate cold commercial (SPCC). For example, the side surface upper button 208 may be made of iron with silicon and/or nickel added thereto.

As will be described in detail below, in the present embodiment, the side surface upper button 208 is arranged at a position opposing the upper right magnetic member 51 with the cover 65 being interposed when the right controller 3 is attached to the main body apparatus 2. Therefore, the side surface upper button 208 is attracted to the upper right magnetic member 51, thereby maintaining the state where the right controller 3 is attached to the main body apparatus 2. That is, in the present embodiment, the side surface upper button 208, in addition to functioning as an input section, also functions as a mechanism for attaching (specifically, maintaining the attached state of) the right controller 3 to the main body apparatus 2. Thus, it is possible to reduce the number of parts of the right controller 3. Since the number of parts to be arranged in the bump portion housing 221 can be reduced, it is possible to improve the degree of freedom of design regarding the position and size of the parts to be arranged in the bump portion housing 221. For example, it is easier to improve the operability of the right controller 3 by increasing the size of the operation surface of the side surface upper button 208. For example, it also becomes easier to freely arrange other parts other than the side surface upper button 208.

In the present embodiment, the entire side surface upper button 208 is ferromagnetic. Here, in other embodiments, only a part of the side surface upper button 208 may be ferromagnetic. For example, the portion of the side surface upper button 208 that is exposed from the protruding surface 214 may be made of a ferromagnetic substance, or the portion of the side surface upper button 208 that forms the operation surface may be made of a ferromagnetic substance. As an example, the side surface upper button 208 may be a single part of a ferromagnetic substance molded with resin, or may be the surface of the ferromagnetic substance coated (e.g., plated) with a metal.

In the present embodiment, the parts 241 to 245 forming the side surface upper button 208 are a single part, but in other embodiments, the side surface upper button 208 may be comprised of a plurality of parts. When the side surface upper button 208 is comprised of a plurality of parts, the parts may be ferromagnetic, or at least some of the plurality of parts may be ferromagnetic. The plurality of parts are secured to each other by, for example, bonding or caulking, and are movable as a single unit. For example, some of the plurality of parts that are exposed from the protruding surface 214 may be ferromagnetic, or some of the plurality of parts that form the operation surface may be ferromagnetic. As another example, a part made of a ferromagnetic material may be arranged on the back side of parts that are exposed from the protruding surface 214 or parts that form the operation surface, so that these two parts move as an integral part. Note that, in the other example described above, the parts that are exposed from the protruding surface 214 and the parts that form the operation surface do not need to be ferromagnetic.

The operation surface of the side surface upper button 208 may be covered with a sheet, etc., or may be coated with a coating agent. Note that the sheet, etc., and the coating agent do not need to be magnetic.

In any of the examples described above, since the side surface upper button 208 includes a ferromagnetic material, the side surface upper button 208 is attracted to the upper right magnetic member 51 when the right controller 3 is attached to the main body apparatus 2, and it is therefore possible to maintain the attachment of the right controller 3 to the main body apparatus 2.

In the present embodiment, the side surface upper button 208 includes a soft magnetic material. For example, if the side surface upper button 208 is made of a soft magnetic material and does not include a hard magnetic material (e.g., a magnet), the side surface upper button 208 itself will not pull objects with the property of being attracted to a magnet, and it is therefore possible to suppress other objects from being inadvertently attracted to the right controller 3 when the right controller 3 is detached from the main body apparatus 2.

Note that, as will be described in detail below, in other embodiments, a magnet may be used instead of a soft magnetic material, or together with a soft magnetic material, as the material of the side surface upper button 208 for generating the attracting force by the magnetic force with the main body apparatus 2.

As described above, in the present embodiment, the side surface upper button 208 is made of iron, etc., and is conductive. Therefore, there is a risk that the side surface upper button 208 may contact an electrically charged object, thereby changing the potential of the side surface upper button 208, thus affecting the electronic parts inside the housing 201 of the right controller 3. Therefore, in the present embodiment, the side surface upper button 208 is connected to the ground potential of the electronic circuit in the right controller 3, so that even if the side surface upper button 208 is touched by an electrically charged object, it is possible to suppress the possibility of affecting the electronic parts. Note that, in other embodiments, the side surface upper button 208 does not need to be connected to the ground potential of the electronic circuit in the right controller 3. Any one or all of the side surface buttons (e.g., the side surface upper button and the side surface lower button) of the right controller 3 and the left controller 4 may be connected to the ground potential of the ground of the controller.

Specifically, in the present embodiment, a ground electrode is provided on the FPC 250, and the coil springs 247 are electrically connected to the ground electrode. There is no limitation on the method of connecting the coil springs 247 and the ground electrode but, for example, the coil springs 247 may be secured to the ground electrode by soldering. The coil springs 247 are made of a conductive material such as iron, for example. Therefore, the side surface upper button 208, which contacts the coil springs 247 at the operation surface portion 241 and the second projecting portion 245, is electrically connected to the ground electrode via the coil springs 247. Thus, in the present embodiment, the coil springs 247 function as ground connection portions that connect the side surface upper button 208 to the ground electrode. Note that, in the present embodiment, the coil springs 247 have the function of biasing the side surface upper button 208, which moves up and down, in the direction in which the coil springs 247 return to the natural length and the function of connecting the side surface upper button 208 to the ground electrode, but in other embodiments, the coil springs 247 may only have either one of these functions. In this case, the right controller 3 does not need to have the other function.

Note that the coil springs 247 may be configured to always be in contact with the side surface upper button 208, even if the side surface upper button 208 moves. For example, the coil springs 247 may be attached in a compressed state so that the coil springs 247 bias the side surface upper button 208 in the outward direction of the bump portion housing 221 no matter what position the side surface upper button 208 is in. In other embodiments, the coil springs 247 may be secured to the side surface upper button 208 by an adhesive, for example.

FIG. 21 is a cross-sectional view showing an example of the configuration of the first and second elastic deformation members 248 and 249. Note that FIG. 21 is a cross-sectional view taken along a plane that passes through the elastic deformation members 248 and 249 and is perpendicular to the left-right direction. FIG. 21 only shows a portion of the bump portion housing 221 that forms the outer surface 215 and the elastic deformation members 248 and 249, with the other components omitted.

As shown in FIG. 19 and FIG. 21, a notch 223a is formed in the second portion 223 of the bump portion housing 221. The notch 223a is formed at the rearward-facing surface of the outer surface 215 of the bump portion 212. When the bump portion housing 221 is attached to the main housing 225, the notch 223a is partially blocked by the main housing 225, thereby forming a through hole in the bump portion 212. As shown in FIG. 21, the first elastic deformation member 248 is arranged so as to partially protrude from the outer surface 215 through the through hole. Note that, as shown in FIG. 16, the through hole is formed at the right end of the outer surface 215 (e.g., at the end portion on the side that contacts the base surface 213 of the right controller 3), so the first elastic deformation member 248 protrudes from the outer surface 215 at the right end portion of the outer surface 215. As shown in FIG. 16 and FIG. 21, the first elastic deformation member 248 protrudes from the rearward-facing surface of the outer surface 215 of the bump portion 212. According to this, the first elastic deformation member 248 can be arranged at a position where it is difficult to be seen by the user holding the right controller 3. Note that there is no limitation on the position at which the first elastic deformation member 248 protrudes from the outer surface 215, and it is not limited to this position. For example, the first elastic deformation member 248 may protrude from the surface of the outer surface 215 that is facing the front side, the upper side, or the lower side.

As will be described in detail below, when the right controller 3 is attached to the main body apparatus 2, the portion of the first elastic deformation member 248 that is protruding from the outer surface 215 contacts the inner surface 64 of the wall portion 63 of the main body apparatus 2. Thus, it is possible to suppress rattling of the right controller 3 attached to the main body apparatus 2.

As described above, in the present embodiment, the first elastic deformation member 248 has the function of biasing the side surface upper button 208 and the function of suppressing rattling of the right controller 3 attached to the main body apparatus 2. Thus, by realizing the two functions with a single part, it is possible to reduce the number of parts.

Note that, in other embodiments, the right controller 3 may separately include a part that biases the side surface upper button 208 and a part that suppresses rattling of the right controller 3 attached to the main body apparatus 2. In this case, the two parts may be made of different materials. In other embodiments, the right controller 3 does not need to have one or both of the two functions described above.

Note that, as shown in FIG. 21, the second elastic deformation member 249 is arranged inside the bump portion housing 221 and has no portion protruding outside the bump portion housing 221. In other embodiments, the second elastic deformation member 249, like the first elastic deformation member 248, may have a portion that protrudes outside the bump portion housing 221.

Similarly to the side surface upper button 208 described above, the side surface lower button 209 is provided in the bump portion 212 so as to be movable in the left-right direction from the reference position. As shown in FIG. 19, the configuration for setting the side surface lower button 209 in the bump portion 212 is the same as that for the side surface upper button 208. That is, the side surface lower button 209 has the same shape as the side surface upper button and is biased by coil springs 251 attached to the FPC 250 in the outward direction of the bump portion housing 221 (e.g., the left direction with respect to the orientation of the game system 1), and is biased by the third elastic deformation member 252 and the fourth elastic deformation member 253 in the inward direction of the bump portion housing 221. The right controller 3 also includes a tact switch 254, and the tact switch 254 is attached on the FPC 250 so that the first projecting portion 244 of the side surface lower button 209 contacts the tip portion of the tact switch 254. As the side surface lower button 209 moves in the inward direction of the bump portion housing 221 by the side surface lower button 209 being pressed down, the switch is turned ON inside the tact switch 254. By detecting the switching ON of the tact switch 254, the game system 1 can detect the pressing of the side surface lower button 209.

Note that, of the third elastic deformation member 252 and the fourth elastic deformation member 253, the third elastic deformation member 252 arranged on the lower side protrudes from the rearward-facing surface of the outer surface 215 of the bump portion 212, as with the first elastic deformation member 248 (see FIG. 16). That is, the third elastic deformation member 252 has the same function as the first elastic deformation member 248.

### [3-3. Connector]

As shown in FIG. 16, the right controller 3 includes a connector 261. The connector 261 is a connector for the right controller 3 to communicate with the main body apparatus 2 when the right controller 3 is attached to the main body apparatus 2. As described below, when the right controller 3 is attached to the main body apparatus 2, the connector 261 is electrically connected to the right connector 22 of the main body apparatus 2.

As shown in FIG. 16 and FIG. 17, the connector 261 is arranged so as to be exposed from the protruding surface 214 of the bump portion 212. The connector 261 is arranged to contact the right connector 22 of the main body apparatus 2 when the right controller 3 is attached to the main body apparatus 2. Specifically, the connector 261 is arranged at a position where a group of terminals of the connector 261 contacts the group of terminals 68 of the right connector 22 of the main body apparatus 2 when the right controller 3 is attached to the main body apparatus 2. In the present embodiment, since the right connector 22 of the main body apparatus 2 is arranged at the center of the right side surface of the main body apparatus 2, the connector 261 is arranged at the center of the left side surface of the right controller 3.

The connector 261 is arranged at a position between the side surface upper button 208 and the side surface lower button 209 (see FIG. 17). It can be said that when the user holds the right controller 3 with both hands, the connector 261 is located at a position where it is difficult for the fingers of the user to touch the connector (see FIG. 4). That is, by arranging the connector 261 as described above, it is possible to suppress the fingers of the user from touching the connector 261 in the case described above. Note that there is no limitation on the position of the connector 261, and the connector 261 does not need to be arranged at a position between the side surface upper button 208 and the side surface lower button 209.

As shown in FIG. 19, the connector 261 is arranged so as to be exposed on the third surface 233 of the protruding surface 214 of the bump portion 212. Specifically, a through hole 233a is formed in the third surface 233. The connector 261 is arranged inside the bump portion housing 221 so that the connector 261 is exposed through the through hole 233a.

In the present embodiment, the third surface 233 is at a position higher (e.g., at a position farther away from the base surface 213 with respect to the left-right direction) than the second surface 232 and the fourth surface 234 where the buttons 208 and 209 are arranged (see FIG. 19). That is, the length from the base surface 213 to the third surface 233 with respect to the left-right direction is longer than the length from the base surface 213 to the second surface 232 or the fourth surface 234. According to this, when the user holds the right controller 3 with both hands, it is unlikely that the fingers of the user touch the connector 261 arranged on the third surface 233, and it is therefore possible to further reduce the possibility of the user touching the connector 261.

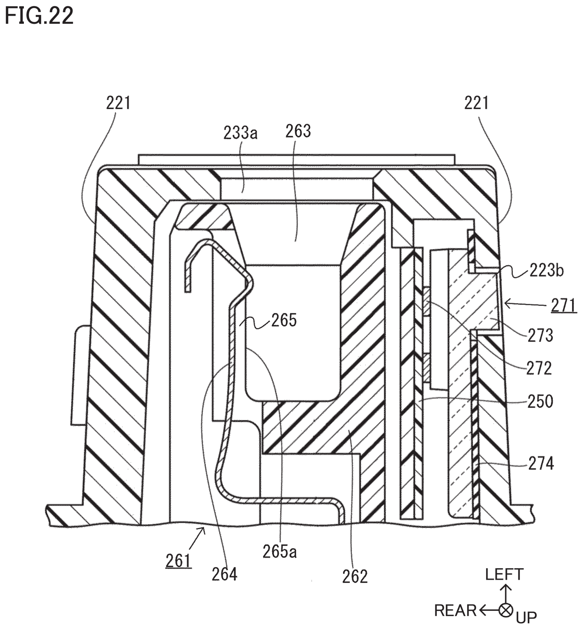

FIG. 22 is a cross-sectional view showing an example of the configuration of the right controller 3 at the position of the connector 261. FIG. 22 is a cross-sectional view taken along a cross section perpendicular to the up-down direction (specifically, a cross-sectional view taken along line B-B shown in FIG. 17). As shown in FIG. 19 and FIG. 22, the connector 261 has a socket 262. The socket 262 is generally in a rectangular body shape with one open side, and has four plate-shaped side surface portions and a bottom portion. The socket 262 is arranged inside the bump portion housing 221 so that the opening faces outward of the bump portion housing 221 (i.e., the left side with respect to the orientation of the game system 1). The socket 262 is arranged inside the bump portion housing 221 so that the opening is contiguous to the through hole 233a above. Specifically, the socket 262 is arranged at a position where the side surface portion and the bottom surface portion of the socket 262 are visible through the through hole 233a as the right controller 3 is seen from the left side. Note that in the present embodiment, the through hole 233a is rectangular, and the longitudinal direction of the through hole 232a coincides with the longitudinal direction of the bump portion 212. The socket 262 is arranged so that the longitudinal direction of the opening and the longitudinal direction of the through hole 233a are the same.

From the above, in the present embodiment, a space surrounded by the four side surface portions of the socket 262 is formed in an area inside the bump portion housing 221 that is contiguous to the through hole 232a. As will be described in detail below, when the right controller 3 is attached to the main body apparatus 2, the tongue 67 of the main body apparatus 2 is housed in this area of the space (an area 263 shown in FIG. 22). Hereafter, this area will be referred to as the "housing area".

Note that, in the present embodiment, a portion of the side surface portion of the socket 262 that faces in the front-rear direction (specifically, a portion thereof on the side closer to the through hole 233a) is inclined relative to the protruding surface 214 so that the cross-sectional area of the housing area 263 gradually decreases in the direction from the opening toward the inside of the bump portion housing 221. Thus, the side surface portions of the socket 262 may be inclined relative to the protruding surface 214 so that the cross-sectional area of the housing area 263 gradually decreases in the direction from the opening toward the inside of the bump portion housing 221.

The connector 261 has a group of terminals 264. As will be described in detail below, in the present embodiment, the group of terminals 264 has terminals as many as terminals of the right connector 22 of the main body apparatus 2. The group of terminals 264 is arranged at one side surface portion 365, of the four side surface portions, of the socket 262 (see FIG. 22). In the present embodiment, the side surface portion 265 where the group of terminals 264 is arranged is one of the two side surface portions that include the long side of the rectangular opening. Specifically, the side surface portion 265 where the group of terminals 264 is arranged is the side surface portion located on the rear side, of the four side surface portions.

In the side surface portion 265, slits 265a are formed along the direction from the inside to the outside of the bump portion housing 221 (e.g., the left-right direction with respect to the orientation of the game system 1). The slits 265a as many as terminals in the group of terminals 264 are formed. Of the group of terminals 264, each terminal is arranged in one slit 265a so that the terminal is exposed from the slit 265a. In the present embodiment, each terminal is arranged so that a portion of the terminal protrudes relative to the inner surface of the socket 262, which is formed by the side surface portion 265 (see FIG. 22). According to this, the group of terminals 68 at the tongue 67 of the main body apparatus 2 inserted into the housing area 263 when the right controller 3 is attached to the main body apparatus 2 can easily contact the group of terminals 264 of the right controller 3. Note that each terminal in the group of terminals 264 may be a leaf spring. There is no limitation on the shape of each terminal, and it may be pin-shaped, for example.

In the present embodiment, the right connector 22 of the main body apparatus 2 is a male connector, and the connector 261 of the right controller 3 is a female connector, but there is no limitation on the shape of the connectors. For example, in other embodiments, the right connector 22 of the main body apparatus 2 may be a female connector, and the connector 261 of the right controller 3 may be a male connector.

From the above, in the present embodiment, the group of terminals 264 is arranged at a position on the inner side of the bump portion housing 221 relative to the protruding surface 214 (see FIG. 22). Thus, it is possible to suppress the user from touching the group of terminals 264.

In the present embodiment, the housing area 263 is formed by the socket 262, but in other embodiments, the housing area may be formed by the bump portion housing 221 instead of the socket 262. That is, a recess may be formed in the bump portion housing 221 with the through hole 233a being the opening thereof, and this recess may form the housing area. In this case, the group of terminals 264 may be arranged on the inner surface of the recess.

As described above, in the present embodiment, the recess for inserting the tongue 67 of the main body apparatus 2 (i.e., the recess forming the housing area 263) is formed in the bump portion 212. Thus, in the present embodiment, the recess is formed in the bump portion 212 protruding from the base surface 213 of the right controller 3, and it is therefore possible to make efficient use of the space in the bump portion 212.

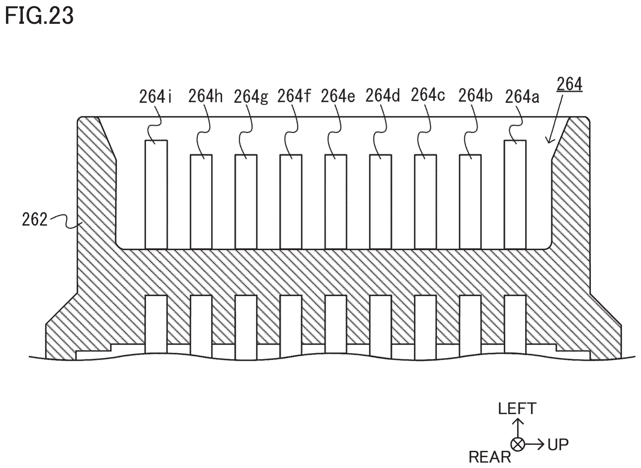

FIG. 23 is a view showing an example of the terminal arrangement in the group of terminals 264. FIG. 23 is a cross-sectional view of the connector 261 taken along a cross section perpendicular to the front-rear direction. As shown in FIG. 23, the group of terminals 264 includes nine terminals 264a to 264i. The terminals 264a to 264i are arranged side by side in the up-down direction. In the present embodiment, of the nine terminals 264a to 264i, the first terminal 264a, which is arranged uppermost, and the ninth terminal 264i, which is arranged lowermost, protrude more in the outward direction of the bump portion housing 221 (i.e., the left direction with respect to the orientation of the game system 1) than the second to eighth terminals 264b to 264h, which are arranged between these terminals 264a and 264i (see FIG. 23). That is, the first terminal 264a and the ninth terminal 264i extend closer to the outside of the bump portion housing 221 than the second to eighth terminals 264b to 264h. The function of the terminals 264a to 264i will be described below, but in the present embodiment, the first terminal 264a and the ninth terminal 264i are ground terminals. Therefore, in the present embodiment, when the right controller 3 is attached to the main body apparatus 2, the ground terminal can be electrically connected first. Note that, in other embodiments, there is no limitation on the position and length of the terminals 264a to 264i, and the terminals 264a to 264i may be arranged so that the tips of the terminals 264a to 264i are at the same position with respect to the outward direction of the bump portion housing 221.

### [3-4. Indicator]

As shown in FIG. 16, the right controller 3 includes indicators 271. The indicators 271 are an example of the light-emitting section that emits light. The indicators 271 are used to notify the user of predetermined information. For example, when the main body apparatus 2 communicates with a plurality of controllers, information identifying each controller (e.g., a number assigned to each controller) may be given by the indicators 271, or the status of communication between the right controller 3 and the main body apparatus 2 may be given by the indicators 271. In the present embodiment, the indicators 271 is used when the right controller 3 is detached from the main body apparatus 2. In the present embodiment, the right controller 3 includes four indicators 271, and information is given based on the combination of indicators 271 that are emitting light, of all the indicators 271. Note that there is no limitation on the number and size of the indicators 271 of the right controller 3.

As shown in FIG. 16 and FIG. 17, the indicators 271 are arranged on the bump portion 212. Thus, the indicators 271 are arranged at positions that are not visible when the right controller 3 is attached to the main body apparatus 2. Thus, the user can focus on game play.

More specifically, the indicators 271 are arranged on the front side of the outer surface 215 of the bump portion 212 (see FIG. 17). According to this, when the user holds and uses the right controller 3 (FIG. 4 and FIG. 5), the surface on which the indicators 271 are arranged is directly facing the user, and the indicators 271 are therefore more easily visible to the user. When the user holds the right controller 3 in a horizontal holding position (see FIG. 4), the fingers of the user operating the side surface upper button 208 and the side surface lower button 209 are less likely to rest on the outer surface 215, so the indicators 271 are less likely to be hidden by the fingers of the user. Thus, it is possible to improve the visibility of the indicators 271.

The indicators 271 are arranged between the side surface upper button 208 and the side surface lower button 209 with respect to the up-down direction. More specifically, the indicators 271, like the connector 261, are arranged at the center of the right controller 3 (which can be said to be the center of the bump portion 212) with respect to the up-down direction. The indicators 271 can also be said to be arranged between the second function button 210 and a mouse sensor 281, which will be described below, with respect to the up-down direction. This also makes it difficult for the fingers of the user to rest on the indicators 271 when the user holds the right controller 3 in a horizontal holding position, thereby improving the visibility of the indicators 271.

Note that in other embodiments, there is no limitation on the location of the indicators 271. For example, the indicators 271 may be arranged on the rear side of the outer surface 215 of the bump portion 212. For example, the indicators 271 may be arranged at a different location than the bump portion 212 (e.g., the base surface 213 on the left side surface of the right controller 3).

As shown in FIG. 22, a through hole 223b is formed in the second portion 223 of the bump portion housing 221. The indicators 271 are arranged at least partially in the bump portion housing 221 so that the indicators 271 emit light through the through hole 223b to the outside of the bump portion housing 221.

As shown in FIG. 22, in the present embodiment, the indicators 271 each have a light-emitting element 272 and a lens 273. The light-emitting elements 272 are, for example, light-emitting diodes (LEDs). There is no limitation on the color of the light emitted by the light-emitting elements 272. The light-emitting elements 272 are provided on the FPC 250.

The lens 273 is arranged between the light-emitting element 272 and the through hole 223b. Specifically, the lens 273 is arranged so that one side of the lens 273 opposes the light-emitting element 272 and a part of the lens 273 is inserted in the through hole 223b. In the present embodiment, the lens 273 has a shape with a protruding portion on the outside surface thereof, and the lens 273 is arranged so that the protruding portion is inserted in the through hole 223b and the inside surface, opposite to the outside surface, is arranged so as to oppose the light-emitting element 272. The lens 273 is secured to the bump portion housing 221 by being bonded to the inner wall of the bump portion housing 221 by means of a double-sided tape 274, for example. With the configuration described above, light from the light-emitting element 272 enters from the inner-side surface of the lens 273 and exits from the tip of the protruding portion. Thus, light from the light-emitting element 272 is emitted to the outside of the bump portion housing 221. Note that while the configuration for one indicator 271 is shown in FIG. 22, in the present embodiment, the other three indicators 271 have the same configuration. Note that in the present embodiment, the lens for the four indicators 271 is a single piece, but in other embodiments, it may be separate lenses.

Note that, in other embodiments, the indicators 271 do not need to have a lens. For example, the light-emitting element 272 may be arranged on the inner side of the bump portion housing 221, and light from the light-emitting element 272 may be emitted directly from the through hole 223b. For example, the through hole may not be formed in the bump portion housing 221, and the light-emitting element may be arranged on the outer surface 215 of the bump portion 212.

Note that, in the present embodiment, since the parts forming the indicators 271 (i.e., the light-emitting elements 272 and the lens 273) are arranged in the bump portion 212, it is possible to make efficient use of the space in the bump portion 212, and to arrange the indicators 271 without squeezing the space in the main housing 225 of the right controller 3. Note that, in other embodiments, there is no limitation on the position where the indicators 271 are arranged, and the indicators 271 may be arranged in the main housing 225.

As shown in FIG. 22, in the present embodiment, the indicators 271 are arranged at a position overlapping the connector 261 with respect to the up-down direction. Here, the group of terminals 264 of the connector 261 is arranged on the rear side relative to the housing area 263, whereas the indicators 271 are arranged on the front side relative to the housing area 263 (see FIG. 22). From another perspective, the indicators 271 are arranged on the back side of a surface of the socket 262 that opposes the surface on which the group of terminals 264 is arranged. Thus, it is possible to secure a space around the group of terminals 264 on the side where the group of terminals 264 is arranged with respect to the housing area 263. For example, when the right controller 3 is attached to the main body apparatus 2, the group of terminals 264 may contact the group of terminals 68 of the right connector 22 of the main body apparatus 2 and may possibly be pushed by the group of terminals 68, thereby moving in the rear direction. In the present embodiment, since it is possible to secure a space around the group of terminals 264 as described above, it is possible to prevent the group of terminals 264 from contacting the other components even if the group of terminals 264 moves in the rear direction. According to the above, the indicators 271 can be arranged while securing a sufficient space around the group of terminals 264, and it is therefore possible to make efficient use of the space in the bump portion 212.

### [3-5. Second function button]

As shown in FIG. 17 and FIG. 19, the second function button 210 is arranged at the third side 233 of the protruding surface 214 of the bump portion 212. The second function button 210 can also be said to be arranged between the side surface upper button 208 and the side surface lower button 209 with respect to the up-down direction. According to this, where the user holds the right controller 3 with both hands and operates the side surface upper button 208 and the side surface lower button 209 (see FIG. 4), the second function button 210 is located at a position where the fingers of the user are less likely to touch the second function button, and it is therefore possible to reduce the possibility that the user may inadvertently operate the second function button 210. In the present embodiment, the second function button 210 is arranged on the lower side relative to the connector 261 on the third side 233. The second function button 210 can also be said to be arranged between the connector 261 and the side surface lower button 209 with respect to the up-down direction.

As described above, in the present embodiment, the third surface 233 on which the second function button 210 is arranged is at a higher position (e.g., a position farther away from the base surface 213 with respect to the left-right direction) than the second surface 232 and the fourth surface 234 on which the buttons 208 and 209 are arranged (see FIG. 19). This also reduces the possibility of the user inadvertently operating the second function button 210 when the user holds the right controller 3 with both hands, because the fingers of the user are less likely to touch the second function button 210 arranged on the third surface 233.

As shown in FIG. 19, a through hole 233b is formed in the third surface 233, and the second function button 210 is arranged inside the bump portion housing 221 so that the operation surface is exposed through the through hole 233b. In the present embodiment, the third surface 233 is more recessed in the area surrounding the through hole 233b than in other areas. Specifically, the area around the through hole 233b is formed so that the area gradually becomes lower (e.g., closer in the right direction with respect to the orientation of the game system 1) in the direction toward the through hole 233b. The operation surface of the second function button 210 is arranged at a position that is recessed relative to the third surface 233 (more specifically, areas of the third surface 233 other than the area surrounding the through hole 233b). From another perspective, with respect to the left-right direction, the length from the base surface 213 to the operation surface of the second function button 210 is shorter than the length from the base surface 213 to the other areas. According to the above, it is more difficult to press down the operation surface of the second function button 210, thereby reducing the possibility of the user inadvertently operating the second function button 210.

Note that, in the present embodiment, the second function button 210 does not include a soft magnetic material or a magnet. That is, the second function button 210 does not have the function of attaching the right controller 3 to the main body apparatus 2. Note however that, in other embodiments, the second function button 210, like the side surface upper button 208 and the side surface lower button 209, may also include a soft magnetic material and/or a magnet.

### [3-6. Configuration regarding mouse function]

As shown in FIG. 16 and FIG. 17, the right controller 3 includes a mouse sensor 281 as an element for realizing the mouse function (e.g., the function of instructing the movement of the cursor displayed on the screen). The mouse sensor 281 is an optical sensor using, for example, an LED, or the like, and may be the same as a sensor used in a conventional mouse. The mouse sensor may be, for example, a laser light-based sensor, an infrared light-based sensor, or the like. In the present embodiment, the mouse sensor 281 is arranged in the housing 201 at a position exposed to the outside via a through hole formed in the protruding surface 214 of the bump portion 212. With the right controller 3 placed on a work surface so that the protruding surface 214 opposes the work surface, the mouse sensor 281 emits light to the work surface and detects the reflected light from the work surface. The game system 1 calculates parameters related to the movement of the right controller 3 on the work surface (e.g., the direction of movement and the distance of movement) based on the detection results of the reflected light. Note that the calculation of the parameters may be executed in the right controller 3, or may be executed in the main body apparatus 2 having received the information regarding the detection result of the reflected light from the right controller 3.

As shown in FIG. 17 and FIG. 19, in the present embodiment, a through hole 233c is formed in the third surface 233, and the mouse sensor 281 is arranged inside the bump portion housing 221 so that light is emitted through the through hole 233c.

As described above, in the present embodiment, the through hole 233c through which the mouse sensor 281 emits light is formed in the third surface 233 located at the center in the left side surface of the right controller 3. By arranging the through hole 233c at a position near the center, the gap between the direction and distance of movement detected by the mouse sensor 281 and the sense of direction and distance of movement felt by the user becomes smaller, thereby realizing a mouse operation in accordance with the intention of the user.

It can also be said that the mouse sensor 281 is arranged between the side surface upper button 208 and the side surface lower button 209 with respect to the up-down direction. According to this, when the user holds the right controller 3 with both hands and operates the side surface upper button 208 and the side surface lower button 209 (see FIG. 4), the through hole 233c through which the mouse sensor 281 emits light is located in a position where the fingers of the user are less likely to touch the mouse sensor, thus reducing the possibility of the fingers of the user contacting the mouse sensor 281. In the present embodiment, the through hole 233c is located on the upper side relative to the connector 261 on the third surface 233. The mouse sensor 281 can also be said to be arranged between the connector 261 and the side surface upper button 208 with respect to the up-down direction.

The mouse sensor 281 is arranged, with respect to the up-down direction, on the opposite side of the second function button 210 with respect to the connector 261. That is, with respect to the up-down direction, the mouse sensor 281 is arranged on the opposite side of the second function button 210 with respect to the center of the left side surface of the right controller 3. According to this, the fingers of the user are less likely to touch the mouse sensor 281 even when the user operates the second function button 210, thus reducing the possibility of the fingers of the user contacting the mouse sensor 281.

In the present embodiment, the length of the third surface 233 of the protruding surface 214 with respect to the up-down direction is longer than the length of the second surface 232 and the fourth surface 234 with respect to the up-down direction. Thus, it is easier to arrange a plurality of components (specifically, the connector 261, the second function button 210, and the through hole 233c through which the mouse sensor 281 emits light) on the third surface 233. Note that, in the present embodiment, the length of the third surface 233 of the protruding surface 214 with respect to the up-down direction is shorter than twice the length of the second surface 232 and the fourth surface 234 with respect to the up-down direction.

As shown in FIG. 17 and FIG. 19, the right controller 3 includes two mouse soles (also called mouse skates) 282 and 283 on the protruding surface 214 of the bump portion 212. The upper mouse sole 282 is arranged on an upper portion of the protruding surface 214 and the lower mouse sole 283 is arranged on a lower portion of the protruding surface 214. As will be described below, in the present embodiment, when the right controller 3 is used as a mouse by being placed on a work surface in such an orientation that the protruding surface 214 opposes the work surface, the mouse soles 282 and 283 are in contact with the work surface and no other portions are in contact with the work surface. The mouse soles 282 and 283 can be said to be an example of the protruding member that is located at a position protruding more than the side surface upper button 208 at the reference position with respect to the height direction perpendicular to the protruding surface 214. Note that there is no limitation on the material of the mouse soles, and it may be the same material as that of conventional mouse soles.

In the present embodiment, the upper mouse sole 282 is arranged on the first surface 231 of the protruding surface 214. The lower mouse sole 283 is arranged on the fifth surface 235 of the protruding surface 214. The mouse soles 282 and 283 protrude from the first surface 231 and the fifth surface 235, respectively. There is no limitation on the method of attaching the mouse soles 282 and 283 to the protruding surface 214, and the mouse soles 282 and 283 may be bonded to the protruding surface 214 by an adhesive, for example.

Note that, in the present embodiment, a through hole 231a is formed in the first surface 231 of the protruding surface 214 (see FIG. 19). The upper mouse sole 282 is loop-shaped and is arranged on the protruding surface 214 so that the hole in the upper mouse sole 282 connects with the through hole 231a. As will be described in detail below, in the present embodiment, a pusher to be described below is configured to be able to protrude through the through hole 231a and the hole in the mouse sole 282. Thus, the upper mouse sole 282 and the pusher can be arranged while making efficient use of the space on the protruding surface 214. Note that, in other embodiments, there is no limitation on the shape, number, and location of the mouse soles 282 and 283. For example, the lower mouse sole 283 may be loop-shaped. Neither the upper mouse sole 282 nor the lower mouse sole 283 needs to be loop-shaped.

In the present embodiment, the mouse soles 282 and 283 protrude most from the base surface 213 of the left side surface of the right controller 3. That is, in the state where the side surface upper button 208 and the side surface lower button 209 are at the reference position, the left ends of the mouse soles 282 and 283 are on the left side relative to the protruding surface 214 at any location thereof. From another perspective, in this state, the length from the base surface 213 to the left ends of the mouse soles 282 and 283 with respect to the left-right direction is longer than the length from the base surface 213 to the protruding surface 214 at any location thereof with respect to the left-right direction. Thus, when the right controller 3 is placed on a work surface, the mouse soles 282 and 283 can be in contact with the work surface with no other portions being in contact with the work surface.

In the present embodiment, the left end of the upper mouse sole 282 and the left end of the lower mouse sole 283 are at the same position with respect to the left-right direction, but in other embodiments, they may be at different positions with respect to the left-right direction. In the present embodiment, it can also be said that the entire protruding surface 214 is configured to be located on the right side relative to a line that connects the left end of the upper mouse sole 282 and the left end of the lower mouse sole 283, as seen from the front-rear direction. This also allows the mouse soles 282 and 283 to be in contact with the work surface with no other portions being in contact with the work surface, when the right controller 3 is placed on the work surface. In other embodiments, the protruding surface 214 may include a portion that is located at the same position as the left ends of the mouse soles 282 and 283 with respect to the left-right direction, or may include a portion that is located at a position on the left side relative to the left ends of the mouse soles 282 and 283.

In the present embodiment, the first surface 231 and the fifth surface 235 of the protruding surface 214, on which the mouse soles 282 and 283 are arranged, protrude more than the second surface 232, the third surface 233 and the fourth surface 234. That is, the first surface 231 and the fifth surface 235 are on the left side relative to the second surface 232, the third surface 233 and the fourth surface 234. From another perspective, the length from the base surface 213 to the first surface 231 or the fifth surface 235 with respect to the left-right direction is longer than any of the lengths from the base surface 213 to the second surface 232, the third surface 233 and the fourth surface 234 with respect to the left-right direction. According to the above, when the right controller 3 is placed on a work surface, it is possible to more reliably suppress any portions other than the mouse soles 282 and 283 from contacting the work surface. For example, even if the mouse soles 282 and 283 are worn due to use, it is possible to suppress the other portions from contacting the work surface.

In the present embodiment, the first face 231 and the fifth surface 235 are at the same position with respect to the left-right direction, but in other embodiments, they may be at different positions with respect to the left-right direction. In other embodiments, the protruding surface 214 may be configured such that the entirety of the second surface 232, the third surface 233 and the fourth surface 234 is located on the right side relative to a line that connects the first surface 231 and the fifth surface 235, as seen from the front-rear direction. This also ensures that when the right controller 3 is placed on a work surface, the mouse soles 282 and 283 contact the work surface with no other portions contacting the work surface. In other embodiments, the second surface 232, the third surface 233 and the fourth surface 234 may include portions that are at the same position as the first surface 231 and the fifth surface 235 with respect to the left-right direction, or may include portions that are on the left side relative to the first surface 231 and the fifth surface 235.

Note that, in other embodiments, the mouse sensor 281 may be arranged to be exposed from another surface of the right controller 3, for example, the rear surface. In this case, the mouse sensor 281 may be arranged in the main housing 225 of the right controller 3. According to the above, the user may perform mouse operations with the right controller 3 by placing the right controller 3 on a work surface with the rear surface of the right controller 3 opposing the work surface. Note that, in the case above, the mouse sole may also be arranged to protrude from the rear surface.

In other embodiments, the right controller 3 does not need to include an element for realizing the mouse function, i.e., the mouse sensor 281. In this case, the right controller 3 does not need to include the mouse soles 282 and 283. On the other hand, even if the right controller 3 does not include the mouse sensor 281, the right controller 3 may include a shock-absorbing member at the locations of the mouse soles 282 and 283. The shock-absorbing member may be made of the same material as the mouse soles 282 and 283. That is, even if the right controller 3 does not include the mouse sensor 281, the right controller 3 may include the mouse soles 282 and 283 as a shock-absorbing member. With the shock-absorbing member, it is possible to relieve stresses on the bump portion 212 when the right controller 3 is attached to the main body apparatus 2. Note that the mouse soles 282 and 283 of the present embodiment can also be said to be capable of relieving stresses on the bump portion 212 when the right controller 3 is attached to the main body apparatus 2.

### [3-7. Detaching mechanism]

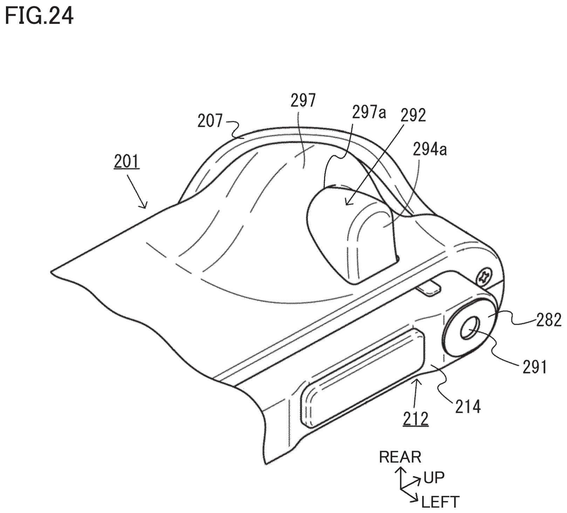

In the present embodiment, the right controller 3 includes a detaching mechanism to assist in the user operation to detach the right controller 3 attached to the main body apparatus 2 from the main body apparatus 2. FIG. 24 is a perspective view showing an example of the rear surface of the right controller 3. As shown in FIG. 24, the right controller 3 includes a pusher 291 and a pusher operating section 292. As will be described in detail below, in the present embodiment, the pusher 291 arranged in the bump portion 212 moves so as to protrude from the protruding surface 214 of the bump portion 212 in response to the user operating the pusher operating section 292. When the right controller 3 is attached to the main body apparatus 2, the pusher 291 pushes the cover 65 on the base surface 61 of the main body apparatus 2 in response to the operation on the pusher operating section 292, thereby increasing the distance between the bump portion 212 and the base surface 61, thus decreasing the attraction by the magnetic force. This makes it easier for the user to detach the right controller 3 from this main body apparatus 2. The details of the detaching mechanism will be described below.

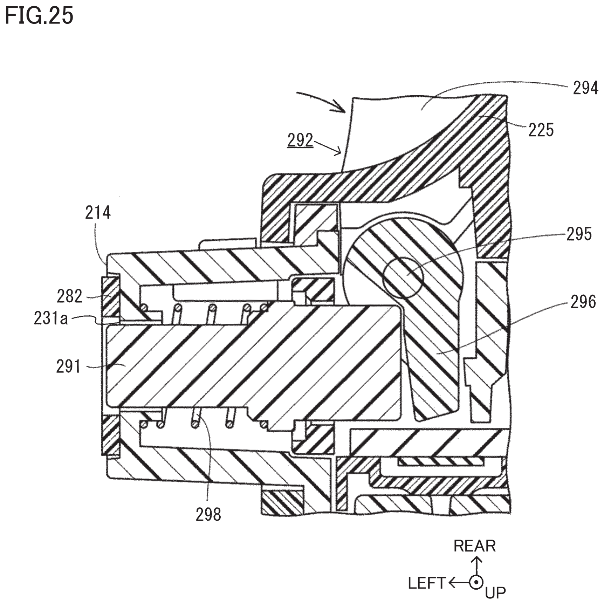

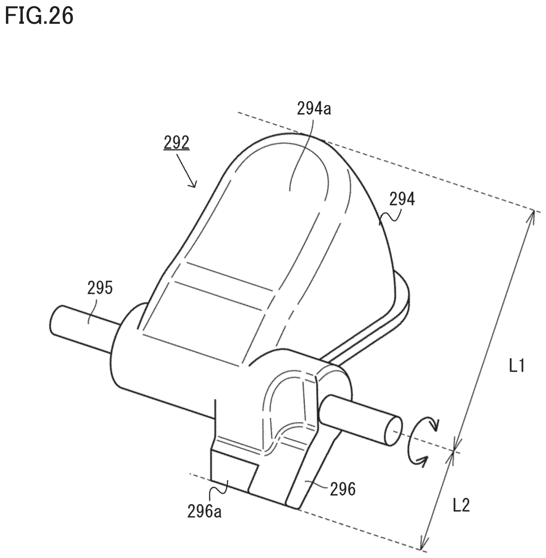

FIG. 25 is a cross-sectional view showing an example of the configuration of the right controller 3 at the position of the pusher 291 and the pusher operating section 292. FIG. 25 is a cross-sectional view taken along a cross section perpendicular to the up-down direction. FIG. 26 is a perspective view showing an example of the configuration of the pusher operating section 292. As shown in FIG. 25 and FIG. 26, the pusher operating section 292 has an operation surface portion 294, a rotary shaft 295, and an actuating portion 296. The operation surface portion 294 includes an operation surface 294a that is operated by the user. The rotary shaft 295 is connected to one end of the operation surface portion 294 and has a rod-like shape. The actuating portion 296 is connected to the rotary shaft 295 in an area opposite to the operation surface 294a with respect to the rotary shaft 295. From the above configuration, when the pusher operating section 292 rotates around the rotary shaft 295, the operation surface portion 294 and the actuating portion 296 move in opposite directions to each other.

In the present embodiment, the pusher operating section 292 is attached to the housing 201 so that the pusher operating section 292 can be rotated by the rotary shaft 295. In the present embodiment, the housing 201 has a protruding portion 297 protruding in the rear direction on the rear surface (see FIG. 24). A through hole 297a is formed in the leftside surface of the protruding portion 297. The pusher operating section 292 is arranged so that, when the pusher operating section 292 is not operated, a portion of the operation surface portion 294, including the operation surface 294a, protrudes out of the housing 201 through the through hole 297a.

As shown in FIG. 26, the actuating portion 296 includes a contact surface 296a. The contact surface 296a is arranged to be in contact with the pusher 291 when the pusher operating section 292 is not operated. Note that, in other embodiments, the contact surface 296a does not always need to be in contact with the pusher 291. The pusher operating section 292 may be arranged so that the pusher operating section 292 does not contact the pusher 291 when the pusher operating section 292 is not operated, but contacts the pusher 291 when the pusher operating section 292 is operated by a predetermined amount or more.

The pusher 291 has a rod-like shape and is arranged in an orientation extending in the left-right direction (see FIG. 25). The pusher 291 is arranged so that the right end contacts the contact surface 296a of the actuating portion 296. As described above, in the present embodiment, the through hole 231a is formed in the first surface 231 of the protruding surface 214, and the upper mouse sole 282 is arranged on the protruding surface 214 so that the aperture in the upper mouse sole 282 connects to the through hole 231a. When the pusher operating section 292 is not operated, the left end of the pusher 291 is located at a position where the pusher 291 does not protrude from the aperture in the upper mouse sole 282. More specifically, in the state above, the left end of the pusher 291 is located in the aperture of the upper mouse sole 282. Thus, the pusher 291 is arranged in the through hole formed in the bump portion 212 (specifically, the upper mouse sole 282 and the bump portion housing 221), and the left end of the pusher 291 is arranged not to protrude more than the bump portion 212 when the pusher operating section 292 is not operated. Therefore, when the pusher operating section 292 is not operated, the pusher 291 is not in contact with any object outside the right controller 3. Note that, in other embodiments, in the state described above, the left end of the pusher 291 may be positioned inside of the bump portion housing 221 more than the upper mouse sole 282.

In the present embodiment, the right controller 3 includes a coil spring 298. The coil spring 298 is an example of the biasing portion that biases the pusher 291 in the inward direction of the bump portion housing 221 (e.g., the right direction with respect to the orientation of the game system 1). The coil spring 298 is arranged in a compressed state so that one end portion contacts the inner wall on the back side of the protruding surface 214 in the bump portion housing 221 with the other end portion contacting a surface of the pusher 291 that is facing the outer side of the bump portion housing 221 (e.g., the left side with respect to the orientation of the game system 1). Thus, when the pusher operating section 292 is not being operated, the pusher 291 is kept in a state of not protruding from the bump portion 212. Therefore, it is possible to suppress the pusher 291 from protruding from the bump portion 212 when the user is not operating the pusher operating section 292.

Note that when the pusher operating section 292 is not operated (see FIG. 24), the pusher operating section 292 is in the state where the operation surface portion 294 is most protruding outside the housing 201 through the through hole 297a (e.g., the operating surface 294a is in contact with the edge of the through hole 297a and does not protrude any further).

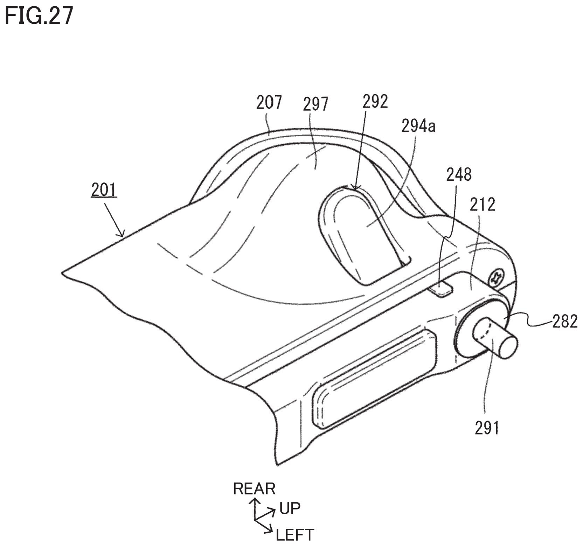

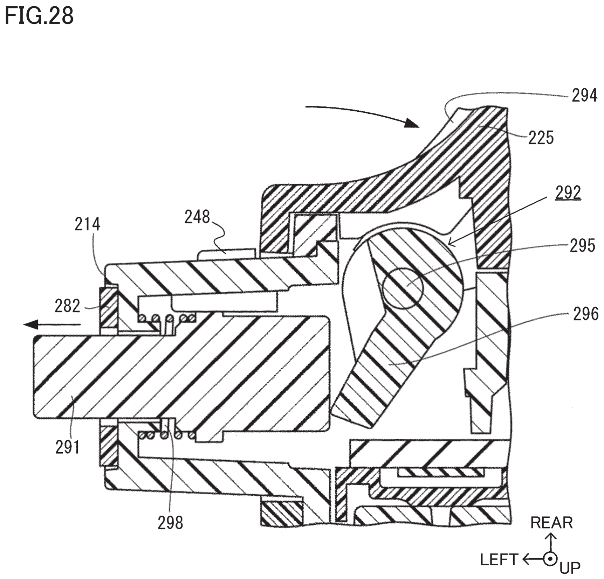

FIG. 27 is a perspective view showing an example of the rear surface of the right controller 3 in the state where the pusher operating section 292 is operated. FIG. 28 is a cross-sectional view showing an example of the configuration of the right controller 3 at the position of the pusher 291 and the pusher operating section 292 in the state where the pusher operating section 292 is operated. FIG. 27 shows the state where the pusher operating section 292 is operated from the state shown in FIG. 24, and FIG. 28 shows the state where the pusher operating section 292 is operated from the state shown in FIG. 25.

As shown in FIG. 27 and FIG. 28, when the pusher operating section 292 is operated by the user, the pusher operating section 292 rotates and moves so that the operation surface 294a moves in the right direction (strictly speaking, so that the operation surface 294a moves in the right direction while also moving slightly in the front direction) (see the arrow shown in FIG. 28). At this time, the actuating portion 296 rotates and moves so that the actuating portion 296 moves in the left direction (strictly speaking, so that the actuating portion 296 moves in the left direction while also moving slightly in the rear direction). Therefore, the contact surface 296a of the actuating portion 296 pushes the pusher 291 in the left direction, and the pusher 291 moves in the left direction to protrude from the bump portion 212 (see FIG. 28). From the above, the user can cause the pusher 291 to protrude from the bump portion 212 by the operation of pushing the actuating surface portion 294 in the right direction.

The pusher 291 may protrude from the upper side relative to the pusher operating section 292 in the longitudinal direction (i.e., the up-down direction) of the bump portion 212. In the longitudinal direction of the bump portion 212, the center of the pusher 291 may be located on the upper side relative to the center of the pusher operating section 292. The pusher 291 may protrude from the upper side relative to the first elastic deformation member 248 in the longitudinal direction of the bump portion 212. In the longitudinal direction of the bump portion 212, the center of the pusher 291 may be located on the upper side relative to the center of the first elastic deformation member 248.

In the present embodiment, the pusher operating section 292 is configured so as to restrict the operation thereof beyond a predetermined amount. Specifically, when the operation surface portion 294 is pressed down by the predetermined amount, the operation surface 294a comes close to the protruding portion 297, making it difficult for the user to press the operation surface 294a any further. Note that, in other embodiments, the configuration may be such that with the operation surface portion 294 pressed down by the predetermined amount, some part of the pusher operating section 292 contacts the housing 201 and cannot be rotated any further. As will be described in detail below, according to the above, the user can smoothly perform the operation of operating the pusher operating section 292 and then detaching the right controller 3 from the main body apparatus.

Note that, in the present embodiment, the right rear shoulder button 207 is arranged in an upper portion of the protruding portion 297 where the operation surface portion 294 is arranged. That is, a through hole is formed in the upper portion of the protruding portion 297, and the right rear shoulder button 207 is arranged to be exposed through the through hole. Thus, in the present embodiment, the protruding portion 297 also has the function of arranging the right rear shoulder button 207. In the present embodiment, the operation surface portion 294 is arranged on such a protruding portion 297. That is, in the present embodiment, the space for the operation surface part 294 to move is secured by the space created by the protruding portion 297 where the right rear shoulder button 207 is arranged. According to this, it is possible to save space as compared to the case where the space for the operation surface part 294 to move is separately secured, and it is possible to reduce the size of the right controller 3.

In the present embodiment, the height of the operation surface portion 294 from the flat portion of the rear surface of the housing 201 (e.g., the length in the front-rear direction from the flat portion to the rear end of the operation surface portion 294) is lower than the height of the protruding portion 297 from the flat portion. Therefore, when the right controller 3 (or the game system 1 with the right controller 3 attached to the main body apparatus 2) is placed on a work surface with the rear surface of the housing 201 opposing the work surface, the protruding portion 297 contacts the work surface, and it is possible to prevent the operation surface portion 294 from contacting the work surface. This can suppress the pusher operating section 292 from being operated inadvertently to cause the pusher 291 to protrude from the bump portion 212.

As shown in FIG. 26, in the present embodiment, with respect to the radial direction of the rotary shaft 295, the length L1 from the rotary shaft 295 to the end portion of the operation surface portion 294 (specifically, the end portion on the opposite side from the end portion that is connected to the rotary shaft 295) is longer than the length L2 from the rotary shaft 295 to the end portion of the actuating portion 296 (specifically, the end portion on the opposite side from the end portion that is connected to the rotary shaft 295). Thus, it is possible to increase the torque of the actuating portion 296 that protrudes the pusher 291, and the user can operate the pusher operating section 292 with less force.

In the present embodiment, the length from the position where the actuating portion 296 and the pusher 291 contact each other to the rotary shaft 295 (referred to as the "arm length") with respect to the radial direction of the rotary shaft 295 is short when the pusher operating section 292 is not operated (see FIG. 25) and the arm length is long when the pusher operating section 292 is operated (see FIG. 28). Thus, in the present embodiment, the arm length is configured to be longer as the amount of operation on the pusher operating section 292 increases. That is, the arm length is shorter in the state where the amount of protrusion of the pusher 291 is small than in the state where the amount of protrusion is large.

Here, in the state where the pusher 291 does not protrude and the right controller 3 is attached to the main body apparatus 2, the attraction applied to the right controller 3 by the magnetic force is strong. At this time, in the present embodiment, since the arm length is shorter, the action force by the actuating portion 296 can be large in relation to the force against the operation surface portion 294, and the user can perform the operation with less force. On the other hand, in the state where the protruding surface 214 of the right controller 3 is located some distance away from the base surface 61 of the main body apparatus 2 as the pusher 291 has protruded to some extent, the attraction applied to the right controller 3 by the magnetic force becomes weaker. At this time, in the present embodiment, since the arm length is longer, it is possible to decrease the action force while increasing the amount of movement of the actuating portion 296 in relation to the amount of rotation of the rotary shaft 295, thereby allowing the pusher 291 to protrude to a greater extent. Thus, in the present embodiment, the operation of detaching the right controller 3 can be made easier by varying the action force applied to the pusher 291 and the amount of protrusion of the pusher 291 in accordance with the state of protrusion of the pusher 291.

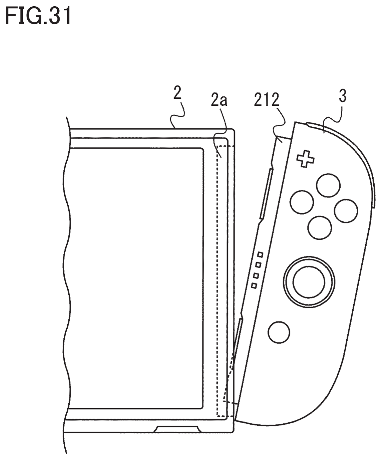

As described above, in the present embodiment, the pusher 291 is arranged at the upper side relative to the side surface upper button 208 with respect to the longitudinal direction of the bump portion 212 (e.g., the up-down direction with respect to the orientation of the game system 1) (see FIG. 17). Here, when the right controller 3 is detached from the main body apparatus 2 by the pusher 291 protruding from the bump portion 212, the end portion of the bump portion 212 on the side opposite to the side where the pusher 291 is arranged with respect to the longitudinal direction (i.e., the lower end portion) becomes the fulcrum (see FIG. 31 to be described below). Therefore, by arranging the pusher 291 on the upper side relative to the side surface upper button 208, the distance between the pusher 291 and the fulcrum can be increased, thereby allowing the right controller 3 to be detached from the main body apparatus 2 with less force. Note that, in other embodiments, the pusher 291 may be arranged on the lower side relative to the side surface lower button 209 with respect to the longitudinal direction of the bump portion 212 (i.e., the up-down direction with respect to the orientation of the game system 1). For example, the lower mouse sole 283 may be arranged in a loop shape and the pusher 291 may be arranged inside the lower mouse sole 283 as seen from the left-right direction. This allows the distance between the pusher 291 and the fulcrum to be increased, as in the present embodiment.

As described above, in the present embodiment, the pusher 291 is arranged to protrude from the first surface 231 at the most protruding position (e.g., the leftmost position with respect to the orientation of the game system 1) of the protruding surfaces 214. According to this, the amount of protrusion needed for the pusher 291 protruding from the bump portion 212 to contact the main body apparatus 2, with the right controller 3 attached to the main body apparatus 2, can be smaller than when the pusher 291 protrudes from the second surface 232, the third surface 233, or the fourth surface 234. Thus, it is possible to reduce the amount of operation that the user has to perform on the pusher operating section 292. It is also possible to reduce the size of the pusher 291.

Note that there is no limitation on the specific mechanism for causing the pusher 291 to protrude from the bump portion 212 in response to an operation by the user, and it is not limited to the above. For example, in other embodiments, the pusher operating section may move in parallel in response to an operation by the user. For example, the pusher 291 may be configured to protrude from the bump portion 212 by an electrical mechanism. For example, the pusher 291 may protrude from the bump portion 212 in response to an operation on a predetermined input section of the right controller 3 (e.g., any button arranged on the right controller 3), or may protrude from the bump portion 212 in response to an instruction from the main body portion 2 to the right controller 3.

### [3-8. Configuration for attaching other devices]

As shown in FIG. 16, a first engagement hole 212a and a second engagement hole 212b are formed in the bump portion 212. The first engagement hole 212a is formed at an upper end portion in the bump portion 212. The second engagement hole 212b is formed at a lower end portion of the bump portion 212. The engagement holes 212a and 212b are used to attach another device different from the main body apparatus 2 to the right controller 3. Another device refers to a peripheral device of the right controller 3, for example, a strap attachment that includes a strap to be wrapped around the wrist when the user uses the right controller 3 and a housing to which the strap is connected.

The peripheral device has a groove formed thereon that is similar to the groove 2a formed on the right side surface of the main body apparatus 2. The peripheral device also includes a first engaging element corresponding to the first engagement hole 212a and a second engaging element corresponding to the second engagement hole 212b. These engaging elements are, for example, protruding portions protruding from the inner surface of the groove. The first engaging element has a shape that can engage with the first engagement hole 212a. The second engaging element has a shape that can engage with the second engagement hole 212b. The first engaging element is protruding at a position corresponding to the first engagement hole 212a (e.g., at a position where the first engaging element is engaged with the first engagement hole 212a) when the bump portion 212 of the right controller 3 is matched with the groove of the peripheral device. The second engaging element is protruding at a position corresponding to the second engaging hole 212b when the bump portion 212 of the right controller 3 is inserted into the groove of the peripheral device.

With the configuration above, a peripheral device can be attached to the left side surface of the right controller 3. That is, when attaching a peripheral device to the right controller 3, the user engages the first engaging element with the first engaging hole 212a and the second engaging element with the second engaging hole 212b, with the bump portion 212 of the right controller 3 matched with the groove of the peripheral device. Thus, the peripheral device can be attached to the right controller 3.

Note that the peripheral device does not need to include a magnetic member as does the main body apparatus 2, because the engaging elements and the engagement holes can maintain the attachment between the right controller 3 and the peripheral device as described above. The peripheral device may include a magnetic member as does the main body apparatus 2, in which case the peripheral device can be attached more firmly to the right controller 3.

As described above, the engagement holes 212a and 212b are formed at the end portions of the bump portion 212 in the longitudinal direction. Therefore, when attaching a peripheral device to the right controller 3, the user can easily perform the attaching operation by first engaging the engaging element with the engaging hole at one end of the bump portion 212 in the longitudinal direction while inserting the one end of the bump portion 212 into one end of the groove of the peripheral device, and then further inserting the bump portion 212 into the groove of the peripheral device, thereby engaging the engaging element with the engaging hole at the other end. Note that, as described above, in the present embodiment, since the end portions of the bump portion 212 in the longitudinal direction are rounded, it is easy for the user to perform the operation of inserting the end portions into the groove of the peripheral device.

In the present embodiment, the shape and the size of the first engagement hole 212a are different from the shape and the size of the second engagement hole 212b. Note that, in other embodiments, only one of the shape and the size of the first engagement hole 212a and the second engagement hole 212b may be different. The shape or size of the first engagement hole 212a and the shape or the size of the second engagement hole 212b can be made different so that the first engaging element of the peripheral device is not engaged with the second engagement hole 212b, or the second engaging element of the peripheral device is not engaged with the first engagement hole 212a, or both. Note that, in the present embodiment, the second engaging element of the peripheral is not engaged with the first engaging hole 212a. According to the above, it is possible to make it so that the peripheral device can only be attached to the right controller 3 in a predetermined orientation (or so that it is difficult to attach in an orientation other than the predetermined orientation).

Note that, in other embodiments, the main body apparatus 2 may have the same engaging elements as those of the peripheral device described above. This allows the right controller 3 to be more firmly attached to the main body apparatus 2. It is also possible to make it so that the right controller 3 can only be attached to the main body apparatus 2 in a predetermined orientation (or so that it is difficult to attach in an orientation other than the predetermined orientation).

In other embodiments, the right controller 3 does not need to have the engagement holes 212a and 212b. The right controller 3 may include other mechanical means in place of the engagement holes as means for maintaining the attachment between the peripheral device and the right controller 3. The right controller 3 may, for example, include a pushing member that protrudes in the outer surface direction of the bump portion 212 and presses the inner surface of the groove of the peripheral device when the bump portion 212 is matched.

### [3-9. Left controller]

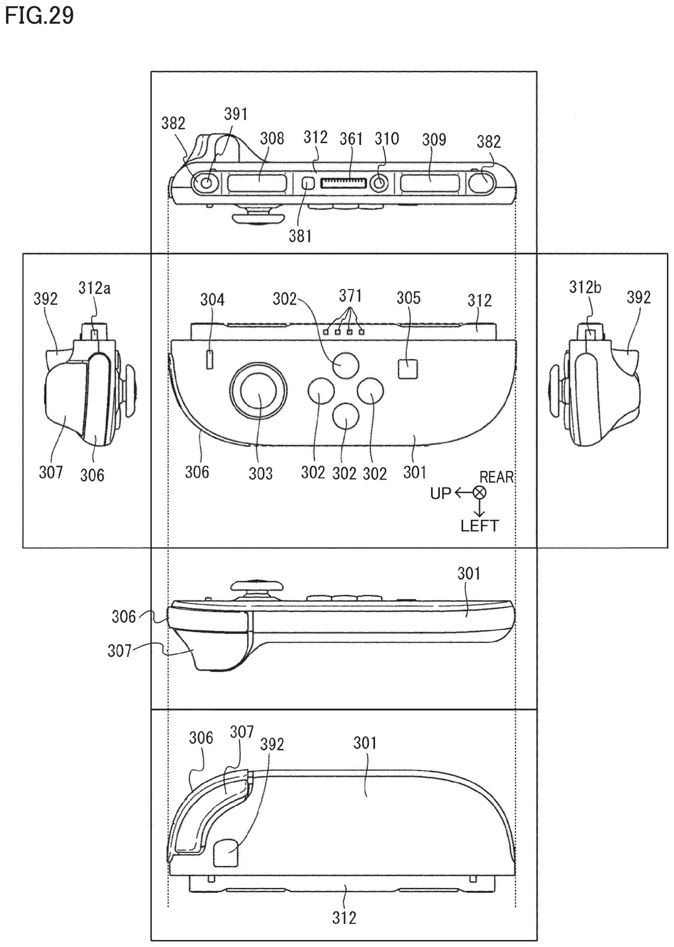

Referring to FIG. 29, the configuration of the left controller 4 will be described. Note that the description of the left controller 4 will focus on the differences from the right controller 3, and a detailed description will be omitted for elements similar to those of the right controller 3.

FIG. 29 is a six-sided view showing an example of the configuration of the left controller 4. As shown in FIG. 29, the left controller 4 includes a housing 301. The housing 301 of the left controller 4 has a shape in left-right symmetry with the housing 201 of the right controller 3 (e.g.., a shape in plane symmetry with respect to a plane perpendicular to the left-right direction). That is, the housing 301 of the left controller 4 has a shape with a bump portion 312 on the right side surface. Note however that, because the right controller 3 and the left controller 4 have different arrangements of components such as buttons arranged on the front surface, the positions of the through holes formed on the front surface of the housing for these components are not symmetrical between the housing 301 of the left controller 4 and the housing 201 of the right controller 3.

Input sections that can be operated by the user are arranged on the front surface of the housing 301. Specifically, the left controller 4 includes four buttons 302 whose configuration is the same as the four buttons 202 of the right controller 3. The left controller 4 also includes an analog stick 303 whose configuration is the same as the analog stick 203 of the right controller 3. At the front surface of the housing 301, the analog stick 303 is arranged on the upper side relative to the center of the front surface. At the front surface of the housing 301, the four buttons 302 are arranged on the lower side relative to the analog stick 303.

As described above, between the right controller 3 and the left controller 4, the positional relationship of the four buttons and the analog stick is reversed with respect to the longitudinal direction of the controllers (e.g., the up-down direction). When the two users each hold one of the controllers 3 and 4 in the horizontal holding position (more specifically, with the bump portion facing toward the far side as seen by the user), the analog stick is positioned at the left side and the four buttons are positioned at the right side for both controllers (see FIG. 4).

The left controller 4 includes a "-" button (read "minus button") 304. The "-" button 304 is arranged at the front surface of the housing 301, more specifically, in an upper right area of the front surface. The "-" button 304 is arranged at the upper side relative to the analog stick 303. The "-" button 304 is used to provide instructions according to various programs (e.g., the OS program and an application program) executed on the main body apparatus 2.

The left controller 4 includes a third function button 305. The third function button 305 is arranged on the front surface of the housing 301, more specifically in a lower right area of the front surface. The third function button 305 is arranged at the lower side relative to the four buttons 302. From the above, in the present embodiment, the "-" minus button 304, the analog stick 303, the four buttons 302, and the third function button 305 are arranged in this order from the top at the front surface of the left controller 4. The third function button 305 is used, for example, to give instructions to save an image displayed on the display 12 during execution of an application on the main body apparatus 2.

The left controller 4 includes a left front shoulder button 306 similar to the right front shoulder button 206 of the right controller 3. The shape and placement of the left front shoulder button 306 is in left-right symmetry with the right front shoulder button 206. The left controller 4 also includes a left rear shoulder button 307 similar to the right rear shoulder button 207 of the right controller 3. The shape and arrangement of the left rear shoulder button 307 is in left-right symmetry with the right rear shoulder button 207.

The left controller 4 includes a side surface upper button 308 and a side surface lower button 309 at the right side surface of the housing 301. The side surface upper button 308 and the side surface lower button 309 are similar in configuration to the side surface upper button 208 and the side surface lower button 209 of the right controller 3. Therefore, for the left controller 4, the side surface upper button 308 and the side surface lower button 309 function as a mechanism for attaching the left controller 4 to the main body apparatus 2 (specifically, maintaining the attachment therebetween).

The left controller 4 includes, in the bump portion 312, elements similar to those provided in the bump portion 212 of the right controller 3. That is, a connector 361, a fourth function button 310, a mouse sensor 381, an upper mouse sole 382, and a lower mouse sole 383 are arranged at the protruding surface of the bump portion 312. The connector 361 is a connector for the left controller 4 to communicate with the main body apparatus 2 when the left controller 4 is attached to the main body apparatus 2. The fourth function button 310 is used, for example, to give the same instruction as the second function button of the right controller 3. The indicators 371 as many as the indicators 271 of the right controller 3 (four in this case) are arranged at the outer surface of the bump portion 312. Note that the bump portion 312 of the left controller 4 and the components provided at the bump portion 312 are in left-right symmetry with the bump portion 212 of the right controller 3 and the components provided at the bump portion 212.

The left controller 4 includes the same mechanism as that of the right controller 3 as a detaching mechanism to assist in the operation to detach the left controller 4, attached to the main body apparatus 2, from the main body apparatus 2. That is, the left controller 4 includes a pusher 391 arranged in the bump portion 312, and a pusher operating section 392 arranged at the rear surface of the housing 301. The pusher 391 and the pusher operating section 392 of the left controller 4 are in left-right symmetry with the pusher 291 and the pusher operating section 292 of the right controller 3.

A first engagement hole 312a and a second engagement hole 312b, similar to the engagement holes 212a and 212b formed in the bump portion 212 of the right controller 3, are formed in the bump portion 312 of the left controller 4. Therefore, in the present embodiment, it is also possible to attach, to the left controller 4, the peripheral device described above, which can be attached to the right controller 3.

As described above, in the present embodiment, for the configuration for attaching to the main body apparatus 2, the left controller 4 includes the same elements as those of the right controller 3, except that they are in left-right symmetry. Therefore, the user can attach the left controller 4 to the main body apparatus 2 in the same manner as the right controller 3. However, in other embodiments, the configuration of the right controller 3 and the configuration of the left controller 4 do not need to be the same. For example, in other embodiments, the shape of the bump portion 312 of the left controller 4 may be different from the shape of the bump portion 212 of the right controller 3.

### [3-10. Electrical configuration of controllers]

FIG. 30 is a block diagram showing an example of the electrical configuration of the game system 1. Note that the details of the electrical configuration for the main body apparatus 2 of the game system 1 are shown in FIG. 15 and are therefore omitted in FIG. 30.

### (Configuration regarding communication)

The right controller 3 includes the communication control section 401 that communicates with the main body apparatus 2. As shown in FIG. 30, the communication control section 401 is electrically connected to components including the connector 261 described above (see FIG. 30). In the present embodiment, the communication control section 401 can communicate with the main body apparatus 2 both by wired communication via the connector 261 and by wireless communication without the connector 261. The communication control section 401 controls the method used by the right controller 3 for communicating with the main body apparatus 2. That is, when the right controller 3 is attached to the main body apparatus 2, the communication control section 401 communicates with the main body apparatus 2 via the connector 261. When the right controller 3 is detached from the main body apparatus 2, the communication control unit 401 performs wireless communication with the main body apparatus 2 (specifically, the controller communication section 108) using an antenna not shown in the figures. The wireless communication between the controller communication section 108 and the communication control section 401 is performed in accordance with the Bluetooth (registered trademark) standard, for example.

The right controller 3 includes a memory 402, for example, a flash memory. The communication control section 401 is realized by a microcontroller (also called a microprocessor), for example, and executes various processes by executing firmware stored in the memory 402.

### (Configuration regarding input)

The right controller 3 includes buttons 403 (specifically, the buttons 202 and 204 to 210 described above) and the analog stick 203 (denoted as "stick" in FIG. 30). The buttons 403 and the analog stick 203 repeatedly output information regarding operations performed thereon to the communication control section 401 at appropriate times.

The right controller 3 includes an acceleration sensor 404. In the present embodiment, the acceleration sensor 404 detects the magnitude of linear acceleration along predetermined three axis directions. Note that the acceleration sensor 404 may detect acceleration in one or two axis directions.

The right controller 3 includes an angular velocity sensor 405. In the present embodiment, the angular velocity sensor 405 detects the angular velocity about the predetermined three axes. Note that the angular velocity sensor 405 may detect the angular velocity about one axis or two axes.

The right controller 3 includes the magnetic sensor 406. The magnetic sensor 406 detects the strength and/or direction of the magnetic field. For example, the attitude of the right controller 3 calculated based on the detection results of the acceleration sensor 404 can be corrected based on the detection results of the magnetic sensor 406 to thereby accurately calculate the attitude of the right controller 3.

The right controller 3 also includes the mouse sensor 281 described above. The detection results of the sensors 404 to 406 and 281 are repeatedly outputted to the communication section 401 at appropriate times.

The communication control section 401 is electrically connected to the input sections (specifically, the buttons 403, the analog stick 203, and the sensors 281 and 404 to 406), and acquires information regarding the inputs from the input sections (specifically, information regarding the operation or the detection results by the sensors). The communication control section 401 transmits operation data including the acquired information (or information obtained by performing a predetermined process on the acquired information) to the main body apparatus 2. Note that the operation data is repeatedly transmitted at a rate of once per a predetermined period of time. Note that the interval at which information regarding the input is transmitted to the main body apparatus 2 may or may not be the same between the input sections.

By transmitting the operation data to the main body apparatus 2, the main body apparatus 2 can know the input made to the right controller 3. That is, the main body apparatus 2 can determine the operation on the buttons 403 and the analog stick 203 based on the operation data. The main body apparatus 2 can calculate information regarding the movement and/or the attitude of the right controller 3 based on the operation data (specifically, the detection results of the sensors 281 and 404 to 406).

### (Configuration regarding output)

The indicators 271 described above are electrically connected to the communication control section 401. In the present embodiment, the indicators 271 are controlled by an instruction from the main body apparatus 2. That is, when the communication control section 401 receives the instruction from the main body apparatus 2, the communication control section 401 outputs a control signal to the indicators 271 for controlling ON/OFF of the indicators 271 in accordance with the instruction.

### (Configuration regarding power)

The right controller 3 includes a power supply section 407. In the present embodiment, the power supply section 407 has a battery and a power control circuit. Although not shown in the figures, the power control circuit is electrically connected to the battery and to the parts of the right controller 3 (specifically, the parts that receive power supply from the battery). The power control circuit controls the power supply from the battery to the parts. The battery is also electrically connected to the connector 261. In the present embodiment, when the right controller 3 is attached to the main body apparatus 2, the battery is charged by the power supply from the main body apparatus 2 via the connector 261 under a predetermined condition.

Regarding the configuration shown in FIG. 30, the left controller 4 also includes the same configuration as the right controller 3. That is, the left controller 4 includes a communication control section 411 and a memory 412, and executes the same information processes as does the right controller 3. The left controller 4 also includes an acceleration sensor 414, an angular velocity sensor 415, and a magnetic sensor 416, as does the right controller 3. The left controller 4 also includes a power supply section 417, as does the right controller 3.

Note that the configuration of the controllers 3 and 4 described above is an example and is not limited to the above. For example, the controllers 3 and 4 may include a vibrator for vibrating the controller itself, in addition to the elements shown in FIG. 30. The elements of the right controller 3 and the elements of the left controller 4 do not need to be the same. For example, the right controller 3 may include an NFC communication section for short-range wireless communication based on the NFC (Near Field Communication) standard and have the function of a so-called NFC reader/writer. For example, the right controller 3 may also include an infrared camera for imaging the surroundings of the right controller 3.

### [4. Mode of use of game system]

### [4-1. When attaching controllers to main body apparatus]

In the present embodiment, the controllers 3 and 4 can be attached to the main body apparatus 2 as described above. The operation performed by the user for attaching the right controller 3 to the main body apparatus 2 will be described below.

FIG. 31 is a view showing an example of the state during the operation of attaching the right controller 3 to the main body apparatus 2. In the present embodiment, the user first inserts one end of the bump portion 212 of the right controller 3 in the longitudinal direction (the lower end in FIG. 31) into the groove 2a on the right side surface of the main body apparatus 2 (see FIG. 31). Then, the user inserts the bump portion 212 further into the groove 2a and matches the bump portion 212 with the groove 2a. This allows the right controller 3 to be attached to the main body apparatus 2. In the present embodiment, since the groove 2a of the main body apparatus 2 extends long, the user can easily match the bump portion 212 with the groove 2a by inserting one end of the bump portion 212 of the right controller 3 into any position of the groove 2a, and then inserting the bump portion 212 further into the groove 2a while sliding the inserted portion as necessary.

In the present embodiment, since the end portions of the bump portion 212 are rounded, it is easy to perform the insertion operation even when one end portion of the bump portion 212 of the right controller 3 in the longitudinal direction is first inserted into the groove 2a of the main body apparatus 2. As described above, in the present embodiment, the inner surface 64 of the groove 2a of the main body apparatus 2 gradually becomes wider in the direction away from the base surface 61 of the main body apparatus 2, which also makes the insertion operation easier to perform. In the present embodiment, the outer surface 215 of the bump portion 212 of the right controller 3 gradually becomes narrower in the direction away from the base surface 213 of the right controller 3, which also makes the insertion operation easier to perform. Furthermore, in the present embodiment, the inclination angle θ2 of the outer surface 215 of the bump portion 212 relative to the base surface 213 of the right controller 3 is larger than the inclination angle θ1 of the inner surface 64 of the wall portion 63 relative to the base surface 61 of the main body apparatus 2. This makes the insertion operation easier to perform.

Note that when matching the bump portion 212 of the right controller 3 with the groove 2a of the main body apparatus 2, the attraction with which the buttons are pulled toward each other by the magnetic force of the magnetic members increases as the distance between the side surface upper button 208 of the right controller 3 and the upper right magnetic member 51 of the main body apparatus 2 or the distance between the side surface lower button 209 of the right controller 3 and the lower right magnetic member 52 of the main body apparatus 2 becomes somewhat close. Therefore, the operation of matching the bump portion 212 of the right controller 3 with the groove 2a of the main body apparatus 2 is supported by the attraction, thereby making it easier for the user to perform the operation.

In the present embodiment, when the side surface upper button 208 and the side surface lower button 209 are at the reference position, the mouse soles 282 and 283 are the most protruding ones of the components that are arranged on the protruding surface 214 of the bump portion 212 of the right controller 3. Therefore, when the right controller 3 is attached to the main body apparatus 2, the bump portion 212 is in the state where the mouse soles 282 and 283 are in contact with the cover 65, which is the bottom surface of the groove 2a of the main body apparatus 2.

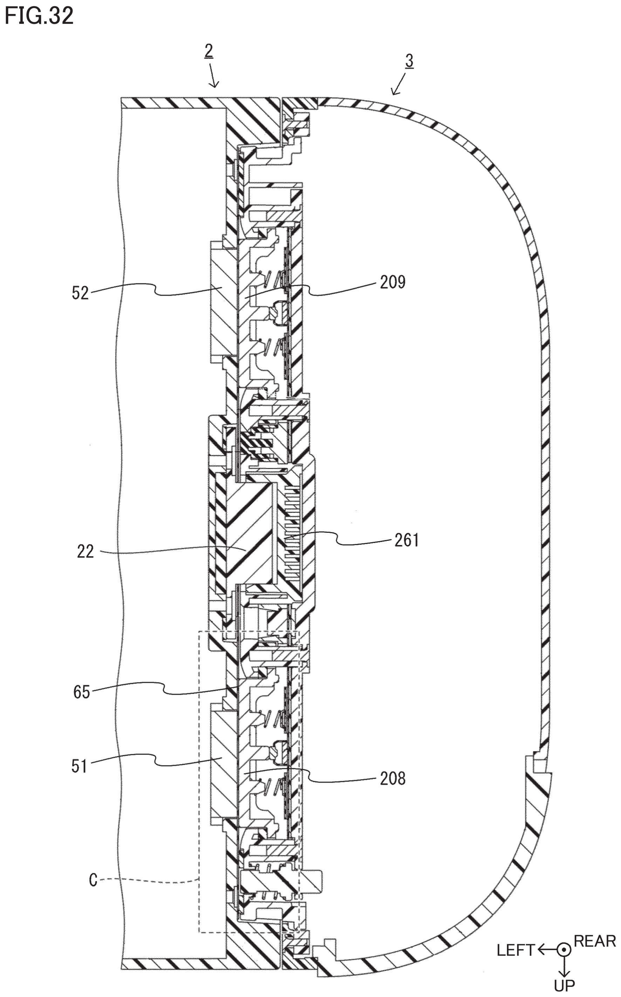

FIG. 32 is a cross-sectional view showing an example of the game system 1 when the right controller 3 is attached to the main body apparatus 2. FIG. 32 is a cross-sectional view taken along a plane that is perpendicular to the front-rear direction and includes the position of the right connector 22 of the main body apparatus 2. Note that in FIG. 32, the elements arranged on the right side surface of the main body apparatus 2 and the elements arranged on the bump portion 212 of the right controller 3 of the right controller 3 are shown, while omitting the other elements.

As shown in FIG. 32, when the right controller 3 is attached to the main body apparatus 2, the upper right magnetic member 51 of the main body apparatus 2 and the side surface upper button 208 of the right controller 3 oppose each other with the cover 65 therebetween, and the lower right magnetic member 52 of the main body apparatus 2 and the side surface lower button 209 of the right controller 3 oppose each other with the cover 65 therebetween. Thus, when the magnetic members 51 and 52 of the main body apparatus 2 and the buttons 208 and 209, which are ferromagnetic, come into close proximity to each other, a sufficient attracting force by the magnetic force is created, thereby maintaining the attachment of the right controller 3 to the main body apparatus 2.

As described above, in the present embodiment, the side surface upper button 208 is arranged at a position corresponding to the upper right magnetic member 51 of the main body apparatus 2 when the right controller 3 is attached to the main body apparatus 2. That is, in the present embodiment, the side surface upper button 208 is arranged at a position opposing the upper right magnetic member 51 with the cover 65 therebetween when the right controller 3 is attached to the main body apparatus 2. Note that as seen from the left-right direction in the above state, the configuration described above includes at least three modes as follows: (a) a mode in which the surface opposing the upper right magnetic member 51 (e.g., the surface of the upper right magnetic member 51 that is facing toward the outside of the housing 11) is entirely located inside the operation surface of the side surface upper button 208, (b) a mode in which the center position of at least one of the surface opposing the upper right magnetic member 51 and the operation surface of the side surface upper button 208 is located inside the other, and (c) a mode in which at least a part of the surface opposing the upper right magnetic member 51 overlaps at least a part of the operation surface of the side surface upper button 208. The present embodiment can be said to be in any of the modes (a) to (c). With the configuration above, in the state described above, it is possible to increase the attracting force as compared to the case where the side surface upper button 208 is arranged at a position that does not oppose the upper right magnetic member 51 with the cover 65 therebetween. Note that, in other embodiments, the surface opposing the upper right magnetic member 51 may be larger than the operation surface of the side surface upper button 208. At this time, in the state described above, it can be said that the mode in which the operation surface of the side surface upper button 208 is entirely located inside the surface opposing the upper right magnetic member 51 as seen from the left-right direction is included in the configuration above. Note that, in the present embodiment, the side surface lower button 209 is arranged at a position corresponding to the lower right magnetic member 52 when the right controller 3 is attached to the main body apparatus 2.

Note that in the present embodiment, the main body apparatus 2 includes two magnetic members 51 and 52 on the right side surface, and the right controller 3 includes two ferromagnetic members (e.g., the buttons 208 and 209) on the bump portion 212. Therefore, when the right controller 3 is attached to the main body apparatus 2, since attracting force is generated at two locations, the attachment therebetween can be firmer as compared to the case where attracting force is generated at only one location. Since the right controller 3 is attracted to the main body apparatus 2 at two different locations, it is possible to suppress the right controller 3 from rotating to be misaligned with the main body apparatus 2.

In the present embodiment, in the main body apparatus 2, the right connector 22 is arranged between the upper right magnetic member 51 and the lower right magnetic member 52. In the right controller 3, the connector 261 is arranged between the side surface upper button 208 and the side surface lower button 209. Therefore, when the right controller 3 is attached to the main body apparatus 2 with the magnetic members 51 and 52 and the buttons 208 and 209 being attracted to each other, misalignment is unlikely to occur between the right connector 22 of the main body apparatus 2 and the connector 261 of the right controller 3.

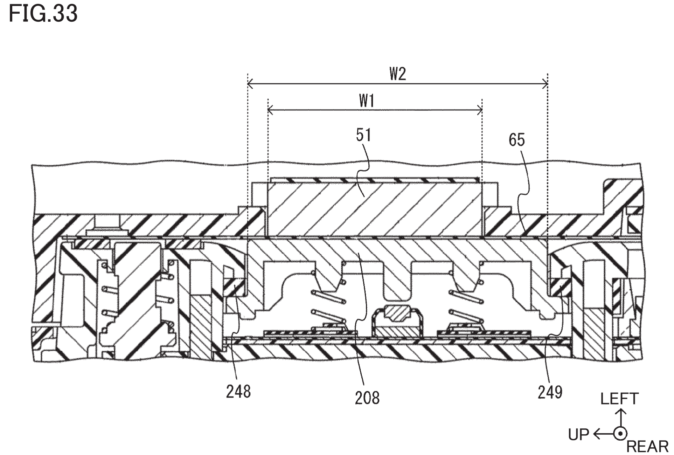

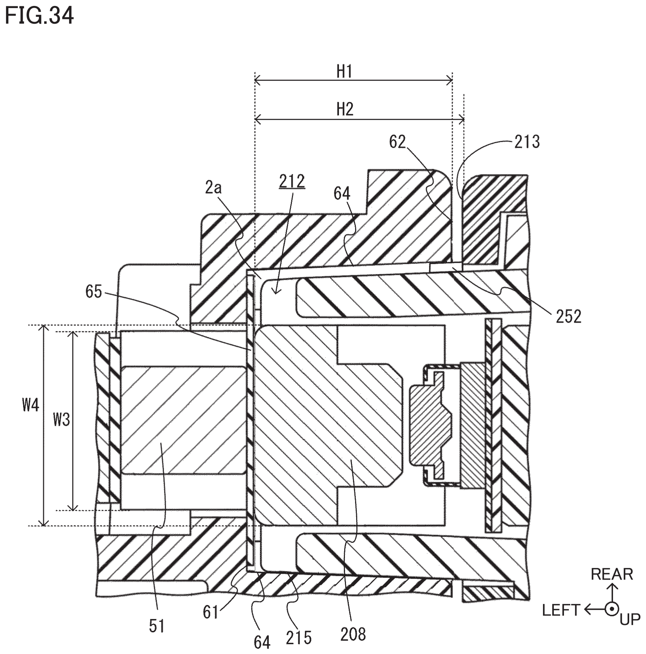

FIG. 33 and FIG. 34 are cross-sectional views showing an example of the configuration of the game system 1 at the position of the upper right magnetic member 51 and the side surface upper button 208 when the right controller 3 is attached to the main body apparatus 2. FIG. 33 is an enlarged view of the dotted area C shown in FIG. 32, and is a cross-sectional view taken along a plane perpendicular to the front-rear direction. FIG. 34 is a cross-sectional view taken along a plane perpendicular to the front-rear direction.

When the right controller 3 is attached to the main body apparatus 2, the side surface upper button 208 is subject to attraction (e.g., attracting force) by the magnetic force of the upper right magnetic member 51. As described above, in the present embodiment, the side surface upper button 208 is movable in the direction of protruding more than the reference position (e.g., the left direction). In the present embodiment, when the right controller 3 is attached to the main body apparatus 2, the side surface upper button 208 moves to a position where it is in contact with the main body apparatus 2 (specifically, in contact with the cover 65 of the main body apparatus 2), as shown in FIG. 33 and FIG. 34. Therefore, in the state described above, the mouse soles 282 and 283 and the side surface upper button 208 and the side surface lower button 209 of the right controller 3 are in contact with the cover 65, which is the bottom surface of the groove 2a of the main body apparatus 2. As described above, as the side surface upper button 208 moves to the position described above, the distance between the upper right magnetic member 51 and the side surface upper button 208 becomes closer, and the attraction therebetween increases. Thus, it is possible to effectively generate the attraction by the magnetic force of the upper right magnetic member 51, and it is possible to firmly attach the right controller 3 to the main body apparatus 2.

Note that, in the present embodiment, with respect to the direction in which the side surface upper button 208 protrudes, the operation surface of the side surface upper button 208 can move to a position where it is protruding more than portions that are most protruding (referred to as the "most protruding portions") of components arranged on the protruding surface 214 and the protruding surface 214 of the bump portion 212. Note that the direction in which the side surface upper button 208 protrudes is the direction opposite to the direction in which the side surface upper button 208 is pressed down, specifically, the left direction with respect to the orientation of the game system 1. In the present embodiment, the most protruding portions are the mouse soles 282 and 283. From the above, when the right controller 3 is attached to the main body apparatus 2, the side surface upper button 208 moves to a position where the side surface upper button 208 contacts the cover 65 of the main body apparatus 2, and it is possible to increase the attraction by the magnetic force of the upper right magnetic member 51. Note that the side surface upper button 208 does not need to be movable to a position where the side surface upper button 208 protrudes more than the most protruding portions, but may be movable to the same position as the most protruding portions.

In other embodiments, the side surface upper button 208 may be configured to be movable in the direction of protruding more than the reference position, but not movable to a position where it is protruding more than the most protruding portions. That is, when the right controller 3 is attached to the main body apparatus 2, the side surface upper button 208 moves closer to the cover 65 from the reference position, but there may be a gap between the side surface upper button 208 and the cover 65. Even with the configuration above, since the side surface upper button 208 moves closer to the upper right magnetic member 51 in the state described above, the attraction applied to the side surface upper button 208 by the magnetic force of the upper right magnetic member 51 can be made greater than when the side surface upper button 208 does not move from the reference position.

Note that "attraction" in the present specification means that two members that are attracted to each other (e.g., the upper right magnetic member 51 and the side surface upper button 208) are pulled toward each other regardless of whether there is another object (e.g., cover 65) therebetween. That is, as shown in FIG. 33 and FIG. 34, when the upper right magnetic member 51 and the side surface upper button 208 are pulled toward each other with the cover 65 between the upper right magnetic member 51 and the side surface upper button 208, it can also be said that "the upper right magnetic member 51 and the side surface upper button 208 are attracted to each other".

In other embodiments, the main body apparatus 2 does not need to include the cover 65, and the upper right magnetic member 51 and the side surface upper button 208 may be in direct contact with each other when the right controller 3 is attached to the main body apparatus 2.

In the present embodiment, the cover 65 is made of a material whose specific permeability is close to 1 (more specifically, the specific permeability is substantially 1). According to this, it is possible to increase the magnetic flux by the upper right magnetic member 51 that passes through the cover 65, and it is possible to increase the attracting force by the upper right magnetic member 51.

In the present embodiment, the cover 65 may be made of an insulative material. Here, in the present embodiment, the side surface upper button 208 is conductive, but since the cover 65 is made of an insulative material, the upper right magnetic member 51 and the side surface upper button 208 are not electrically connected when the right controller 3 is attached to the main body apparatus 2. This allows the potential of the upper right magnetic member 51 (e.g., the potential of the ground in the main body apparatus 2) to be stabilized.

Note that the elastic deformation members 248 and 249, which bias the side surface upper button 208 in the direction opposite to the protruding direction above, are deformed to be compressed with respect to the direction in which the side surface upper button 208 moves when the right controller 3 is attached to the main body apparatus 2. That is, the elastic deformation members 248 and 249 are of a material and shape such that they are deformable to the extent that the side surface upper button 208 can move to a position where the side surface upper button 208 contacts the cover 65 by the attraction received from the upper right magnetic member 51 in the attached state. As described above, the elastic deformation members 248 and 249 do not contact the wall portion 242 of the side surface upper button 208 even when deformed in the attached state, thereby suppressing the possibility that the movement of the side surface upper button 208 is hindered by the elastic deformation members 248 and 249 contacting the side surface upper button 208.

As described above, in the present embodiment, the state where the right controller 3 is attached to the main body apparatus 2 is maintained by the attracting force by the magnetic force of the upper right magnetic member 51 and the lower right magnetic member 52 of the main body apparatus 2. Here, the attracting force generated by the main body apparatus 2 and the right controller 3 may be of such a magnitude as to prevent the right controller 3 from falling off from the main body apparatus 2 in a state where the right controller 3 is hanging down from the main body apparatus 2, for example. That is, the attracting force may be larger than the gravity applied to the right controller 3. According to this, it is possible to reduce the possibility of the attached state being released when the user holds only the main body apparatus 2 without touching the right controller 3.

Furthermore, the attracting force may be of such a magnitude as to prevent the main body apparatus 2 from falling off from the right controller 3 when the main body apparatus 2 is hanging down from the right controller 3. That is, the attracting force may be greater than the gravity applied to the main body apparatus 2. According to this, it is possible to reduce the possibility of the attached state being released when the user holds only the right controller 3 without touching the main body apparatus 2.

Furthermore, the attracting force may be of such a magnitude as to prevent the left controller 4 and the main body apparatus 2 from falling off from the right controller 3 when the main body apparatus 2 with the left controller 4 attached thereto is hanging down from the right controller 3. That is, the attracting force may be greater than the gravity applied to the main body apparatus 2 and the left controller 4. According to this, where the user holds only the right controller 3 without touching the main body apparatus 2 and the left controller 4 when the controllers 3 and 4 are attached to the main body apparatus 2, it is possible to reduce the possibility of the attached state being released.

As shown in FIG. 33, in the present embodiment, the length W2 of the side surface upper button 208 is longer than the length W1 of the upper right magnetic member 51 with respect to the up-down direction. When the right controller 3 is attached to the main body apparatus 2, the upper end of the upper right magnetic member 51 is on the lower side relative to the upper end of the side surface upper button 208, and the lower end of the upper right magnetic member 51 is on the lower side relative to the lower end of the side surface upper button 208. According to this, it is possible to increase the magnetic flux that passes through the side surface upper button 208, out of the magnetic fluxes passing through the tip surface of the upper right magnetic member 51 (e.g., the surface facing toward the side surface upper button 208), thereby increasing the attracting force acting on the side surface upper button 208.

As shown in FIG. 34, in the present embodiment, the length W4 of the side surface upper button 208 is longer than the length W3 of the upper right magnetic member 51 with respect to the front-rear direction. When the right controller 3 is attached to the main body apparatus 2, the front end of the upper right magnetic member 51 is on the front side relative to the front end of the side surface upper button 208, and the rear end of the upper right magnetic member 51 is on the rear side relative to the rear end of the side surface upper button 208. According to this, it is possible to increase the magnetic flux that passes through the side surface upper button 208, out of the magnetic fluxes passing through the tip surface of the upper right magnetic member 51, thereby increasing the attracting force acting on the side surface upper button 208.

From the above, in the present embodiment, when the right controller 3 is attached to the main body apparatus 2, the upper right magnetic member 51 and the side surface upper button 208 are in a positional relationship such that the entirety of the upper right magnetic member 51 overlaps the side surface upper button 208 as seen from the left-right direction. That is, in the state described above, the entirety of the tip surface of the upper right magnetic member 51 opposes the operation surface of the side surface upper button 208 with the cover 65 therebetween. According to this, since the magnetic flux passing through the tip surface of the upper right magnetic member 51 can efficiently pass through the side surface upper button 208, it is possible to increase the attracting force acting on the side surface upper button 208 as compared to the case where a part of the magnetic flux passing through the tip surface does not pass through the side surface upper button 208. Note that the center of the tip surface of the upper right magnetic member 51 and the center of the operation surface of the side surface upper button 208 do not need to coincide with each other with respect to the up-down direction and the left-right direction.

Note that, for each part of the right controller 3 for being attracted to the magnetic member of the main body apparatus 2, the attracting force is greater as the surface of the part facing toward the magnetic member when the right controller 3 is attached to the main body apparatus 2 is larger. Here, in the present embodiment, the side surface upper button 208 and the side surface lower button 209 are used as those parts, and the operation surfaces of the buttons 208 and 209 are "the surface facing toward the magnetic member". Therefore, in the present embodiment, by enlarging the operation surfaces of the side surface upper button 208 and the side surface lower button 209, it is possible to make it easier to operate the buttons 208 and 209 and increase the attracting force.

Note that when the right controller 3 is attached to the main body apparatus 2, the user cannot operate the side surface upper button 208 and the side surface lower button 209. That is, in the present embodiment, it can be said that buttons of the right controller 3 that are not used when the right controller 3 is attached to the main body apparatus 2 have the function of being attracted to the main body apparatus 2. Note that the right controller 3 includes the right front shoulder button 206 and the right rear shoulder button 207, and the left controller 4 includes the left front shoulder button 306 and the left rear shoulder button 307. Thus, when the right controller 3 is attached to the main body apparatus 2, the user can operate the shoulder buttons 206, 207, 306, and 307 instead of the side surface upper button 208 and the side surface lower button 209. According to the above, in the present embodiment, the right controller 3 can be attached to the main body apparatus 2 using the buttons without causing any inconvenience for the operation by the user.

As shown in FIG. 34, in the present embodiment, the height H2 of the bump portion 212 of the right controller 3 is longer than the depth H1 of the groove 2a of the main body apparatus 2. Here, the height H2 of the bump portion 212 is the length of the bump portion 212 in the left-right direction with respect to the orientation of the game system 1, and the depth H1 of the groove 2a is the length of the groove 2a in the left-right direction (see FIG. 34). Therefore, when the right controller 3 is attached to the main body apparatus 2, the protruding surface 62 of the main body apparatus 2 does not contact the base surface 213 of the right controller 3. The interval between the protruding surface 62 and the base surface 213 in the state described above may be 0.05 mm or more, for example.

Here, assuming that the protruding surface 62 and the base surface 213 are in contact with each other when the right controller 3 is attached to the main body apparatus 2, if a force is applied to rotate the right controller 3 so as to twist the right controller 3 in the up-down direction or the front-rear direction, a relatively large force may be applied to detach the right controller 3 from the main body apparatus 2, with the contact point between the protruding surface 62 and the base surface 213 being the fulcrum. In contrast, in the present embodiment, since the protruding surface 62 and the base surface 213 are apart from each other, it is possible to reduce the possibility of such a force being applied, with the contact point between the protruding surface 62 and the base surface 213 being the fulcrum.

As described above, in the present embodiment, the inclination angle θ2 of the outer surface 215 of the bump portion 212 with respect to the base surface 213 of the right controller 3 is greater than the inclination angle θ1 of the inner surface 64 of the wall portion 63 relative to the base surface 61 of the main body apparatus 2 (i.e., the inclination is steep). Therefore, when the right controller 3 is attached to the main body apparatus 2, a gap is created between the inner surface 64 and the outer surface 215. Here, in the present embodiment, the first elastic deformation member 248 and the third elastic deformation member 252 are arranged on the outer surface 215 (see FIG. 16). Note that the amount of protrusion of the elastic deformation members 248 and 252 from the outer surface 215 is larger than the gap between the inner surface 64 and the outer surface 215. Therefore, when the right controller 3 is attached to the main body apparatus 2, the elastic deformation members 248 and 252 contact the inner surface 64. Since the elastic deformation members 248 and 252 are arranged on the rear surface side of the outer surface 215, in the state described above, the elastic deformation members 248 and 252 contact the inner surface 64 on the rear surface side of the outer surface 215, and the front surface side of the outer surface 215 contacts the inner surface 64 (see FIG. 34). According to the above, it is possible to suppress rattling of the right controller 3 as attached to the main body apparatus 2.

In the present embodiment, the elastic deformation members 248 and 252 are arranged at the end portion of the outer surface 215 at the side that is closer to the base surface 213 of the right controller 3 (i.e., the right side with respect to the orientation of the game system 1). Therefore, when the user performs the operation of attaching the right controller 3 to the main body apparatus 2, the left side portion of the bump portion 212 of the right controller 3 is inserted into the groove 2a of the main body apparatus 2, and then the elastic deformation members 248 and 252 contact the inner surface 64 of the groove 2a. That is, until the bump portion 212 is inserted into the groove 2a to some extent, there is no friction between the elastic deformation members 248 and 252 and the inner surface 64, thereby improving the operability of the attaching operation.

Note that points that have been described above for the state where the controller and the main body apparatus 2 are attached together are the same also for combinations other than the combination of the upper right magnetic member 51 and the side surface upper button 208, as for the combination of the upper right magnetic member 51 and the side surface upper button 208. Therefore, the combination of the lower right magnetic member 52 and the side surface lower button 209, the combination of the upper left magnetic member 53 and the side surface upper button 308 of the left controller 4, and the combination of the lower left magnetic member 54 and the side surface lower button 309 of the left controller 4 have the same effect as the combination of the upper right magnetic member 51 and the side surface upper button 208. The same effect can also be achieved for the attachment of the left controller 4 to the main body apparatus 2 as the attachment of the right controller 3 to the main body apparatus 2.

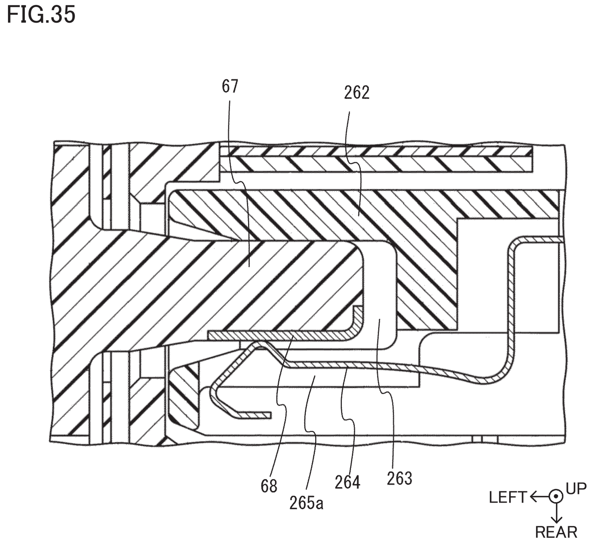

FIG. 35 is a cross-sectional view showing an example of the game system 1 at the position of the connector 261 when the right controller 3 is attached to the main body apparatus 2. FIG. 35 is a cross-sectional view taken along a plane perpendicular to the up-down direction. As shown in FIG. 35, when the right controller 3 is attached to the main body apparatus 2, the tongue 67 of the right connector 22 of the main body apparatus 2 is inserted into the housing area 263 formed by the socket 262 of the connector 261 of the right controller 3. At this time, the group of terminals 68 of the main body apparatus 2 arranged on the tongue 67 contacts the group of terminals 264 of the right controller 3, and they are electrically connected. Specifically, the portions of the terminals of the group of terminals 264 of the right controller 3 that protrude from the slit 265a of the socket 262 toward the housing area 263 contact the terminals of the group of terminals 68 of the main body apparatus 2.

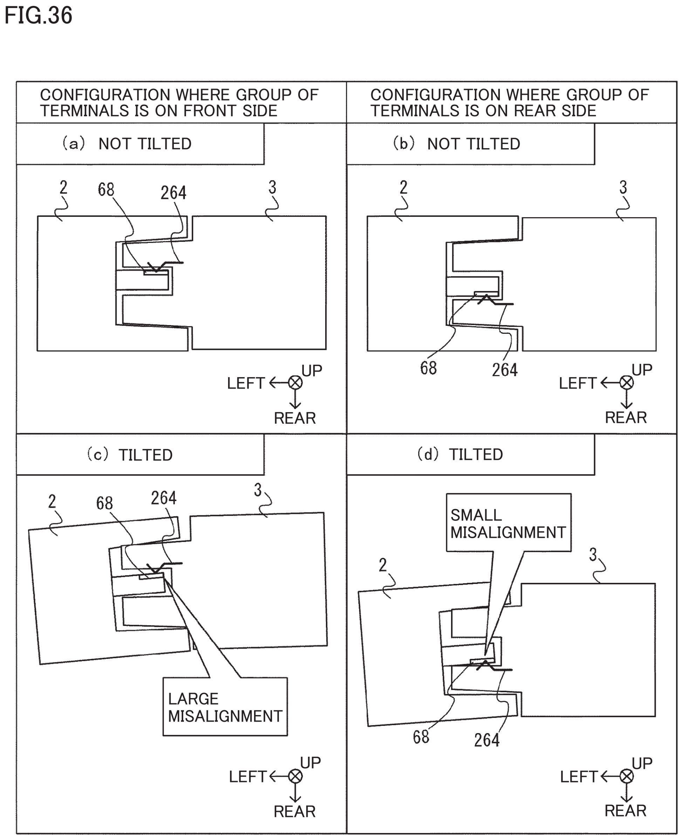

FIG. 36 is a view showing an example of the positional relationship when the main body apparatus 2 and the right controller 3 are attached. FIG. 36 shows the configuration in which the groups of terminals of the main body apparatus 2 and the right controller 3 are arranged on the front side, and the configuration in which the groups of terminals are arranged on the rear side. The former configuration is a configuration where the group of terminals 68 of the main body apparatus 2 is arranged at the front side of the tongue 67 and the group of terminals 264 of the right controller 3 is arranged at the front side of the socket 262 (see (a) in FIG. 36). The latter configuration is a configuration where the group of terminals 68 of the main body apparatus 2 is arranged at the rear side of the tongue 67 and the group of terminals 264 of the right controller 3 is arranged at the rear side of the socket 262 (e.g., the configuration of the present embodiment) (see (b) in FIG. 36).

Where the user grasps the game system 1 with the controllers attached to the main body apparatus 2 in such an orientation that the front surface faces up, it may be possible that the user holds only one of the controllers, or that the user holds one of the controllers so that the weight of the game system 1 is supported while merely placing a hand on the other controller. In this case, it may also be possible that the user holds the right controller 3 portion of the game system 1 with one hand. In such a case, while the attachment of the main body apparatus 2 to the right controller 3 is maintained, the main body apparatus 2 may have the front side portion of the protruding surface 214 of the right side surface slightly tilt in the direction away from the base surface 213 of the right controller 3 by its own weight (see (c) and (d) in FIG. 36).

If the game system 1 has a configuration in which the groups of terminals of the main body apparatus 2 and the right controller 3 are arranged on the front side, when the main body apparatus 2 tilts as described above, the misalignment between the group of terminals 68 of the main body apparatus 2 and the group of terminals 264 of the right controller 3 becomes large (see (c) in FIG. 36). As a result, the connection between the terminals may be cut off. In contrast, in the present embodiment, since the groups of terminals of the main body apparatus 2 and the right controller 3 are arranged on the rear side, when the main body apparatus 2 tilts as described above, the misalignment between the group of terminals 68 of the main body apparatus 2 and the group of terminals 264 of the right controller 3 will not be so large (see (d) in FIG. 36). This reduces the possibility that the connection between the terminals may be cut off.

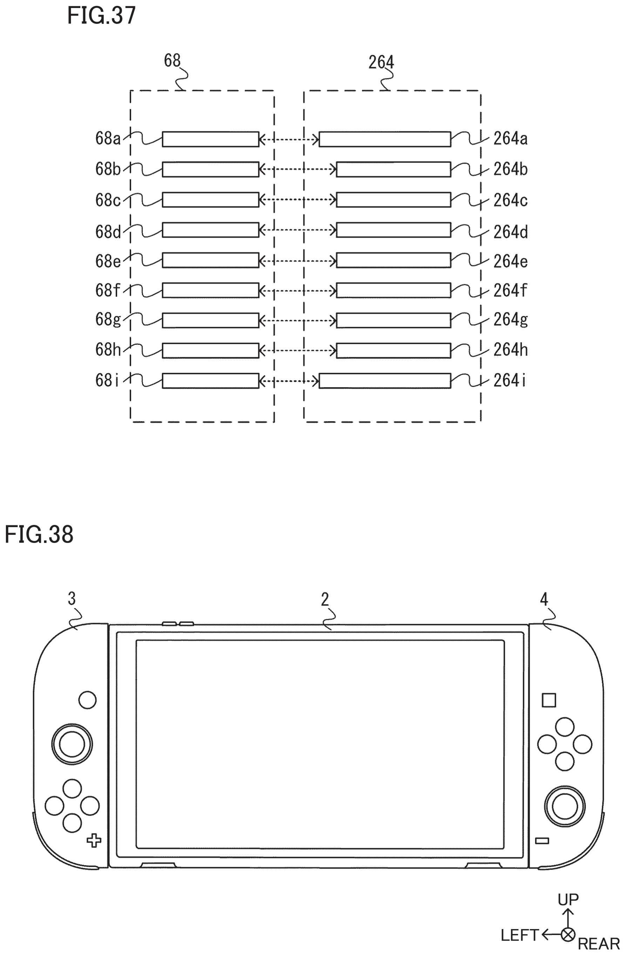

FIG. 37 is a view showing an example of the connection relationship between the group of terminals 68 of the main body apparatus 2 and the group of terminals 264 of the right controller 3. In the present embodiment, the group of terminals 68 of the main body apparatus 2 and the group of terminals 264 of the right controller 3 each include nine terminals. In FIG. 37, the nine terminals of the main body apparatus 2 are denoted as the first terminal 68a to the ninth terminal 68i in this order from the top, and the nine terminals of the right controller 3 are denoted as the first terminal 264a to the ninth terminal 264i in this order from the top. When the right controller 3 is attached to the main body apparatus 2, the n^{th} terminal of the main body apparatus 2 (n is a natural number from 1 to 9) is electrically connected to the n^{th} terminal of the right controller 3 (see the dotted arrows shown in FIG. 37).

In the present embodiment, the functions of the first to ninth terminals of the main body apparatus 2 and the right controller 3 are set as follows.
First terminal: Ground
Second terminal: Detect connection from first device to second device
Third terminal: Signal
Fourth terminal: Power supply from first device to second device
Fifth terminal: Free
Sixth terminal: Power supply from second device to first device
Seventh terminal: Signal
Eighth terminal: Detect connection from second device to first device
Ninth terminal: Ground

As described above, in the present embodiment, the functions of the nine terminals are assigned in symmetry with respect to the up-down direction. Note that the functions of the nine terminals of the left connector 23 of the main body apparatus 2 and the nine terminals of the left controller 4 are the same as above. Note that there is no limitation on the functions of the terminals of the main body apparatus 2 and the controllers 3 and 4, and are not limited to the above. In other embodiments, the functions of the terminals do not need to be assigned in symmetry with respect to the up-down direction.

FIG. 38 is a view showing an example of the game system 1 with the right controller 3 and the left controller 4 attached to the main body apparatus 2 in the reversed manner. Note that hereinafter, the mode of attachment of the controllers 3 and 4 to the main body apparatus 2 shown in FIG. 1 will be referred to as the first mode of attachment, and the mode of attachment shown in FIG. 38 will be referred to as the second mode of attachment. Note that also in the following description, as in the above description, the up-down, left-right, and front-rear directions with respect to the game system 1 will be used to indicate the directions of the main body apparatus 2 and the controllers 3 and 4.

In the second mode of attachment, the right controller 3 is attached to the left side surface of the main body apparatus 2 and the left controller 4 is attached to the right side surface of the main body apparatus 2. In the present embodiment, the shape of the groove formed on the right side surface of the main body apparatus 2 as seen from the right side and the shape of the groove formed on the left side surface as seen from the left side are the same, and the shapes are in line symmetry with respect to the up-down direction. Therefore, as shown in FIG. 38, the right controller 3 can be attached to the left side surface of the main body apparatus 2 by inserting the bump portion 212 of the right controller 3 into the groove on the left side surface of the main body apparatus 2 while reversing the up-down orientation of the right controller 3. The left controller 4 can be attached to the right side of the main body apparatus 2 by inserting the bump portion 312 of the left controller 4 into the groove 2a on the right side surface of the main body apparatus 2 while reversing the up-down orientation of the left controller 4.

Note that in the present embodiment, the upper right magnetic member 51 and the lower right magnetic member 52 of the main body apparatus 2 are arranged in symmetry with respect to the up-down direction, and the upper left magnetic member 53 and the lower left magnetic member 54 of the main body apparatus 2 are arranged at the same position with respect to the up-down direction as the upper right magnetic member 51 and the lower right magnetic member 52. The side surface upper button 208 and the side surface lower button 209 of the right controller 3 are arranged in symmetry with respect to the up-down direction, and the side surface upper button 308 and the side surface lower button 309 of the left controller 4 are arranged at the same position with respect to the up-down direction as the side surface upper button 208 and the side surface lower button 209 of the right controller 3. Therefore, when the main body apparatus 2 and the controllers 3 and 4 are attached in the second mode of attachment, the buttons 208, 209, 308, and 309 of the controllers will be at a position opposing the magnetic member of the main body apparatus 2 with the cover being interposed, so that the attracting force generated between the magnetic member and the buttons can maintain the attachment between the main body apparatus 2 and the controllers 3 and 4.

In the present embodiment, the right connector 22 and the left connector 23 of the main body apparatus 2 are each arranged at the center of the bottom surface of the groove, and the connectors 261 and 361 of the controllers 3 and 4 are each arranged at the center of the protruding surface. Therefore, when the main body apparatus 2 and the controllers 3 and 4 are attached in the second mode of attachment, the tongue of the left connector 23 of the main body apparatus 2 is housed in the housing area 263 of the connector 261 of the right controller 3, and the tongue 67 of the right connector 22 of the main body apparatus 2 is housed in the housing area of the connector 361 of the left controller 4.

Furthermore, when the main body apparatus 2 and the controllers 3 and 4 are attached in the second mode of attachment, since the group of terminals of the left connector 23 of the main body apparatus 2 is oriented to oppose, and contact, the group of terminals 264 of the connector 261 of the right controller 3, they are electrically connected to each other. Since the group of terminals of the right connector 22 of the main body apparatus 2 is oriented to oppose the group of terminals of the connector 361 of the left controller 4, they are electrically connected to each other.

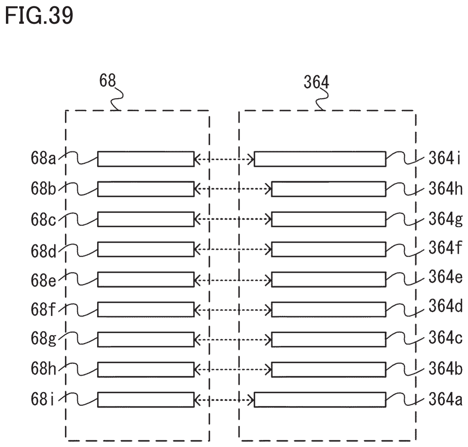

FIG. 39 is a view showing an example of the connection relationship between the group of terminals of the right connector 22 of the main body apparatus 2 and the group of terminals of the left controller 4 in the second mode of attachment. In the second mode of attachment, since the controllers 3 and 4 are upside down as compared to the first mode of attachment, the first to ninth terminals 364a to 364i of the group of terminals 364 of the left controller 4 are electrically connected to the first to ninth terminals 68a to 68i of the main body apparatus 2 while being reversed in the up-down direction (see FIG. 39). Thus, in the second mode of attachment, the n^{th} terminals of the connectors 22 and 23 of the main body apparatus 2 are electrically connected to the (10-n)^{th} terminals of the connectors 261 and 361 of the controllers 3 and 4 (n is a natural number from 1 to 9). Here, in the present embodiment, as described above, the functions of the terminals of the connectors 22, 23, 261, and 361 of the main body apparatus 2 and the controllers 3 and 4 are assigned in symmetry with respect to the up-down direction. Therefore, in the second mode of attachment shown in FIG. 38, the power supply and communication between the main body apparatus 2 and the controllers 3 and 4 can be performed. Note that in the second mode of attachment, since the third terminal of the main body apparatus 2 is electrically connected to the seventh terminal of the controller, and the seventh terminal of the main body apparatus 2 is electrically connected to the third terminal of the controller, the main body apparatus 2 may recognize the signal received by its own third terminal as the signal from the seventh terminal of the controller, and the signal received by its own seventh terminal as the signal from the third terminal of the controller.

As described above, in the present embodiment, the user can also use the game system 1 with the right controller 3 and the left controller 4 attached to the main body apparatus 2 in the reversed manner. Therefore, since the user can use the game system 1 by turning the main body apparatus 2 upside down, when the arrangement of the elements such as buttons and connectors differs between the upper side and the lower side of the main body apparatus 2, for example, the user can use the game system 1 with the elements in a desired arrangement by turning the main body apparatus 2 upside down. For example, in the present embodiment, the user can use the game system 1 with the main body apparatus 2 turned upside down, so that the audio input/output connector 18, which is arranged on the upper surface of the main body apparatus 2, is on the lower side of the main body apparatus 2. That is, the user can insert an earphone into the audio input/output connector 18 from a desired direction.

Note that the main body apparatus 2 may turn the image displayed on the display 12 upside down depending on whether the mode of attachment is in the first mode of attachment or in the second mode of attachment. That is, in the case of the second mode of attachment, the main body apparatus 2 may display the image on the display 12 while turning the image upside down from the first mode of attachment.

In the present embodiment, the shape of the groove formed on the right side surface of the main body apparatus 2 as seen from the right side and the shape of the groove formed on the left side surface as seen from the left side are the same, and their shapes are in line symmetry with respect to the front-rear direction. Therefore, the right controller 3 can be attached to the left side surface of the main body apparatus 2 by inserting the bump portion 212 of the right controller 3 into the groove on the left side surface of the main body apparatus 2 with the front-rear orientation of the right controller 3 reversed, and the left controller 4 can be attached to the left side surface of the main body apparatus 2 by inserting the bump portion 312 of the left controller 4 into the groove 2a on the right side surface of the main body apparatus 2 with the front-rear orientation of the left controller 4 reversed. Hereinafter, such a mode of attachment will be referred to as the third mode of attachment. Also in the third mode of attachment, as in the second mode of attachment, the buttons 208, 209, 308, and 309 of the controllers are at a position opposing the magnetic member of the main body apparatus 2 with the cover being interposed, so that the attracting force generated between the magnetic member and the buttons can maintain the attachment between the main body apparatus 2 and the controllers 3 and 4.

As described above, in the present embodiment, the controllers can be inserted into the grooves of the main body apparatus 2 with the up-down orientation of the controllers reversed, and the controllers can be inserted into the grooves of the main body apparatus 2 with the front-rear orientation of the controllers reversed. Therefore, in the present embodiment, it is also possible to attach the right controller 3 to the right side surface of the main body apparatus 2 in an orientation different from the first mode of attachment by inserting the bump portion 212 of the right controller 3 into the groove 2a of the right side surface of the main body apparatus 2 with the up-down orientation and the front-rear orientation of the right controller 3 reversed. It is also possible to attach the left controller 4 to the left side surface of the main body apparatus 2 in an orientation different from the first mode of attachment by inserting the bump portion 312 of the left controller 4 into the groove of the left side surface of the main body apparatus 2 with the up-down orientation and the front-rear orientation of the left controller 4 reversed. Hereinafter, such a mode of attachment will be referred to as the fourth mode of attachment.

Note that in the third and fourth modes of attachment, while the tongues of the connectors 22 and 23 of the main body apparatus 2 are housed in the housing areas of the connectors of the controllers 3 and 4, the group of terminals of the main body apparatus 2 is arranged so as not to oppose the group of terminals of the controllers 3 and 4. Therefore, in the third and fourth modes of attachment, wired communication between the main body apparatus 2 and the controllers 3 and 4 is not performed. Note that, in other embodiments, the group of terminals may be arranged on the rearward-facing surfaces of the tongues of the connectors 22 and 23 of the main body apparatus 2. In this case, wired communication between the main body apparatus 2 and the controllers 3 and 4 may be performed in the third and fourth modes of attachment.

### [4-2. When detaching controller from main body apparatus]

Next, the operation of detaching a controller from the main body apparatus 2 will be described. In the present embodiment, the user can detach the right controller 3 from the main body apparatus 2 using the pusher 291 described above.

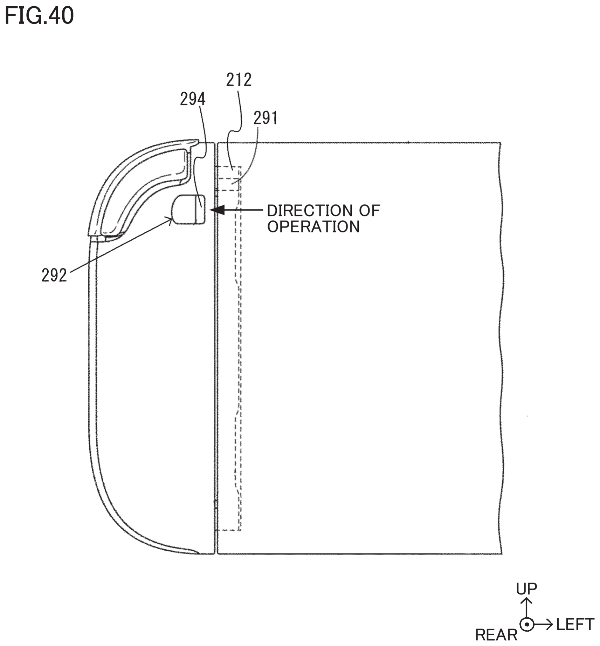

FIG. 40 is a view showing an example of the configuration of the game system 1 with the right controller 3 attached to the main body apparatus 2. When detaching the right controller 3 from the main body apparatus 2, the user first operates the pusher operating section 292 of the right controller 3. Specifically, the user operates the pusher operating section 292 so as to press the operation surface portion 294 of the pusher operating section 292 rightward (strictly, rightward and slightly forward) (see the arrow shown in FIG. 40). Note that, as shown in FIG. 40, in the state before the pusher operating section 292 is operated, the pusher 291 is inside the bump portion 212 of the right controller 3 and does not protrude from the bump portion 212.

Note that, in the present embodiment, the operation surface portion 294 of the pusher operating section 292 is arranged on the upper side relative to the center of the rear surface of the housing 201 with respect to the up-down direction. The operation surface portion 294 is operated in the right direction. Therefore, the user can operate the operation surface portion 294 by moving, as if to squeeze the operation surface portion 294, the right index finger or the right middle finger, which are positioned on the rear surface of the housing 201 to hold the game system 1. Thus, it is easy to perform the operation on the pusher operating section 292.

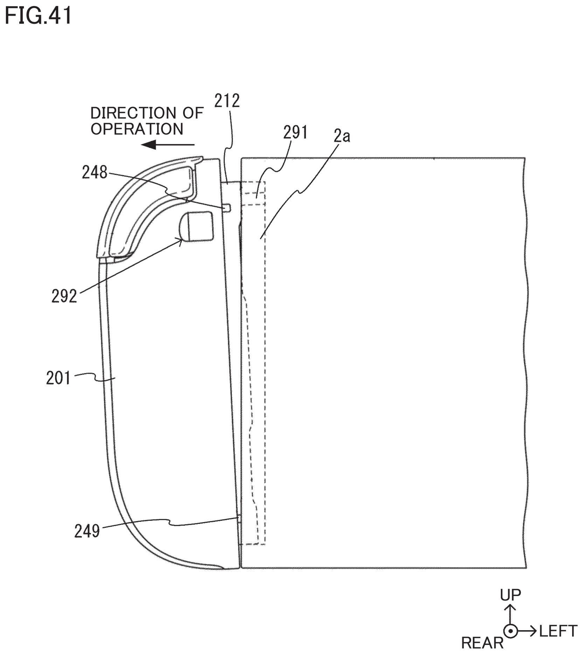

FIG. 41 is a view showing an example of the game system 1 in the state where the pusher operating section 292 is operated and the pusher 291 is protruding from the bump portion 212. When the pusher operating section 292 is operated, as shown in FIG. 41, the pusher 291 protrudes from the bump portion 212 and pushes the bottom surface of the groove 2a of the main body apparatus 2, thereby moving the bump portion 212 away from the bottom surface of the groove 2a of the main body apparatus 2. Specifically, the right controller 3 moves so as to rotate about, as the axis, an end portion (e.g., the lower end portion) of the bump portion 212 that is on the side opposite to the side where the pusher 291 is arranged with respect to the up-down direction. Thus, the upper right magnetic member 51 of the main body apparatus 2 and the side surface upper button 208 of the right controller 3 come farther apart than in the attached state, and the lower right magnetic member 52 of the main body apparatus 2 and the side surface lower button 209 of the right controller 3 come farther apart than in the attached state. Therefore, the attraction between the magnetic members 51 and 52 and the buttons 208 and 209 decreases, thereby making it easier for the user to detach the right controller 3 from the main body apparatus 2 in the state shown in FIG. 41. Specifically, from the state shown in FIG. 41, the user can detach the right controller 3 from the main body apparatus 2 by moving the right controller 3 in the right direction (see the arrow shown in FIG. 41). Note that, in other embodiments, when the pusher 291 protrudes, the lower right magnetic member 52 of the main body apparatus 2 and the side surface lower button 209 of the right controller 3 do not need to be farther apart than in the attached state.

Note that in the state where the pusher 291 is most protruding and the tip of the pusher 291 is in contact with the main body apparatus 2, the attraction acting on the right controller 3 and the main body apparatus 2 may be of such a magnitude as to cause the main body apparatus 2 to fall down by its own weight. That is, the attraction in this state may be smaller than the gravity applied to the main body apparatus 2. This makes it easier for the user to detach the right controller 3 from the main body apparatus 2. In other embodiments, the attraction in this state may be of such a magnitude that the main body apparatus 2 does not fall down by its own weight. That is, the attraction in this state may be greater than the gravity applied to the main body apparatus 2. According to this, it is possible to reduce the possibility of the right controller 3 detaching from the main body apparatus 2 only by operating the pusher operating section 292.

As described above, in the present embodiment, the user can easily detach the right controller 3 from the main body apparatus 2 by first operating the pusher operating section 292 and then performing the operation of moving the right controller 3 in the direction of detaching the right controller 3 from the main body portion 2. Here, in the present embodiment, the direction of operation on the pusher operating section 292 has the same component (i.e., a rightward component) as the direction of detaching the right controller 3 from the main body apparatus 2. That is, the user can perform the detaching operation by operating the pusher operating section 292 in the right direction and then further moving the right controller 3 in the right direction (see FIG. 40 and FIG. 41). Thus, in the present embodiment, a controller can be detached by an intuitive and easy-to-understand operation.

In the present embodiment, as described above, the pusher operating section 292 is configured to be restricted from being operated more than a predetermined amount. Therefore, when the user operates the pusher operating section 292 in the right direction, the movement of the pusher operating section 292 is restricted after moving by the predetermined amount, and if the user continues to apply force in the right direction, the right controller 3 itself will move in the right direction. According to this, the user can perform the operation on the pusher operating section 292 and the subsequent operation of moving the right controller 3 as a series of operations of applying force in the same direction. Thus, the user can perform the detaching operation more smoothly. While the movement of the pusher operating section 292 is restricted, the user can place fingers on the operation surface portion 294 and the protruding portions 297 around the operation surface portion 294 (see FIG. 27), so that it is possible to reliably perform the operation of moving the right controller 3 without the fingers slipping.

In the present embodiment, the operation surfaces of the side surface upper button 208 and the side surface lower button 209 are movable to a position where they are protruding more than the most protruding portions described above with respect to the direction in which the buttons 208 and 209 protrude. Therefore, when the right controller 3 is detached from the main body apparatus 2, if one attempts to move the right controller 3 in the direction of detaching it from the main body apparatus 2, within the movable range of the buttons 208 and 209, the housing 201 moves while the elastic deformation members 248, 249, 253, and 254 sandwiched between the inner wall of the housing 201 and the buttons 208 and 209 deform, thereby maintaining the state where the buttons 208 and 209 are in contact with the main body apparatus 2 and maintaining the attracting force. Thus, in the present embodiment, feeling of stickiness or resistance can be created when detaching the right controller 3 from the main body apparatus 2. Thus, it is possible to suppress the right controller 3 from being quickly detached from the main body apparatus 2. For example, when a force in the direction of detaching from the main body apparatus 2 is temporarily applied to the right controller 3 due to the right controller 3 hitting another object, or the like, it is possible to suppress the right controller 3 from being inadvertently detached from the main body apparatus 2.

Note that in the present embodiment, the amount by which the side surface upper button 208 and the side surface lower button 209 can move beyond the most protruding portions with respect to the direction in which they protrude is set to be smaller than the amount of protrusion when the pusher 291 is protruding most. That is, the length with respect to the left-right direction from the operation surface of the buttons 208 and 209 protruding to the maximum to the most protruding portions is shorter than the length with respect to the left-right direction from the tip of the pusher 291 protruding to the maximum to the tip of the mouse sole 282. According to this, in the state where the pusher 291 is protruding to the maximum, it is easy to realize a state where the side surface upper button 208 and the side surface lower button 209 do not contact the main body apparatus 2. Thus, it is easier to reduce the attraction between the right controller 3 and the main body apparatus 2 by operating the pusher operating section.

The amount of protrusion of the pusher 291 may be of such a magnitude that the protrusion of the pusher 291 causes the operation surface portion 294 of the side surface upper button 208 to be separated from the surface of the cover 65 forming the bottom surface of the groove 2a. From another perspective, the amount of protrusion of the pusher 291 may be of such a magnitude that the operation surface 294 of the side surface upper button 208 comes apart from the surface of the cover 65 forming the bottom surface of the groove 2a even if the side surface upper button 208 moves leftward to the maximum extent by being attracted to the magnetic member 51. This allows the right controller 3 to be easily detached from the main body apparatus 2. Note that the amount of protrusion of the pusher 291 may be of such a magnitude that at least a part of the operation surface portion of the side surface lower button 209 is not separated from the surface of the cover 65. Therefore, it is possible to suppress the right controller 3 from being quickly detached from the main body apparatus 2.

As shown in FIG. 41, the amount of protrusion of the pusher 291 may be of such a magnitude that the protrusion of the pusher 291 causes the upper end at the protruding surface 214 of the bump portion 212 to be exposed through the opening of the groove 2a. Note that the amount of protrusion of the pusher 291 may be of such a magnitude that the upper end of the protruding surface 214 is not exposed through the opening of the groove 2a even if the pusher 291 protrudes. As shown in FIG. 41, the amount of protrusion of the pusher 291 may be of such a magnitude that the first elastic deformation member 248 exposed from the outer surface 215 of the bump portion 212 is entirely exposed through the opening of the groove 2a. On the other hand, the second elastic deformation member 249 exposed from the outer surface 215 may be only partially exposed through the opening of the groove 2a. The amount of protrusion of the pusher 291 may be of such a magnitude that the through hole 223b provided in the outer surface 215 is not exposed through the opening of the groove 2a even when the pusher 291 protrudes. The amount of protrusion of the pusher 291 may be of such a magnitude that the protrusion of the pusher 291 causes the upper end of the base surface 213 (the end portion in the upward direction in FIG. 41) and the upper end of the inner surface of the groove 2a of the main body apparatus 2 to be separated from each other by a distance between 0.5 mm and 1 cm, for example. Note that the distance by which they are separated may be between 1 mm and 5 mm, for example. The distance by which they are separated may be 2 mm, for example.

In the present embodiment, the left controller 4 includes the same elements as those of the right controller 3 as the detaching mechanism to assist the user operation of detaching the left controller 4 from the main body apparatus 2. Therefore, the user can easily detach the left controller 4 from the main body apparatus 2 by operating the pusher operating section 392 for the left controller 4 as well as the right controller 3.

Note that the method of detaching a controller from the main body apparatus 2 is not limited to operating the pusher operating section 392. The user can detach a controller from the main body apparatus 2 by applying a force greater than the attracting force between the main body apparatus 2 and the controller in the direction of detaching the controller from the main body apparatus 2. For example, the user can also detach a controller from the main body apparatus 2 by applying a pulling force to the controller attached to the main body apparatus 2 in the direction of detaching the controller from the main body apparatus 2 (e.g., the left-right direction). For example, the user can detach a controller from the main body apparatus 2 by applying a force to the controller attached to the main body apparatus 2 in the rotational direction with the front-rear direction or the up-down direction as the axis of rotation.

### [4-3. When using controller as mouse]

Next, the operation when using a controller as a mouse will be described. In the present embodiment, the user can place a controller detached from the main body apparatus 2 on a work surface and use the controller as a mouse.

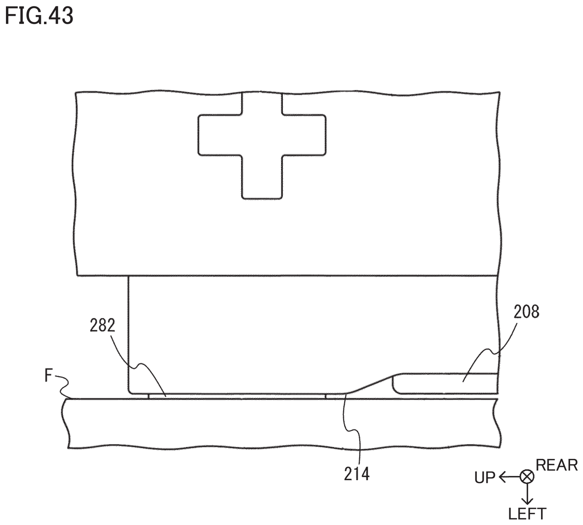

FIG. 42 is a view showing an example of how the right controller 3 is used as a mouse. FIG. 43 is a view showing an example of how the right controller 3 is placed on a work surface. As shown in FIG. 43, when the right controller 3 is used as a mouse, the right controller 3 is placed so that the protruding surface 214 of the bump portion 212 opposes the work surface F. At this time, the mouse sensor 281 emits light to the work surface F and detects the reflected light from the work surface F. This enables the game system 1 to detect the movement of the right controller 3 on the work surface F, and the right controller 3 functions as a mouse.

In the example shown in FIG. 42, the user operates the right controller 3 with the right hand. The palm of the user is positioned to cover the right side surface of the right controller 3. The thumb of the user is positioned on the front surface of the right controller 3 and can operate the input sections arranged on the front surface, such as the analog stick 203 and the button 202. The index finger of the user is positioned over the right front shoulder button 206 and can operate the right front shoulder button 206. The middle finger of the user is positioned on the right rear shoulder button 207 and can operate the right rear shoulder button 207.

In the state shown in FIG. 42, the user can perform the pointing operation with the mouse by moving the right controller 3 on the work surface F. The user can press down the right front shoulder button 206 as the right click operation, and the user can press the right rear shoulder button 207 as the left click operation. Thus, in the present embodiment, the right controller 3 enables general mouse operations. In the present embodiment, the user can also perform additional operations by operating the input sections arranged on the front surface of the right controller 3.

As shown in FIG. 43, when the right controller 3 is placed on the work surface F in such an orientation that the protruding surface 214 opposes the work surface F, the right controller 3 contacts the work surface F at the mouse soles 282 and 283. For example, the thickness of the mouse soles 282 and 283 (e.g., the length with respect to the left-right direction from the protruding surface 214 to the left end of the mouse sole 282) is 0.2 mm.

In the case described above, the side surface upper button 208 and the side surface lower button 209 do not contact the work surface F. As described above, the buttons 208 and 209 can be moved in the direction of protruding from the protruding surface 214 to a position where the buttons 208 and 209 protrude more than the mouse soles 282 and 283. Note however that when the right controller 3 is placed on the work surface F, no attracting force is generated on the buttons 208 and 209, so the buttons 208 and 209 do not move from the reference position by the biasing force from the elastic deformation members 248, 249, 252, and 253 (or move slightly by their own weight but hardly move at all). That is, in the present embodiment, the buttons 208 and 209 are configured so as not to move in the direction of protruding from the protruding surface 214 by their own weight. According to this, when the right controller 3 is used as a mouse, it is possible to suppress the buttons 208 and 209 from hindering the movement operation. Note that the distance between the work surface F and the buttons 208 or 209 with respect to the left-right direction is 0.3 mm, for example.

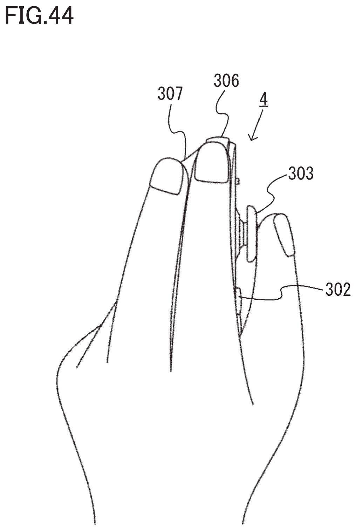

In the present embodiment, the left controller 4 includes the same elements as those of the right controller 3 to realize the mouse function. Therefore, the left controller 4, as well as the right controller 3, can be used as a mouse. FIG. 44 is a view showing an example of how the left controller 4 is used as a mouse. In the example shown in FIG. 44, the user operates the left controller 4 with the left hand. As shown in FIG. 44, the user can perform the mouse pointing operation by moving the left controller 4 on the work surface. The user can also perform the operation of pressing down the left rear shoulder button 307 with the middle finger, for example, and the operation of pressing down the left front shoulder button 306 with the index finger, for example. Furthermore, the user can perform additional operations by operating the input sections such as the button 302 and the analog stick 303 arranged on the front surface of the left controller 4 with the thumb, for example.

As described above, in the present embodiment, both the right controller 3 and the left controller 4 can be used as a mouse, so that the input sections arranged on the front surface of the controllers can be operated by the thumb both when the user performs the mouse operation with the right hand and when the user performs the mouse operation with the left hand.

While the case where the right controller 3 is operated with the right hand of the user and the left controller 4 is operated with the left hand of the user is described above as an example, the right controller 3 may be operated with the left hand of the user and the left controller 4 may be operated with the right hand of the user. The user can also perform the mouse operation using the two controllers 3 and 4 at the same time by operating the controllers 3 and 4 one with the right hand and one with the left hand.

Note that when the controllers 3 and 4 are attached to the main body apparatus 2, the bump portions 212 and 312 of the controllers 3 and 4 match with the grooves of the main body apparatus 2, so the mouse sensors 281 and 381 are not exposed. Therefore, where the controllers 3 and 4 are not used as mouses, it is possible to suppress the mouse sensors 281 and 381 from being unnecessarily touched by the user.

### [5. Functions/effects of present embodiment]

(1-1)
As described above, in the embodiment described above, a game apparatus that is removably attachable to a controller, includes the following elements:
· a housing that houses an electronic circuit; and
· a first magnet that is conductive and that attracts the controller by magnetic force to attach the controller to the game apparatus.

The first magnet is electrically connected to ground of the electronic circuit.

With the configuration (1-1) above, it is possible to provide a game apparatus with a novel configuration, wherein the controller is attached to the game apparatus by the attracting force by the magnetic force. It is possible to suppress electromagnetic waves from outside of the controller from entering via the position of the magnet and thereby transmitting noise to the electronic circuit, etc., in the controller.

Note that "a magnet being electrically connected to the ground of an electronic circuit" means both the mode in which the magnet is directly connected to the ground electrode in the electronic circuit and the mode in which the magnet is indirectly connected to the ground electrode via a conductive member, as in the embodiment described above.

In the embodiment described above, it can be said that the configuration (1-1) above is further configured according to (1-2) to (1-21) as follows.

(1-2)
In the configuration (1-1) above, a first through hole running through the housing is formed. At least a part of the first magnet is arranged in the first through hole (see FIG. 14).

With the configuration (1-2) above, since the first magnet can be arranged closer to the controller as compared to the case where the first magnet is arranged only inside the housing, it is possible to increase the attracting force between the game apparatus and the controller. Moreover, as compared to the case where the first magnet is arranged only outside the housing, the first magnet can be easily connected to the ground of the electronic circuit.

(1-3)
In the embodiment described above, in the configuration (1-2) above, a portion of the first magnet other than the part that is arranged in the first through hole is housed in the housing.

With the configuration (1-3) above, as compared to the case where the first magnet is arranged outside the housing, the first magnet can be easily connected to the ground of the electronic circuit. Where it is assumed that a part of the first magnet is arranged outside the housing, if the attachment member for attaching the first magnet to the housing is arranged outside the housing, the attachment member may get in the way of the controller when attaching the controller to the game apparatus. Thus, if a part of the first magnet is arranged outside the housing, there is a risk that the appearance of the controller may be limited so that the controller is shaped to avoid the attachment member, and there is a risk that the attachment member may affect the appearance of the controller. In contrast, with the configuration (1-3) above, there is no such risk, and it is possible to reduce the possibility of limiting the appearance of the controller.

(1-4)
In the embodiment described above, in the configuration (1-2) or (1-3) above, an opening of the first through hole outside the housing is covered by an insulative member (FIG. 9).

With the configuration (1-4) above, it is possible to protect the first magnet from an impact. Even in the state where the controller is attached to the game apparatus, the first magnet can be suppressed from being electrically connected to the controller. Therefore, the potential of the first magnet (i.e., the ground potential) can be stabilized even if a portion of the game apparatus that is in contact with the first magnet or a portion that is located in the vicinity of the first magnet has a potential in the above state.

(1-5)
In the configurations (1-1) to (1-4) above, the game apparatus further includes a yoke that is conductive and forms a magnetic circuit with the first magnet. The yoke is electrically connected to the ground of the electronic circuit.

With the configuration (1-5) above, it is possible to increase the attracting force by the magnetic force, and to more firmly attach the controller to the game apparatus. It is possible to suppress electromagnetic waves from outside of the controller from entering via the position of the magnet and thereby transmitting noise to the electronic circuit, etc., in the controller.

(1-6)
In the configuration (1-2) above, the game apparatus further includes a yoke that is conductive and forms a magnetic circuit with the first magnet. At least a part of the first magnet and at least a part of the yoke are arranged in the first through hole (see FIG. 14).

With the configuration (1-6) above, it is possible to increase the attracting force, and it is possible to easily connect the yoke to the ground of the electronic circuit.

(1-7)
In the configuration (1-6) above, the yoke protrudes more than the first magnet in an outward direction, where a direction from an opening of the first through hole on an inner side of the housing toward an opening of the first through hole on an outer side of the housing is defined as the outward direction (see FIG. 11).

With the configuration (1-7) above, it is possible to strengthen the magnetic field in an area on the outer side of the housing with respect to the first magnet, and to increase the attracting force.

(1-8)
In the configuration (1-6) or (1-7) above, the yoke includes a first portion at least a part of which is located in the first through hole, and a second portion that is located in the housing and that is longer than the opening of the first through hole on an inner side of the housing in a state where the yoke is arranged in place (see FIG. 11).

With the configuration (1-8) above, it is possible to suppress the first magnet and the yoke from slipping out of the housing through the through hole. Since the yoke has both the function of increasing attracting force and the function of preventing slipping out, it is possible to reduce the number of parts of the game apparatus and to save space in the game apparatus.

(1-9)
In the configuration (1-7) above, an area of the housing that opposes the first portion of the yoke and an area of the housing that opposes the second portion of the yoke are made of an insulative member.

With the configuration (1-9) above, since the first magnet and the metal portion of the housing are not in direct contact with each other, it is possible to suppress electronic components from being inadvertently affected due to generation of an inductance component or impedance component in the path between the first magnet and the metal portion of the housing.

(1-10)
In the configuration (1-7) above, the game apparatus further includes a pressing member that presses at least one of the first magnet and the yoke in the outward direction.

With the configuration (1-10) above, it is possible to suppress rattling that occurs in the first magnet or the yoke.

(1-11)
In the configuration (1-10) above, the game apparatus further includes a first conductive member that is conductive and electrically connects the first magnet and the yoke (see FIG. 14).

With the configuration (1-11) above, since the first magnet and the yoke are both electrically connected to the ground of the electronic circuit, it is possible to suppress electromagnetic waves from outside of the controller from entering via the position of the magnet or the yoke and thereby transmitting noise to the electronic circuit, etc., in the controller.

(1-12)
In the configuration (1-11) above, the first conductive member is sandwiched between the pressing member and a magnet unit, the magnet unit including the first magnet and the yoke, in a direction parallel to the outward direction.

With the configuration (1-12) above, it is possible to reliably make the first conductive member contact the first magnet and the yoke.

(1-13)
In the configuration (1-11) above, the game apparatus comprises, as the yoke, a first yoke that is in contact with one side of the first magnet and a second yoke that is in contact with the other side of the first magnet. The game apparatus further comprises a second conductive member that is conductive and is arranged between the second yoke and a metal portion of the housing or a metal member in the housing connected to the ground of the electronic circuit, thereby electrically connecting the second yoke and the metal portion or the metal member (see FIG. 14).

With the configuration (1-13) above, it is possible to reduce the number of parts as compared to the case where the first magnet and the yoke are separately electrically connected to the ground of the electronic circuit.

(1-14)
In the configuration (1-2) above, a recessed portion is formed on an outside surface of the housing. The first through hole is formed at a bottom of the recessed portion.

With the configuration (1-14) above, it is possible, with the recessed portion, to suppress an object with the property of being attracted to a magnet from being inadvertently brought close to the first magnet, and it is possible to suppress the object from inadvertently being attracted to the game apparatus. Since it is possible to suppress another game apparatus, different from the game apparatus, from being brought close to the first magnet, the potential of the first magnet is less likely to fluctuate, and it is possible to suppress electromagnetic waves from outside of the controller from entering via the position of the magnet and thereby transmitting noise to the electronic circuit, etc., in the controller.

(1-15)
In the configuration (1-14) above, a second through hole running through the housing is formed at the bottom of the recessed portion. The game apparatus further comprises the following elements:
· a second magnet that is conductive and at least a part of which is arranged in the second through hole, wherein the second magnet is capable of attracting the controller attached to the game apparatus by magnetic force; and
· a game apparatus-side terminal that is arranged between the first magnet and the second magnet as the recess is seen from an open side of the recess, wherein the game apparatus-side terminal is connectable to a controller-side terminal of the controller.

With the configuration (1-15) above, since the game apparatus can attract the controller at two locations, the controller can be attached more firmly to the game apparatus. Since the terminals are arranged between the two locations to be attracted, when the controller is attached to the game apparatus, misalignment between the game apparatus-side terminal and the controller-side terminals is less likely to occur, thereby making it easier to maintain the electrical connection therebetween. Note that, in the embodiment described above, since the second magnet is also electrically connected to the ground of the electronic circuit, the ground potential is less likely to fluctuate.

(1-16)
In the configuration (1-2) above, a predetermined surface of the housing includes a metal portion connected to the ground of the electronic circuit. An opening of the first through hole is formed on the predetermined surface.

With the configuration (1-16) above, the influence of electromagnetic waves from outside of the electronic circuit in the game apparatus can be reduced by the housing including the metal portion. Note that since the first magnet connected to ground is arranged in the first through hole, it is possible to suppress the influence of electromagnetic wave radiation from the first through hole.

(1-17)
In the configuration (1-16) above, an inner surface of the first through hole is made of an insulative member different from the metal portion.

With the configuration (1-17) above, since the first magnet and the metal portion of the housing are not in direct contact with each other, it is possible to suppress electronic components from being inadvertently affected due to generation of an inductance component or impedance component in the path between the first magnet and the metal portion of the housing.

(1-18)
In the configuration (1-16) or (1-17) above, the predetermined surface is a side surface that connects a front surface and a rear surface of the housing. The electronic circuit is arranged in the housing at a position sandwiched by a metal member with respect to a direction from the front surface toward the rear surface of the housing (see FIG. 7). The metal member is at least one of a metal frame portion of the housing that is electrically connected to the ground of the electronic circuit and a metal frame housed in the housing that is electrically connected to the ground of the electronic circuit.

With the configuration (1-18) above, the influence of electromagnetic waves from outside on the electronic circuit in the game apparatus can be reduced by the metal member.

(1-19)
In the configuration (1-16) or (1-17) above, the metal frame portion of the housing is made of non-magnetic metal.

With the configuration (1-19) above, it is possible to suppress the metal frame portion from affecting the magnetic field by the first magnet.

(1-20)
In the configurations (1-1) to (1-19) above, the controller comprises a magnetic sensor. The game apparatus includes a front surface, a rear surface on a side opposite to the front surface, an upper surface, a lower surface, and two side surfaces. The first magnet is provided in an upper side portion of one of the two side surfaces. The game apparatus further comprises a second magnet that is conductive and that is arranged in a lower side portion of said one of the side surfaces, wherein the second magnet is configured to attract the controller attached to the game apparatus by magnetic force. The first magnet is provided in such an orientation that a first polarity faces the front surface side and a second polarity faces the rear surface side. The second magnet is provided in such an orientation that the second polarity faces the front surface side and the first polarity faces the rear surface side.

With the configuration (1-20) above, it is possible to reduce the influence of the magnetic field by the first magnet and the second magnet on the magnetic sensor of the controller attached to the game apparatus, and it is possible to suppress the reduction in detection accuracy of the magnetic sensor.

(1-21)
In the configurations (1-1) to (1-20) above, the game apparatus comprises, as conductive magnets capable of adhering to the controller attached to the game apparatus by magnetic force, a plurality of magnets including the first magnet. The game apparatus further comprises an antenna. One of the plurality of magnets that is arranged at a position closest to the antenna is not electrically connected to the ground of the electronic circuit, and at least one of the other magnets different from said magnet is electrically connected to the ground of the electronic circuit.

With the configuration (1-21) above, it is possible to reduce the influence of the magnet arranged at the position closest to the antenna on the antenna.

(1-22)
In the configurations (1-1) to (1-20) above, the game apparatus comprises, as conductive magnets capable of adhering to the controller attached to the game apparatus by magnetic force, a plurality of magnets including the first magnet. The game apparatus comprises a plurality of antennas. Among combinations between one of the plurality of magnets and one of the plurality of antennas, one magnet included in a combination where a distance between the magnet and the antenna is shortest is not electrically connected to the ground of the electronic circuit, and at least one of the other magnets different from said magnet is electrically connected to the ground of the electronic circuit.

With the configuration (1-22) above, it is possible to reduce the influence of the magnet in one of the combinations between antennas and magnets where the distance is shortest on the antenna in that combination.

(1-23)
In the configurations (1-1) to (1-18) above, the first magnet is arranged exposed from an opposing surface of the housing that opposes the controller in a state where the controller is attached to the game apparatus or the first magnet is arranged buried in said opposing surface.

"Exposed" above means any mode in which the first magnet is exposed outside the opposing surface, and it is not limited to a mode in which the first magnet is protruding from the opposing surface, but may also include a mode in which the first magnet is flush with the opposing surface and a mode in which the first magnet is arranged at a position more recessed than the opposing surface.

With the configuration (1-23) above, the connected state can be maintained by the attracting force of the first magnet with respect to the controller attached to the opposing surface.

(1-24)
In the configuration (1-23) above, the opposing surface includes a base surface and a protruding surface that protrudes relative to the base surface. The first magnet is arranged exposed from the base surface or buried in the base surface.

With the configuration (1-24) above, it is possible to reduce the possibility of an object different from the game apparatus contacting the base surface, and it is possible to reduce the possibility of this object contacting the first magnet and applying an impact to the first magnet. Since it is possible to suppress another electronic apparatus different from the game apparatus from being brought close to the first magnet, the potential of the first magnet is less likely to fluctuate, and it is possible to suppress electromagnetic waves from outside of the controller from entering via the position of the first magnet and thereby transmitting noise to the electronic circuit, etc., in the controller.

(1-25)
In the configuration (1-23) or (1-24) above, the game apparatus further comprises a second magnet that is conductive, wherein the second magnet is configured to attract the controller attached to the game apparatus by magnetic force. The second magnet is arranged exposed from the opposing surface or buried in the opposing surface. The game apparatus further comprises a game apparatus-side terminal that is arranged at a position between the first magnet and the second magnet on the opposing surface, wherein the game apparatus-side terminal is connectable to a controller-side terminal of the controller.

With the configuration (1-25) above, since the game apparatus can attract the controller at two locations, the controller can be attached more firmly to the game apparatus. Since the terminals are arranged between the two locations to be attracted, when the controller is attached to the game apparatus, misalignment between the game apparatus-side terminal and the controller-side terminals is less likely to occur, thereby making it easier to maintain the electrical connection therebetween.

(2-1)
As described above, the right controller 3 or the left controller 4 in the embodiment described above can be said to be an example of a game controller as follows.
· A game controller that is detachably attached to a main body apparatus, wherein:
   the main body apparatus includes a bottom portion, a wall portion that protrudes from periphery of the bottom portion, and a magnet provided at the bottom portion;
   the game controller includes:
      a first input section arranged at the front surface;
      an insertion portion that is arranged at the side surface and sized so that the insertion portion is insertable into a space surrounded by the wall portion; and
      a button that is exposed from an opposing surface of the insertion portion that is opposing the bottom portion in a state where the insertion portion is inserted in the space, wherein the button is subject to attraction by magnetic force of the magnet of the main body apparatus in the state where the insertion portion is inserted in the space; and
   the game controller is attached to the main body apparatus by being subject to the attraction in the state where the insertion portion is inserted in the space.

With the configuration (2-1) above, it is possible to provide a novel game controller that is attached to the main body apparatus by magnetic force. Since the button is attracted to the magnet of the main body apparatus, it is possible to reduce the number of parts of the game controller and to save space as compared to the case where the game controller separately includes the button and a member to be attracted to the main body apparatus. It is possible, with the wall portion, to suppress an object with the property of being attracted to a magnet from being inadvertently brought close to the magnet of the main body apparatus, and it is possible to suppress the object from being inadvertently attracted to the main body apparatus.

Note that there is no limitation on the specific configuration for providing a magnet at the bottom portion of the main body apparatus. Here, "the magnet provided at the bottom portion" means to include a mode in which the magnet is arranged exposed from the bottom portion and a mode in which the magnet is buried in the bottom portion.

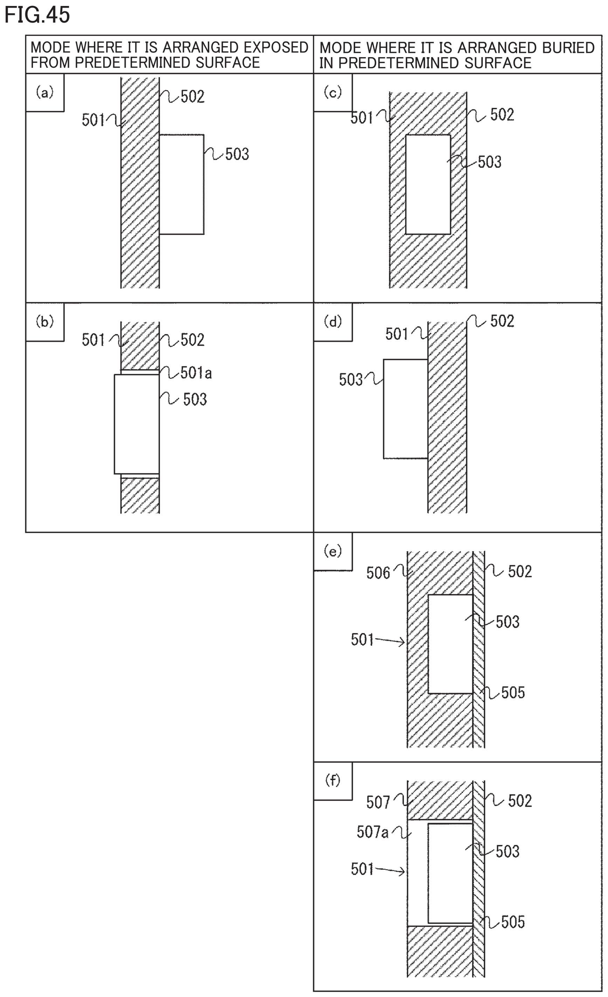

FIG. 45 is a view showing an example of the mode where the magnet is provided at the bottom portion of the main body apparatus. The mode (a) and the mode (b) shown in FIG. 45 are examples of modes in which the magnet is arranged exposed from a bottom portion 501. The mode (a) is a mode in which a magnet 503 is arranged on a bottom surface 502 of the bottom portion 501. Note that a mode in which a recess is formed in the bottom surface 502 with the magnet 503 arranged in the recess is also an example of the mode (a), and can be said to be an example of a mode in which a magnet is provided at the bottom portion. The mode (b) is a mode in which a through hole 501a is formed in the bottom surface 502 of the bottom portion 501, and at least a part of the magnet 503 is arranged in the through hole 501a. With the modes (a) and (b) above, the magnetic field by the magnet can be efficiently generated on the bottom surface 502.

The mode (c) to the mode (f) shown in FIG. 45 are examples of modes in which the magnet 503 is buried in the bottom portion 501. The mode (c) is a mode in which the magnet 503 is arranged in the bottom portion 501. The mode (d) is a mode in which the magnet 503 is arranged on the back-side surface of the bottom surface 502 of the bottom portion 501. Note that the mode in which a recess is formed in the back-side surface of the bottom surface 502 with the magnet 503 arranged in the recess is also an example of the mode (d), and can be said to be an example of a mode in which a magnet is buried in the bottom portion. The mode (e) is a mode in which the bottom portion 501 is formed by a first member 505 including the bottom surface 502 and a second member 506, and the magnet 503 is arranged in the space surrounded by the first member 505 and the second member 506. The mode (f) is a mode in which the bottom portion 501 is formed by the first member 505 including the bottom surface 502 and a third member 507 with a through hole 507a formed therein, and at least a part of the magnet 503 is arranged in the through hole 507a with the through hole 507a covered by the first member 505.

Note that, with the modes (c) to (f) above, since the magnet 503 is not exposed, it is possible to protect the magnet 503 from an external impact. With the modes (e) and (f) above, the distance from the magnet 503 to the bottom surface 502 can be easily shortened, and the magnetic field by the magnet 503 can be generated efficiently on the bottom surface 502. With the modes (b), (d), and (f) above, it is easy to connect the magnet 503 to other elements on the back side of the surface 502 of the bottom portion 501. For example, it is easy to connect the magnet 503 to the ground on the back side of the bottom surface 502 of the bottom portion 501.

Note that while FIG. 45 shows an example in which only the magnet is provided at the bottom portion, yokes, together with the magnet, may be provided at the bottom portion, as in the embodiment described above. In FIG. 45, the mode in which a magnetic member including a magnet and yokes is provided, instead of the magnet 503, is also an example of the mode in which a magnet is provided at the bottom portion.

The "wall portion protruding from periphery of the bottom portion" above means to include a mode in which the wall portion is protruding from the entire periphery of the bottom portion, and a mode in which the wall portion is protruding from parts of the periphery of the bottom portion (see FIG. 46). For example, the "wall portion protruding from periphery of the bottom portion" means to include: a loop-shaped wall portion with cut-out portions along the periphery of the bottom portion; wall portions arranged on opposite sides of the bottom portion with respect to a predetermined direction; and a wall portion that is arranged in an L shape as seen from a direction perpendicular to the surface of the bottom portion.

In the embodiment described above, it can be said that the configuration (2-1) above is further configured as in (2-2) to (2-24) shown below.

(2-2)
The configuration (2-1) above, wherein:
the main body apparatus includes:
   as the magnet, a first magnet and a second magnet that are arranged along a longitudinal direction on the bottom portion; and
the game controller includes:
   as the button, a first button that is arranged at a position corresponding to the first magnet and a second button that is arranged at a position corresponding to the second magnet in a state where the game controller is attached to the main body apparatus.

With the configuration (2-2) above, since the main body apparatus and the game controller are attracted to each other at two locations, the game controller can be attached more firmly to the game apparatus. The user can use the game controller with the front surface of the game controller facing the front side of the user and with the first button and the second button facing upward and arranged side by side in the left-right direction.

(2-3)
The configuration (2-1) or the configuration (2-2) above, wherein:
the wall portions are arranged on four sides of the location on the bottom portion where the magnet is provided.

With the configuration (2-3) above, since the wall portions are arranged on the four sides of the magnet, it is possible to better suppress an object with the property of being attracted to a magnet from being inadvertently brought close to the magnet of the main body apparatus. Note that "arranged on four sides" means to be not being limited to the wall portion being in a loop shape (that is, the wall portion being arranged along the entire periphery of the bottom portion).

(2-4)
The configurations (2-1) to (2-3) above, wherein:
the button includes a ferromagnetic material.

With the configuration (2-4) above, it is possible to create attraction by magnetic force between the magnet of the main body apparatus and the button.

(2-5)
The configurations (2-1) to (2-4) above, wherein:
an exposed portion of the button that is exposed from the opposing surface includes a ferromagnetic material.

With the configuration (2-5) above, since the attraction is created at a portion of the button that is close to the magnet of the main body apparatus when the game controller is attached to the main body apparatus, it is possible to increase the attraction to be applied to the game controller.

(2-6)
The configurations (2-1) to (2-5) above, wherein:
the button does not include a magnet.

With the configuration (2-6) above, for a game controller that is presumed to be frequently detached from the main body apparatus and moved around, it is possible to suppress an object with the property of being attracted to a magnet from being inadvertently brought close to the button.

(2-7)
The configurations (2-1) to (2-6) above, wherein:
a portion of the button that is ferromagnetic and is conductive is electrically connected to ground of an electronic circuit in the game controller.

With the configuration (2-7) above, it is possible to suppress electromagnetic waves from outside of the game controller from entering via the position of the button and thereby transmitting noise to the electronic circuit, etc., in the game controller.

(2-8)
The configurations (2-1) to (2-7) above, wherein:
the button is configured to be movable from a reference position in a first direction, which is an inward direction of a housing of the insertion portion, and movable from the reference position in a second direction, which is opposite to the first direction, wherein the reference position is a position where the button is not pressed down and where the insertion portion is not inserted in the space.

With the configuration (2-8) above, the button not only moves in the first direction from the reference position by being pressed, but also moves in the second direction from the reference position by being attracted by the magnet of the main body apparatus when the game controller is attached to the main body apparatus. According to this, since the distance between the button and the magnet is closer, it is possible to increase the attraction by the magnetic force.

(2-9)
The configuration (2-8) above, wherein:
the game controller further includes:
a biasing portion that biases the button in the second direction in a state where the button is at least moved in the first direction; and
an elastic deformation member that is arranged between an inner wall of the housing and a surface of a part of the button that is arranged inside the housing of the insertion portion and faces in the second direction, wherein the elastic deformation member elastically deforms when the button moves in the second direction from the reference position.

With the configuration (2-9) above, the button can be returned to the reference position in a state where no external force is applied to the button after the button is moved in the first direction and the second direction.

(2-10)
The configuration (2-9) above, wherein:
a through hole is formed in a side surface of the housing of the insertion portion that opposes the wall portion in a state where the game controller is attached to the main body apparatus; and
a part of the elastic deformation member protrudes from the side surface through the through hole.

With the configuration (2-10) above, the elastic deformation member contacts the wall portion of the main body apparatus in a state where the game controller is attached to the main body apparatus, thereby suppressing rattling of the game controller.

(2-11)
The configurations (2-8) to (2-10) above, wherein:
the insertion portion includes a protruding member that is at a position where it is protruding more than the button at the reference position with respect to a height direction perpendicular to the opposing surface of the insertion portion; and
the button is configured to be movable in the second direction to the same position as the protruding member with respect to the height direction or to a position where it is protruding more than said position.

With the configuration (2-11) above, when the button is at the reference position, the button is suppressed from being inadvertently pressed down, whereas in a state where the game controller is attached to the main body apparatus, the button is moved closer to the magnet of the main body apparatus, and it is possible to increase attraction by the magnetic force.

Note that the protruding member may be a portion of the housing of the insertion portion or may be another part attached to the housing of the insertion portion.

(2-12)
The configurations (2-8) to (2-10) above, wherein:
the button is configured to be movable in the second direction due to attraction by magnetic force of the magnet of the main body apparatus in response to the game controller being attached to the main body apparatus.

With the configuration (2-12) above, in a state where the game controller is attached to the main body apparatus, the button is moved closer to the magnet of the main body apparatus, and it is possible to increase the attraction between the main body apparatus and the game controller.

(2-13)
The configurations (2-8) to (2-12) above, wherein:
the insertion portion includes a protruding member that is at a position where it is protruding more than the button at the reference position with respect to a height direction perpendicular to the opposing surface of the insertion portion; and
the button contacts the bottom portion of the main body apparatus in a state where the game controller is attached to the main body apparatus.

With the configuration (2-13) above, when the button is at the reference position, the button is suppressed from being inadvertently pressed down. On the other hand, in a state where the game controller is attached to the main body apparatus, the button is moved closer to the magnet of the main body apparatus, and it is possible to further increase the attraction between the main body apparatus and the game controller.

(2-14)
The configurations (2-1) to (2-13) above, wherein:
a part of the game controller has a shape that the game controller is insertable into the insertion portion;
an apparatus having an engaging element that can be detachably attached to the game controller; and
an engaging hole engageable with the engaging element, the engaging hole being formed in at least one of side surfaces that connect to longitudinal end portions of the opposing surface of the insertion portion.

With the configuration (2-14) above, the user can easily attach the apparatus to the game controller by engaging the engaging element with the engaging hole while inserting one end of the opposing surface of the insertion portion in the longitudinal direction into the apparatus, and then further inserting the insertion portion.

(2-15)
The configurations (2-1) to (2-14) above, wherein:
the game controller further includes:
an elastic deformation member on a side surface of the insertion portion that opposes the wall portion in a state where the game controller is attached to the main body apparatus, wherein the elastic deformation member contacts the wall portion in said state.

With the configuration (2-15) above, it is possible to suppress rattling of the game controller. Since the elastic deformation member is arranged at a position opposing the end portion of the wall portion in the direction of protrusion in the above state, the elastic deformation member contacts the wall portion after the insertion portion is inserted deep into the space surrounded by the wall portion of the main body apparatus. Therefore, friction can be made less likely to occur between the elastic deformation member and the wall portion when inserting the insertion portion into the space, thereby improving the operability of the attaching operation.

(2-16)
The configuration (2-15) above, wherein:
the elastic deformation member is not arranged in an end portion on a side of the opposing surface of the side surfaces of the insertion portion.

With the configuration (2-16) above, the elastic deformation member contacts the wall portion after the insertion portion is inserted to some extent into the space of the main body apparatus. Therefore, when inserting the insertion portion into the space, it is possible to suppress friction from occurring between the elastic deformation member and the wall portion starting from the beginning of the insertion, thereby improving the operability of the attaching operation.

(2-17)
The configurations (2-1) to (2-16) above, wherein:
the game controller further includes:
an operating section operable by a user; and
a pusher that moves so as to protrude from a through hole that is open on the opposing surface of the insertion portion in response to an operation on the operating section.

With the configuration (2-17) above, as the pusher pushes the bottom portion of the main body apparatus in response to an operation on the operating section being performed in a state where the game controller is attached to the main body apparatus, the user can more easily perform the operation of detaching the game controller from the main body apparatus.

(2-18)
The configuration (2-17) above, wherein:
the operating section is configured to be operable in a direction opposite to a direction in which the opposing surface is facing.

With the configuration (2-18) above, since the game controller is detached from the main body apparatus in the direction in which the opposing surface moves apart from the bottom portion as the user operates the operating section in the direction in which the opposing surface moves apart from the bottom portion, it is possible to realize an intuitive operation.

(2-19)
The configuration (2-18) above, wherein the operating section is configured so as to restrict an operation thereof beyond a predetermined amount in the opposite direction.

With the configuration (2-19) above, if the user continues to apply force in the direction of operation after the operating section is moved by the predetermined amount, the user will be applying force to the game controller in the direction in which the game controller moves apart from the main body apparatus. Therefore, the user can smoothly perform the operation of operating the operating section and then detaching the game controller from the main body apparatus.

(2-20)
The configurations (2-1) to (2-19) above, wherein:
the main body apparatus further includes a main body apparatus-side terminal arranged at the bottom portion; and
the game controller further includes:
   a controller-side terminal that is arranged in a housing portion that is open on the opposing surface of the insertion portion and is electrically connected to the main body apparatus-side terminal in a state where the game controller is attached to the main body apparatus.

With the configuration (2-20) above, the game controller, in the state of being attached to the main body apparatus, can perform wired communication and/or power supply with the main body apparatus. As for the main body apparatus, since the wall portion is arranged around the bottom portion, by arranging the main body apparatus-side terminal at the bottom portion, it is possible to reduce the possibility of another object other than the main body apparatus inadvertently contacting the main body apparatus-side terminal. On the other hand, as for the game controller, by arranging the controller-side terminal in the housing portion, it is possible to reduce the possibility of another object other than the game controller inadvertently contacting the controller-side terminal. By forming the housing portion in the opposing surface, it is possible to make efficient use of the space in the game controller.

(2-21)
The configuration (2-20) above, wherein:
the main body apparatus includes:
   as the magnet, a first magnet and a second magnet;
the game controller includes:
   as the button, a first button arranged at a position corresponding to the first magnet and a second button arranged at a position corresponding to the second magnet in a state where the game controller is attached to the main body apparatus, wherein the first button and the second button are arranged in a longitudinal direction of the opposing surface; and
the controller-side terminal is arranged between the first button and the second button in the longitudinal direction of the opposing surface.

With the configuration (2-20) above, when the game controller is attached to the main body apparatus with the magnets and the buttons being attracted to each other, misalignment is unlikely to occur between the main body apparatus-side terminal and the controller-side terminal, making the electrical connection therebetween unlikely to be cut off. The user can use the game controller with the front surface of the game controller facing the front side of the user and with the first button and the second button facing upward and arranged side by side in the left-right direction. Moreover, since the controller-side terminal is located between the first button and the second button, it is possible to reduce the possibility that the user using the game controller inadvertently contacts the controller-side terminal.

(2-22)
The configurations (2-1) to (2-21) above, wherein:
the game controller further includes:
a light-emitting section arranged on a front-side one of side surfaces of the insertion portion that oppose the wall portion in a state where the game controller is attached to the main body apparatus.

With the configuration (2-22) above, when the user uses the game controller detached from the main body apparatus, the user can easily visibly perceive the light emitted from the light-emitting section.

(2-23)
A combination of the configurations (2-20) and (2-22) above, wherein:
the controller-side terminal is arranged at a position on a rear surface side of the game controller at an inner surface of the housing portion.

With the configuration (2-23) above, the controller-side terminal is arranged in the insertion portion on the rear surface side of the game controller, whereas the light-emitting section is arranged in the insertion portion on the front surface side of the game controller. Thus, it is possible to provide the light-emitting section inside the controller while securing a space around the controller-side terminal.

(2-24)
The configurations (2-1) to (2-23) above, wherein:
the game controller further includes:
a mouse sensor that detects reflected light of light emitted onto a work surface in a state where the game controller is placed on the work surface so that the opposing surface opposes the work surface.

With the configuration (2-24) above, it is possible to provide a novel game controller that can be used also as a mouse.

(2-25)
The configuration (2-24) above, wherein:
the game controller further includes:
a mouse sole that protrudes from the opposing surface of the insertion portion (e.g., the mouse sole 282).

With the configuration (2-25) above, when the game controller is used as a mouse, it is possible to easily move the game controller on the work surface.

(2-26)
The configuration (2-23) above, wherein:
the game controller further includes:
an operating section operable by a user; and
a pusher that moves so as to protrude through a through hole that is formed in the opposing surface of the insertion portion in response to an operation on the operating section; and
the mouse sole surrounds the through hole through which the pusher protrudes.

With the configuration (2-26) above, the mouse sole and the pusher can be arranged while making efficient use of the space on the opposing surface. Note that the mouse sole "surrounding the through hole" means that the mouse sole does not need to surround the entire periphery of the through hole.

### [6. Variations]

### [6-1. Variations of wall portion]

FIG. 46 is a view showing an example of the main body apparatus according to a variation of the embodiment described above. FIG. 46 is a view showing the right side surface of the main body apparatus according to a variation. In the variation shown in FIG. 46, a main body apparatus 520 includes six wall portions including a first partial wall portion 521 to a sixth partial wall portion, instead of the loop-shaped wall portion 63 of the embodiment described above. The first partial wall portion 521 protrudes from the base surface 61 on the front side of the upper right magnetic member 51. A second partial wall portion 522 protrudes from the base surface 61 on the rear side of the upper right magnetic member 51. A third partial wall portion 523 protrudes from the base surface 61 on the front side of the lower right magnetic member 52. A fourth partial wall portion 524 protrudes from the base surface 61 on the rear side of the lower right magnetic member 52. A fifth partial wall portion 525 protrudes from the base surface 61 on the upper side of the upper right magnetic member 51. A sixth partial wall portion 526 protrudes from the base surface 61 on the lower side of the lower right magnetic member 52. The partial wall portions 521 to 526 can also be said to have a shape obtained by cutting out parts of the wall portion 63 of the embodiment described above. Note that, in other embodiments, the main body apparatus 520 may include only two partial wall portions 525 and 526 of the partial wall portions 521 to 526. Thus, the wall portion is not limited to being formed by a single member, but may be formed by a plurality of members (e.g., the partial wall portions described above) arranged on opposite sides of the magnet. The partial wall portions 521 to 526 can also suppress an object with the property of being attracted to a magnet from being inadvertently attracted to the main body apparatus 520, as in the embodiment described above. Since the bump portion 212 of the right controller 3 can be matched with the space sandwiched between the partial wall portions 521 to 526, misalignment of the right controller 3 attached to the main body apparatus 520 can be suppressed by the partial wall portions 521 to 526.

Note that, in other embodiments, the main body apparatus 520 may include only the four partial wall portions 521 to 524 of the partial wall portions 521 to 526. That is, the configuration may be such that wall portions are arranged on opposite sides of the magnet with respect to any one direction. As in the embodiment described above, the partial wall portions 521 to 524 can also suppress an object with the property of being attracted to a magnet from being inadvertently attracted to the main body apparatus 520. Since the wall portions 521 to 524 are arranged on opposite sides of the magnetic members 51 and 52 in the front-rear direction, when the bump portion 212 of the right controller 3 is inserted into the space sandwiched between the wall portions 521 to 524, the wall portions 521 to 524 can suppress the right controller 3 attached to the main body apparatus 520 from being shifted in the front-rear direction.

In other embodiments, the partial wall portions may not surround the base surface 61, but may be arranged so as to sandwich the base surface 61. For example, the main body apparatus 520 may include only two partial wall portions 521 and 522 of the partial wall portions 521 to 526. In other embodiments, the main body apparatus 520 may include only two partial wall portions 525 and 526 of the partial wall portions 521 to 526. In this case, the partial wall portions 525 and 526 can be said to be arranged on opposite sides of the magnet in the up-down direction with respect to the magnet of the upper right magnetic member 51 or the magnet of the lower right magnetic member 52.

In other embodiments, the main body apparatus does not need to include wall portions. The controller does not need to include a bump portion. Even if the main body apparatus does not include wall portions, the controller may be able to be attached to the main body apparatus by being attracted to the magnet of the main body apparatus.

### [6-2. Variation of bump portion]

The bump portion may be of such a size that it can be inserted into the space surrounded by wall portions, but does not need to be of about the same size as the space. For example, in other embodiments, the right controller 3 may include a bump portion whose length is short in the front-rear direction or the up-down direction instead of the bump portion 212 of the embodiment described above.

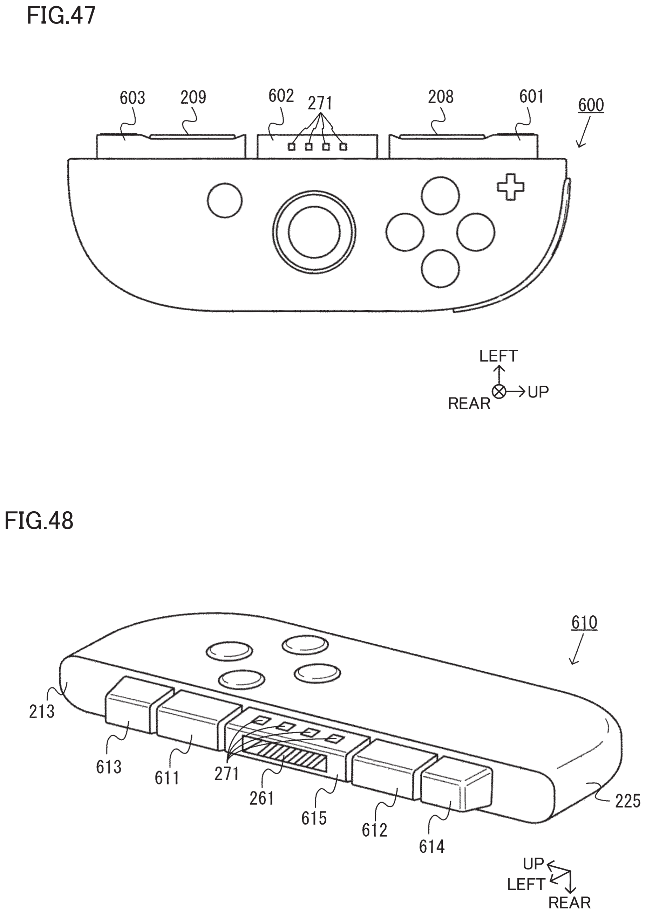

In other embodiments, the right controller may include elements as shown in FIG. 47 and FIG. 48 in place of the bump portion of the embodiment described above.

FIG. 47 is a view showing an example of the right controller according to a variation of the embodiment described above. In the variation shown in FIG. 46, a right controller 600 includes an upper bump portion 601, a middle bump portion 602, and a lower bump portion 603.

The shape of the bump portions 601 to 603 is a shape that is obtained by dividing the bump portion 212 according to the embodiment described above at the border between the second surface 232 and the third surface 233 of the protruding surface 214 and at the border between the third surface 233 and the fourth surface 234. Therefore, the bump portions 601 to 603 are shaped so that they can be inserted into the groove 2a of the main body apparatus 2. Furthermore, it can be said that the bump portions 601 to 603 as a whole have a shape that matches with the groove 2a of the main body apparatus 2. Specifically, the middle bump portion 602 is arranged on the base surface on the left side surface of the right controller 600 so as to include the center position with respect to the up-down direction. The upper bump portion 601 is arranged on the upper side of the middle bump portion 602 on the base surface. The lower bump portion 603 is arranged on the lower side of the middle bump portion 602 on the base surface. The bump portions 601 to 603 are arranged along the longitudinal direction (i.e., the up-down direction) on the left side surface of the right controller 600.

The right controller 600 shown in FIG. 47 is similar to the right controller 3 of the embodiment described above, except that the bump portion 212 has been changed to a shape that is divided into three parts, i.e., the bump portions 601 to 603. That is, the side surface upper button 208 and the upper mouse sole are arranged at the protruding surface of the upper bump portion 601. A connector, a mouse sensor, and a second function button are arranged at the protruding surface of the middle bump portion 602, and the indicators 271 are arranged at the outer surface of the middle bump portion 602. The side surface lower button 209, the lower mouse sole, and the pusher are arranged at the protruding surface of the lower bump portion 603. Note that, in other embodiments, there is no limitation on which of the components arranged at the bump portion 212 according to the embodiment described above are arranged on which of the bump portions 601 to 603 of the variation described above.

As in the variation shown in FIG. 47, the bump portion may have a plurality of partial bump portions and be inserted into the groove as a whole. Note that the number of partial bump portions is not limited to three, and there is no limitation thereto. Note that, of the plurality of partial bump portions, at least the upper end portion of the side surface of the uppermost partial bump portion is shaped along the upper end portion of the inner surface of the groove and the lower end portion of the side surface of the lowermost partial bump portion is shaped along the lower end portion of the inner surface of the groove, and the controller may be positioned relative to the main body apparatus by means of these at least two partial bump portions.

FIG. 48 is a view showing an example of the right controller according to another variation of the embodiment described above. In the variation shown in FIG. 48, a right controller 610 includes an upper attracting portion 611 and a lower attracting portion 612. The attracting portions 611 and 612 at least partially include a ferromagnetic material and are made of iron, for example. The attracting portions 611 and 612 are elements for generating attracting force with a magnetic member of the main body apparatus 2. The upper attracting portion 611 is arranged at a position that opposes the upper right magnetic member 51 with the cover 65 being interposed, in the state where the right controller 610 is attached to the main body apparatus 2, and the lower attracting portion 612 is arranged at a position that opposes the lower right magnetic member 52 with the cover 65 in that state being interposed.

The right controller 610 includes a side surface upper button 613 and a side surface lower button 614. The side surface upper button 613 is arranged on the upper side relative to the upper attracting portion 611 at the base surface 213. The side surface lower button 614 is arranged on the lower side relative to the lower attracting portion 612 at the base surface 213. In this variation, the buttons 613 and 614 do not need to include a ferromagnetic material and may be made of resin, for example. The buttons 613 and 614 are arranged so as to protrude from the base surface 213 and are configured to move into the main housing 225 of the right controller in response to the buttons being pressed.

The right controller 610 includes a middle bump portion 615. The middle bump portion 615 is arranged between the upper attracting portion 611 and the lower attracting portion 612 on the base surface 213. Note that the attracting portions 611 and 612, the buttons 613 and 614, and the middle bump portion 615 are arranged side by side in the up-down direction on the base surface 213. The middle bump portion 615 may be the same as the middle bump portion 602 of the variation shown in FIG. 47. Note that only the connector 261 is arranged on the protruding surface of the bump portion 615 in FIG. 48, but a mouse sensor and a second function button may be arranged in addition. The indicators 271 are also arranged at the outer surface of the middle bump portion 602.

Note that, in the variation shown in FIG. 48, the right controller 610 includes only four buttons on the front surface, but the elements at surfaces other than the left side surface may be the same as those of the embodiment described above.

In the variation shown in FIG. 48, the attracting portions 611 and 612, the buttons 613 and 614, and the middle bump portion 615 are shaped so that they can be inserted into the groove 2a of the main body apparatus 2. Furthermore, the members 611 to 615 as a whole are shaped to match with the groove 2a of the main body apparatus 2. In the variation shown in FIG. 48, the right controller 3 is attached to the main body apparatus 2 by the attracting force generated between the attracting portions 611 and 612 and the magnetic members 51 and 52 of the main body apparatus 2 in the state where the members 611 to 615 are matched with the groove 2a of the main body apparatus 2.

As described above, in other embodiments, the side surface upper button or the side surface lower button itself may form one bump portion in the mode where the right controller includes a plurality of bump portions forming an insertion portion. As described above, the right controller may separately include elements for attracting the right controller to the main body apparatus 2 and buttons arranged on the side surface of the right controller.

While the configuration of the right controller 3 has been described in the variation above, the left controller 4 may also be configured in the same way as the variation above.

### [6-3. Variation regarding attracting mechanism]

In the embodiment described above, the main body apparatus 2 includes a magnet and the controllers 3 and 4 include a soft magnetic material, thereby generating attracting force between the main body apparatus 2 and the controllers 3 and 4. Here, the configuration for generating attracting force by the magnetic force between the main body apparatus 2 and the controllers 3 and 4 is not limited to the above. In other embodiments, the controllers 3 and 4 may include a magnet instead of a soft magnetic material. When the controllers 3 and 4 include a magnet, the main body apparatus 2 may include a soft magnetic body instead of a magnet. Note that when the main body apparatus 2 includes a magnet and the controllers 3 and 4 include a magnet, the magnets are arranged in the main body apparatus 2 and the controllers 3 and 4 in such orientations that attraction is generated between the magnets when the controllers 3 and 4 are partially inserted into the main body apparatus 2.

In other embodiments, the controllers may also include an additional soft magnetic element or magnet in addition to the side surface upper button and the side surface lower button. The additional soft magnetic element or magnet, together with the side surface upper button and the side surface lower button, is attracted to the magnetic member of the main body apparatus 2 when the controllers are attached to the main body apparatus 2. Furthermore, the main body apparatus 2 may include an additional magnetic member. In this case, when the controllers are attached to the main body apparatus 2, the additional soft magnetic material or magnet of the controllers may be attracted to the additional magnetic member of the main body apparatus 2. Note that there is no limitation on the positions where the additional magnetic member and the additional soft magnetic material or magnet are arranged in the main body apparatus 2 and the controllers. For example, an additional magnetic member may be arranged at the inner surface 64 of the groove 2a of the main body apparatus 2, and an additional soft magnetic material or magnet may be arranged at the outer surface of the bump portions of the controllers. For example, an additional magnetic member may be arranged at the protruding surface 62 of the main body apparatus 2 and an additional soft magnetic material or magnet may be arranged at the base surface of the controllers.

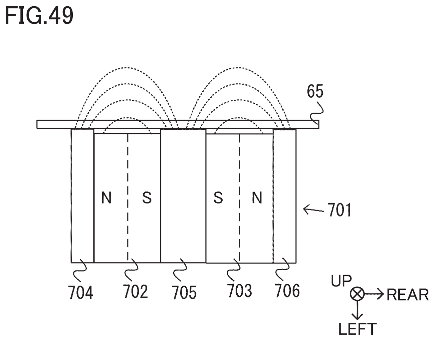

In the embodiment described above, the magnetic member has a configuration in which one magnet is sandwiched by two yokes, but the configuration of the magnetic member is not limited to the above. FIG. 49 is a view showing an example of a variation of the upper right magnetic member. FIG. 49 is a view showing an upper right magnetic member 701 according to the variation as seen from the up-down direction, and is a view schematically showing the upper right magnetic member 701 and the cover 65 of the right controller 3. The upper right magnetic member 701 shown in FIG. 49 has a first magnet 702, a second magnet 703, a first yoke 704, a second yoke 705, and a third yoke 706. Thus, the magnetic member may be formed of a plurality of magnets and a plurality of yokes.

In FIG. 49, the magnets 702 and 703 have a rectangular body shape and the yokes 704 to 706 have a plate-like shape, as with the upper right magnetic member 51 of the embodiment described above (see FIG. 11 and FIG. 12). The shape of the magnets 702 and 703 as seen from the front-rear direction may be the same as that of the magnet 71 of the embodiment described above, and the shape of the yokes 704 to 706 as seen from the front-rear direction may be the same as that of the yokes 72 and 73 of the embodiment described above.

The first magnet 702 is arranged in such an orientation that one polarity (the N polarity in FIG. 49) of the N polarity and the S polarity is on the front side and the other polarity is on the rear side. The first yoke 704 and the second yoke are attached to the first magnet 702 so as to sandwich the first magnet 702. That is, the first yoke 704 is attached on the side of one polarity of the first magnet 702 (the N polarity side, or the front side, in FIG. 49), and the second yoke 705 is attached on the side of the other polarity of the first magnet 702.

The second magnet 703 is arranged in such an orientation that one polarity (the S polarity in FIG. 49) of the N polarity and the S polarity is on the front side and the other polarity is on the rear side. Thus, the second magnet 703 is arranged so that its polarity is reversed from that of the first magnet 702. The second yoke 705 and the third yoke 706 are attached to the second magnet 703 so as to sandwich the second magnet 703. That is, the second yoke 705 is attached on the side of one polarity of the second magnet 703 (the side of the S-polarity side, or the front side, in FIG. 49), and the third yoke 706 is attached to the side of the other polarity of the second magnet 703.

Thus, the second yoke 705 is configured to be sandwiched between the first magnet 702 and the second magnet 703, and the upper right magnetic member 701 according to the variation has a configuration in which two magnets 702 and 703 are sandwiched between the three yokes 704 to 706. With such a configuration, a magnetic flux is formed extending from the end portion of the first yoke 704 to the end portion of the second yoke 705, and a magnetic flux is formed extending from the end portion of the third yoke 706 to the end portion of the second yoke 705 (see FIG. 49; note that the magnetic flux is indicated by dotted lines in FIG. 49). Therefore, the upper right magnetic member 701 according to the variation can also generate a strong magnetic field on the cover 65.

As described above, in other embodiments, the magnetic members of the main body apparatus 2 may be comprised of a plurality of magnets and a plurality of yokes, as is the upper right magnetic member 701. Note that the variation shown in FIG. 49 shows a configuration of a magnetic member with three layers of yokes, but the magnetic member may have a configuration with four layers of yokes. In other embodiments, the yokes included in the magnetic member do not need to have a layered configuration. In the case where the controllers 3 and 4 include a magnetic member, the configuration of the magnetic member may be the same as the magnetic member of the embodiment described above or may be the same as the magnetic member of the variation described above.

### [6-4. Other variations]

In the embodiment described above, the shape of the main body apparatus 2 is generally a rectangular body shape, but the shape of the main body apparatus 2 is not limited to this. For example, the main body apparatus 2 may have a shape other than a rectangle, such as a trapezoid as seen from the front side. The main body apparatus 2 may have a shape with two foldable housings. For example, the main body apparatus 2 may include a first housing in which a display is arranged and a second housing in which a keyboard is arranged, and the second housing may be foldable with respect to the first housing so that the keyboard and the display oppose each other. Grooves into which the bump portions of the controllers can be inserted may be formed on the side surfaces of the first housing or on the side surfaces of the second housing.

The shape of the controller is not limited to the shape in the embodiment described above, but may be any shape. For example, in other embodiments, the shape of the controller may be such that a protruding portion for the user to place a finger protrudes from a position on the lower portion of the rear surface. The controller may be semicircular in shape as seen from the front side.

The controller may also have a portion that is not matched with the groove of the main body apparatus 2 when the controller is attached to the main body apparatus 2 and that expands out to the side of the side surface of the controller that is attached to the main body apparatus 2. When the controller is used as a mouse, the controller may be placed so that this portion is in contact with the work surface, in addition to or instead of the bump portion.

In other embodiments, when the controller is attached to the main body apparatus 2, the entirety of one end portion of the controller may be inserted into the space surrounded by the wall portion of the main body apparatus 2. That is, the controller may include an insertion portion that is of such a size that can be inserted into the space surrounded by the wall portion, and the entirety of one end portion of the controller may function as this insertion portion. The insertion portion does not need to be arranged on the side surface of the controller. For example, the right controller 3 may be configured so that the entirety of the left end portion is matched with the groove 2a of the main body apparatus 2.

In other embodiments, there is no limitation on the configuration for positioning the controller attached to the main body apparatus 2, and the configuration is not limited to a groove formed by the bottom portion and the wall portion. For example, in other embodiments, a bump portion may be formed on the main body apparatus 2 and a groove may be formed on the controller. In this case, the bump portion of the main body apparatus 2 may be configured to be matched with the groove of the controller when the controller is attached to the main body apparatus 2.

In other embodiments, the side surface upper button and the side surface lower button of the controller may be arranged at the base surface rather than the protruding portion of the bump portion. This will also result in the side surface upper button and the side surface lower button not being operated when the controller is attached to the main body apparatus 2, as in the embodiment described above. In other embodiments, the controller may include two buttons arranged at the rear surface of the housing instead of the side surface upper button and the side surface lower button.

In other embodiments, the main body apparatus 2 and the controller do not need to include connectors for electrically connecting them to each other. In this case, when the controller is attached to the main body apparatus 2, the main body apparatus 2 and the controller may communicate with each other via wireless communication.

In the embodiment described above, a configuration with which the main body apparatus, which is an example of the game apparatus, and the controllers can be attached and detached to and from each other has been described above, but in other embodiments, the configuration of the main body apparatus 2 of the embodiment described above or the configurations (1-1) to (1-25) above may be used in any type of electronic apparatus. The electronic apparatus means to include any type of information processing apparatus, such as smartphones, tablet terminals, personal computers, toys, etc. In other embodiments, the configuration of the controller of the embodiment described above or the configurations (2-1) to (2-26) above may be used in any type of apparatus. That is, in other embodiments, the configuration disclosed in the present specification may be used as a configuration to enable any type of electronic apparatus to be attached to and detached from the apparatus.

Note that, in other embodiments, the game system does not need to include some of the elements of the embodiment described above and does not need to execute some of the processes that are executed in the embodiment described above. For example, in order to realize some particular effects of the embodiment described above, the information processing system may only need to include an element or elements for realizing said effects and execute a process or processes for realizing said effects, and the information processing system does not need to include other elements and does not need to execute other processes.

### INDUSTRIAL APPLICABILITY

The embodiment described above can be used as a main body apparatus or a controller in a game system, for example, with the aim of providing a game apparatus or a game system with a novel configuration, for example.

### DESCRIPTION OF REFERENCE SIGNS

- 1: Game system
- 2: Main body apparatus
- 3: Right controller
- 4: Left controller
- 11: Housing
- 22: Right connector
- 23: Left connector
- 34: Metal frame
- 44 to 46: Antenna
- 51 to 54: Magnetic member
- 61: Base surface
- 63: Wall portion
- 65: Cover
- 68: Group of terminals
- 71: Magnet
- 72, 73: Yoke
- 81: First conductive member
- 82: Holder
- 83: Second conductive member
- 208: Side surface upper button
- 209: Side surface lower button
- 212: Bump portion
- 261: Connector
- 271: Indicator
- 281: Mouse sensor
- 291: Pusher
- 292: Pusher operating section

## Claims

1. A game apparatus that is removably attachable to a controller, the game apparatus comprising:
a housing that houses an electronic circuit; and
a first magnet that is conductive and that is configured to attract the controller by magnetic force to attach the controller to the game apparatus, wherein:
the first magnet is electrically connected to ground of the electronic circuit.

2. The game apparatus according to claim 1, wherein:
a first through hole running through the housing is formed; and
at least a part of the first magnet is arranged in the first through hole.

3. The game apparatus according to claim 2, wherein a portion of the first magnet other than the part that is arranged in the first through hole is housed in the housing.

4. The game apparatus according to claim 2, wherein an opening of the first through hole outside the housing is covered by an insulative member.

5. The game apparatus according to any one of claim 1 to claim 4, further comprising:
a yoke that is conductive and forms a magnetic circuit with the first magnet, wherein:
the yoke is electrically connected to the ground of the electronic circuit.

6. The game apparatus according to claim 2, further comprising:
a yoke that is conductive and forms a magnetic circuit with the first magnet, wherein:
at least a part of the first magnet and at least a part of the yoke are arranged in the first through hole.

7. The game apparatus according to claim 6, wherein the yoke protrudes more than the first magnet in an outward direction, the outward direction being defined as a direction from an opening of the first through hole on an inner side of the housing toward an opening of the first through hole on an outer side of the housing.

8. The game apparatus according to claim 6 or claim 7, wherein:
the yoke includes:
a first portion at least a part of which is located in the first through hole; and
a second portion that is located in the housing and that is longer than an opening of the first through hole on an inner side of the housing in a state where the yoke is arranged in place.

9. The game apparatus according to claim 7, wherein an area of the housing that opposes a first portion of the yoke and an area of the housing that opposes a second portion of the yoke are made of an insulative member.

10. The game apparatus according to claim 7, further comprising a pressing member that presses at least one of the first magnet and the yoke in the outward direction.

11. The game apparatus according to claim 10, further comprising a first conductive member that is conductive and electrically connects the first magnet and the yoke.

12. The game apparatus according to claim 11, wherein the first conductive member is sandwiched between the pressing member and a magnet unit, the magnet unit including the first magnet and the yoke, in a direction parallel to the outward direction.

13. The game apparatus according to claim 11, wherein:
the game apparatus comprises, as the yoke, a first yoke that is in contact with one side of the first magnet and a second yoke that is in contact with the other side of the first magnet; and
the game apparatus further comprises:
a second conductive member that is conductive and is arranged between the second yoke and a metal portion of the housing or a metal member in the housing connected to the ground of the electronic circuit, thereby electrically connecting the second yoke and the metal portion or the metal member.

14. The game apparatus according to claim 2, wherein:
a recessed portion is formed on an outside surface of the housing; and
the first through hole is formed at a bottom of the recessed portion.

15. The game apparatus according to claim 14, wherein:
a second through hole running through the housing is formed at the bottom of the recessed portion, and
the game apparatus further comprise:
a second magnet that is conductive and at least a part of which is arranged in the second through hole, the second magnet being capable of attracting the controller attached to the game apparatus by magnetic force; and
a game apparatus-side terminal that is arranged between the first magnet and the second magnet as the recessed portion is seen from an open side of the recessed portion, the game apparatus-side terminal being connectable to a controller-side terminal of the controller.

16. The game apparatus according to claim 2, wherein:
a predetermined surface of the housing includes a metal portion connected to the ground of the electronic circuit; and
an opening of the first through hole is formed on the predetermined surface.

17. The game apparatus according to claim 16, wherein an inner surface of the first through hole is made of an insulative member different from the metal portion.

18. The game apparatus according to claim 16 or claim 17, wherein:
the predetermined surface is a side surface that connects a front surface and a rear surface of the housing;
the electronic circuit is arranged in the housing at a position sandwiched by a metal member with respect to a direction from the front surface toward the rear surface of the housing; and
the metal member is at least one of a metal frame portion of the housing that is electrically connected to the ground of the electronic circuit and a metal frame housed in the housing that is electrically connected to the ground of the electronic circuit.

19. The game apparatus according to claim 16 or claim 17, wherein a metal frame portion of the housing is made of non-magnetic metal.

20. The game apparatus according to claim 1, wherein:
the controller comprises a magnetic sensor;
the game apparatus includes a front surface, a rear surface on a side opposite to the front surface, an upper surface, a lower surface, and two side surfaces;
the first magnet is provided in an upper side portion of one of the two side surfaces;
the game apparatus further comprises a second magnet that is conductive and that is arranged in a lower side portion of said one of the side surfaces, the second magnet being configured to attract the controller attached to the game apparatus by magnetic force;
the first magnet is provided in such an orientation that a first polarity faces the front surface side and a second polarity faces the rear surface side; and
the second magnet is provided in such an orientation that the second polarity faces the front surface side and the first polarity faces the rear surface side.

21. The game apparatus according to claim 1, wherein:
the game apparatus comprises, as conductive magnets, a plurality of magnets including the first magnet, the magnets being capable of attracting the controller attached to the game apparatus by magnetic force;
the game apparatus further comprises an antenna; and
one of the plurality of magnets that is arranged at a position closest to the antenna is not electrically connected to the ground of the electronic circuit, and at least one of the other magnets different from said magnet is electrically connected to the ground of the electronic circuit.

22. The game apparatus according to claim 1, wherein:
the game apparatus comprises, as conductive magnets, a plurality of magnets including the first magnet, the magnets being capable of attracting the controller attached to the game apparatus by magnetic force;
the game apparatus comprises a plurality of antennas; and
among combinations between one of the plurality of magnets and one of the plurality of antennas, one magnet included in a combination where a distance between the magnet and the antenna is shortest is not electrically connected to the ground of the electronic circuit, and at least one of the other magnets different from said magnet is electrically connected to the ground of the electronic circuit.

23. The game apparatus according to claim 1, wherein the first magnet is arranged exposed from an opposing surface of the housing that opposes the controller in a state where the controller is attached to the game apparatus or the first magnet is arranged buried in said opposing surface.

24. The game apparatus according to claim 23, wherein:
the opposing surface includes:
a base surface; and
a protruding surface that protrudes relative to the base surface; and the first magnet is arranged exposed from the base surface or buried in the base surface.

25. The game apparatus according to claim 23 or claim 24, wherein:
the game apparatus further comprises a second magnet that is conductive, the second magnet being configured to attract the controller attached to the game apparatus by magnetic force;
the second magnet is arranged exposed from the opposing surface or buried in the opposing surface; and
the game apparatus further comprises a game apparatus-side terminal that is arranged at a position between the first magnet and the second magnet on the opposing surface, the game apparatus-side terminal being connectable to a controller-side terminal of the controller.

26. A game system comprising a controller and a game apparatus that is removably attachable to the controller, wherein:
the game apparatus comprises:
a housing that houses an electronic circuit; and
a magnet that is conductive and that is configured to attracts the controller by magnetic force to attach the controller to the game apparatus;
the magnet is electrically connected to ground of the electronic circuit; and
the controller includes a magnetic material.
